(19) Europäisches Patentamt
European Patent Office
Office européen des brevets

(11) **EP 1 901 153 A1**

(12) **EUROPEAN PATENT APPLICATION**

(43) Date of publication:
**19.03.2008 Bulletin 2008/12**

(51) Int Cl.:
*G05D 1/08* $^{(2006.01)}$       *B64C 27/08* $^{(2006.01)}$

(21) Application number: **06019060.0**

(22) Date of filing: **12.09.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicant: **OFFIS e.V.
26121 Oldenburg (DE)**

(72) Inventor: **Kemper, Markus
49681 Garrel (DE)**

(74) Representative: **Eisenführ, Speiser & Partner
Patentanwälte Rechtsanwälte
Postfach 10 60 78
28060 Bremen (DE)**

(54) **Control system for unmanned 4-rotor-helicopter**

(57)    The present invention relates to an autonomous miniature multi- or quadrotor helicopter. Conventional algorithms for autonomous control use ideal models with the centre of gravity (CG) in the origin of the body fixed coordinate frame. In-flight payload droppings or construction of miniaturized aerial vehicles may cause problems, e.g. because sensors cannot be mounted perfectly in the CG or because the CG is shifted out of the origin of the initially assumed body fixed coordinate system. The consequences are additional accelerations and velocities perceived by the sensors so that these effects have to be covered by the control system. This paper describes the modelling of the dynamic behaviour with respect to variable CGs and control aspects of a quadrotor helicopter.

Figure 3.5.: System with Force and Torque Control and shifted CG

**Description**

FIELD OF THE INVENTION

The present invention relates to a method for controlling an unmanned aerial vehicle, in particular an unmanned multi-rotor-helicopter, more particular an unmanned 4-rotor-helicopter, a control system for an unmanned aerial vehicle, in particular an unmanned multi-rotor-helicopter, more particular an unmanned 4-rotor-helicopter, and to an unmanned aerial vehicle, in particular an unmanned multi-rotor-helicopter, more particular an unmanned 4-rotor-helicopter, comprising the afore-mentioned system.

BACKGROUND OF THE INVENTION

It is foreseen that there will be a future market for intelligent surveillance and superring robots, capable of discreetly penetrating confined spaces and manoeuvring in those without the assistance of a human telepilot. Thus, the development of small autonomous flying, i.e., aerial vehicles for indoor or urban applications, able to perform agile flight inside buildings, stadiums, stairwells, airports, train stations, ventilation systems, shafts, tunnels etc. is of significant importance.

Such vehicles can also be used in environments where direct or remote human assistance is not feasible, e.g. in contaminated areas or in urban search and rescue operations for locating earthquake-victims inside collapse-endangered buildings.

Flying robots are often classified by their size and weight, as for instance Micro Aerial Vehicles' ($\mu$AV) maximum size is 15 cm and maximum weight is down to approximately 150g, Unmanned/Uninhabited Aerial Vehicles' (UAV) minimum size is 1 m and minimum weight is 1 kg, and Mini Aerial Vehicles' (MAV)' dimensions can be found between these definitions.

SUMMARY OF THE INVENTION

It is an object of the present invention to solve the problems mentioned in this application with respect to the prior art.

The object is solved by the independent claims.

In particular the present invention provides an improved method for controlling an unmanned aerial vehicle, in particular an unmanned multi-rotor-helicopter, more particular an unmanned 4-rotor-helicopter, an improved control system for an unmanned aerial vehicle, in particular an unmanned multi-rotor-helicopter, more particular an unmanned 4-rotor-helicopter, and an improved unmanned aerial vehicle, in particular an unmanned multi-rotor-helicopter, more particular an unmanned 4-rotor-helicopter, comprising the afore-mentioned system.

The present invention particularly comprises the following perceptions: There are several approaches in designing nonlinear controllers. The goal should be to achieve a greater range of stability than that achieved using linear control effort. Linear control does not directly address the nonlinearities of a VTOL (Vertical Take-Off and Landing), and good performance is often restricted to an operating point. Considering that nonlinear techniques utilize more information about system's behaviour they will provide a larger region of stability. There are a couple of nonlinear control techniques, for instance: Exact/Feedback Linearization, Input-Output Linearization, Input-State Linearization, Lyapunov Design, or Backstepping. The Backstepping approach is one of the most popular nonlinear techniques of design of control laws. The present invention observed in particular that this technique yields a wide family of globally asymptotically stabilizing control laws, and it allows one to address robustness issues and to solve adaptive problems. One can use the Backstepping approach to develop suited controllers for VTOL, cf. [Olifati-Saber, 2001]. Further, there are several approaches in modelling and control of quadrotor helicopters, for example: [Altug, 2003] proposed a dynamic model of a quadrotor VTOL and visual feedback control methods as well as Backstepping control method. [Bouabdallah, et. al., 2005] investigated the design, dynamic modelling, sensing and Backstepping control of an indoor micro quadrotor-helicopter. [Castillo et. al., 2004] synthesised a Lyapunov controller using a Lagrange-based model. [Hamel et. al., 2002] proposed the dynamic modelling and configuration stabilisation on basis of a vision based controller. [Mistler et. al. 2001] derived a dynamic model and developed a dynamic feedback controller. [McKerrow, 2004] proposed a dynamic model for theoretical analysis of the draganflyer. [Tayebi et. al, 2004] proposed a quaternion based feedback control scheme for exponential attitude stabilization of a four-rotor VTOL.

The MAV of embodiments of the present invention puts emphasis on the ability to hover and the capability of fully autonomous navigation with the possibility of an exterior engagement of a telepilot. One of the most challenging tasks in outdoor, urban and indoor navigation of autonomous mobile robots is the estimation of the robot's pose in the three dimensional environment. This is mandatory for any type of trajectory planning and navigation algorithms. For indoor applications the task is even more challenging because navigation systems like GPS are not available [Eich et.

al., 2004]. The dynamic modelling and an adequate control system of the present invention are important prerequisites for any kind of navigation.

REFERENCES

Altug, E.: Vision based control of unmanned aerial vehicles with applications to an autonomous four rotor helicopter, Quadrotor, PhD Thesis, University of Pennsylvania, USA, 2003.

Balan, R.: An Extension of Barbashin-Krasovski-LaSalle Theorem to a Class of Nonautonomous Systems, Princeton University, USA, 1995.

Bouabdallah, S. et. al.: Towards Autonomous Indoor VTOL, Autonomous Robots, Springer Science + Business Media, Volume 18, Number 2, March 2005

Castillo, P., Lozano, R.: Realtime Stabilization and Tracking of a four rotor mini Rotorcraft, IEEE Transactions on Control Systems Technology, Vol. 12, Number 4, pp. 510-516, July 2004.

Eich, M., Kemper, M., Fatikow, S.: A Navigation Concept for an Indoor Micro Air Vehicle, Proc. of the First European Conference on Micro Air Vehicle, Braunschweig, 2004. Hamel, T., Mahony, R., Lozano, R., Ostrowsky, J.: Dynamic Modeling and Configuration Stabilization for an X4-Flyer, IFAC 15th Triennial World Congress, Barcelona Spain, 2002.

Johnson, W.: Helicopter Theory, Dover Publications Inc., New York, 1994, ISBN 0-486-68230-7.

Kemper, M., Merkel, M., Fatikow, S.: A Rotorcraft Micro Air Vehicle for Indoor Applications, Proc. of 11th Int. IEEE Conf. on Advanced Robotics, Coimbra, Portugal, June 30 - July 3, 2003, pp. 1215-1220

McKerrow, P.: Modelling the Dragan-Flyer four-rotor helicopter, Proceedings of the 2004 IEEE Conference on Robotics & Automation, New Orleans, USA, 2004.

Mistler, V., Benallegue, A., M'Sirdi, N.K.: Exact linearization and noninteracting control of 4 rotors helicopter via dynamic feedback, IEEE International Workshop on Robot and Human Interactive Communication, Paris, France, 2001.

Olifati-Saber, R.: Nonlinear Control of Underactuated Mechanical Systems with Applications to Robotics and Aerospace Vehicles, PhD-Thesis, Massachusetts Institute of Technology, USA, 2001.

Schwarz, H.: Systems Theory of Nonlinear Control - An Introduction-Shaker Verlag Aachen, Germany, 2000, ISBN 3-8265-7525-3.

Tayebri, A., McGilvray, S.: Attitude Stabilization of a fourrotor aerial robot, 43rd IEEE Conference on Decision and Control, Atlantis, Bahamas, USA, December 14-17, 2004

An advantage of embodiments of the present invention is better attitude and altitude control as well as navigation, especially of an aerial rotorcraft vehicle. Movement can not only be controlled in horizontal but also in vertical direction and, given that aerial movement is often faster than ground-based one it can be controlled fast and precisely. Due to the fast dynamics, inherent instability and unsteady flow characteristics (aerodynamic behaviour,- small size, little weight), an efficient sensor system is provided and an optimal control system is provided.

A further advantage of embodiments of the present invention is the provision of knowledge about the behaviour of the complex nonlinear system and also the dynamics of unsteady fluid flow in order to provide an improved navigation system.

Embodiments of present invention provide an autonomous, electrically powered rotorcraft Miniature VTOL for afore-mentioned future applications. The preferred maximum size of the MAV of embodiments of the present invention is 90 cm and the preferred weight is down to only 500 grams. Hence, preferred MAVs of embodiments of the present invention belongs to the class of Mini Aerial Vehicles.

Embodiments of present invention provide an MAV which is equipped with inertial sensors, an ultra sonic sensor and/or a magnetic field sensor.

Embodiments of the inventive control method or system of present invention comprise the perception that due to the limited payload of a mini aerial vehicle the sensor system is restricted for indoor and further, compared to solutions lighter-than-air or fixed-wing, the advantages of rotorcraft flight make the airborne platform very hard to control. Embodiments of present invention comprise the perception that especially a displacement of the centre of gravity (CG) out of the origin of the body fixed coordinate system causes problems regarding the controllability of a multi- or quadrotor helicopter. For example, the fastening of batteries or payload sensors causes CG-shifts and makes controllers, developed for a system with CG in the origin of the body fixed coordinate frame which is normally assumed to be located in the geometric symmetry axis, almost unemployable. Due to the shifted CG, additional accelerations and velocities can be sensed by the inertial sensors. In the prior art the MAV would have to be trimmed properly by adding further weights or the platform has to be modified, so that controllers, developed without CG shift may be applied. However, a trimming procedure takes a lot of time and often increases the overall weight and thus decreases the payload. Accordingly, the present invention comprises the perception that a compensation of the CG-shift is one of the key tasks to reach a better controllability of such a vehicle. It is one of the main advantages of embodiments of the present invention that a compensation of the CG-shift is possible and therefore the controllability of an inventive vehicle is sharply increased compared to the prior art. To provide such a compensation, preferred embodiments of the present invention can comprise at least one of the following steps:

evaluating the controlling flight parameters of the vehicle by taking into account real-flight dynamics of the vehicle, and/or

evaluating the controlling flight parameters of the vehicle by taking into account the impact of a displacement of the CG out of the origin of the initial body fixed coordinate system of the vehicle, and/or

evaluating the controlling flight parameters of the vehicle by taking into account additional accelerations and/or velocities caused by a shift of the CG, e.g. to compensate for any additional accelerations and/or velocities caused by inertial sensors not perfectly mounted in the CG, and/or

evaluating the controlling flight parameters of the vehicle by non-linear variation of a parameter within the height control by means of an hyperbolic tangent function to compensate ground effects, and/or

evaluating the controlling flight parameters of the vehicle by assuming that the earth is a non-rotating reference system to simplify the evaluating procedure, and/or evaluating the controlling flight parameters of the vehicle by assuming that the vehicle is a rigid body without elastic degrees of freedom to simplify the evaluating procedure, and/or

evaluating the controlling flight parameters of the vehicle by using a predetermined modelling the dynamic behaviour of the vehicle before generating evaluation rules for evaluating controlling flight parameters of the vehicle to simplify the evaluating procedure.

In embodiments of the inventive control method or system of the present invention, the impact of a shifted CG on the dynamics and the controller development on MAV is described in the detailed description of the invention below, in particular in chapters 1., 2.1, 2.2, 2.5, 3., more particularly 3.2 and 3.4, 6.1, 6.4, 7.1, 7.2, 7.4 and 8. The detailed description of the invention, below, in particular contains an explanation of an real-time or online controller adjustment. Further simulative and experimental results are also provided in the detailed description of the invention, below.

Further embodiments of the inventive control method or system preferably can further comprise the steps of:

evaluating the controlling flight parameters of the vehicle by assuming that a body fixed frame is the centre of gravity of the vehicle freedom to simplify the evaluating procedure, and/or

evaluating the controlling flight parameters of the vehicle by assuming that the vehicle is a mass point system without any dimension freedom to simplify the evaluating procedure, and/or

evaluating the controlling flight parameters of the vehicle by assuming that stall effects are negligible freedom to simplify the evaluating procedure, and/or

evaluating the controlling flight parameters of the vehicle by assuming that compressibility is negligible freedom to simplify the evaluating procedure, and/or

evaluating the controlling flight parameters of the vehicle by assuming that the differential coefficient $C_L$ is substantially linearly related to the angle of attack freedom to simplify the evaluating procedure, and/or

evaluating the controlling flight parameters of the vehicle by assuming that the vehicle has fixed pitch rotors freedom to simplify the evaluating procedure, and/or

evaluating the controlling flight parameters of the vehicle by assuming that compressibility drag forces in the six degrees of freedom of the vehicle are, preferably straight, proportional to the velocity of the vehicle freedom to simplify the evaluating procedure, and/or

evaluating the controlling flight parameters of the vehicle by taking into account that the vehicle is a real principal axis system freedom to simplify the evaluating procedure, and/or

evaluating the controlling flight parameters of the vehicle by applying the stability theory of Lyapunov for providing a criterion of asymptotic stability of the vehicle freedom to simplify the evaluating procedure. Advantages achieved by the aforementioned embodiments and further embodiments of the inventive control method or system are described in the detailed description of the invention, below, in particular in chapters 1., 2.1, 2.2, 2.5, 3., more particularly 3.2 and 3.4, 6.1, 6.4, 7.1, 7.2, 7.4 and 8.

The control system of the present invention can comprise a landmark-based attitude sensor system comprising an inertial sensor for providing inertial sensor data, and a processing unit for processing further absolute measurements for providing an aiding signal of the inertial sensor data, preferably further comprising a supporting unit for providing visually aided attitude determination data, preferably further comprising a, preferably downward looking, camera for recognition of at least a landmark and for providing estimation data of at least one attitude angle of the camera in respect to the at least one landmark, preferably further comprising a coupling unit for combining the inertial sensor data with the estimation data via Kalman filter technique.

Advantages achieved by the afore-mentioned embodiments and further embodiments are described in the

**EP 1 901 153 A1**

detailed description of the invention, below, in particular in chapters 2.3, 2.5, 4., 6.2, 6.4, 7.3 and 8.

The control system of the present invention can comprise a behaviour-based navigation system comprising a path planning unit, the path planning unit preferably being adapted to perform the potential field method to generate data for path planning purposes. Advantages achieved by the afore-mentioned embodiments and further embodiments are described in the detailed description of the invention, below, in particular in chapter 2.4, 2.5, 5., 6.3, 6.4 and 8.

Other preferred embodiments of the invention are defined in the dependent claims.

The invention can be partly embodied or supported by one or more suitable software programs, which can be stored on or otherwise provided by any kind of data carrier, and which might be executed in or by any suitable data processing unit. Software programs or routines are preferably applied to the realization of the inventive method.

BRIEF DESCRIPTION OF THE DRAWINGS

Other objects and many of the attendant advantages of the present invention will be readily appreciated and become better understood by reference to the following detailed description when considering in connection with the accompanied drawings. The components in the drawings are not necessarily to scale, emphasis instead being placed upon clearly illustrating the principles of the present invention. Features that are substantially or functionally equal or similar will be referred to with the same reference sign(s). The features of the present invention described above or described in the following detailed description of the invention are not only essential for the invention in the combinations in which they are described but also in other combinations or isolated.

**DETAILED DESCRIPTION OF THE INVENTION**

**Contents**

| 1. | | **Introduction** | **1** |
|---|---|---|---|
| | 1.1. | Objectives and Statement of the contributions | 6 |
| | 1.2. | Outline | 7 |
| **2.** | | **State of the art** | **9** |
| | 2.1. | Micro aerial vehicles | 9 |
| | 2.2. | Rotorcrafts and Control | 10 |
| | | 2.2.1. Control of nonlinear and nonlinear, underactuated systems | 11 |
| | 2.3. | Landmark-based attitude determination | 18 |
| | 2.4. | Behaviour-based navigation and path-planning | 19 |
| | 2.5. | Concluding remarks | 20 |
| **3.** | | **Control System** | **23** |
| | 3.1. | Aircraft Primer | 23 |
| | | 3.1.1. Definition of inertial- and reference systems | 23 |
| | | 3.1.2. Attitude determination | 24 |
| | | 3.1.3. Dynamics of mass point | 27 |
| | 3.2. | 3D-modelling of 4-rotors-helicopters | 31 |
| | 3.3. | Stability analysis of Lyapunov | 37 |
| | | 3.3.1. Stability basics for autonomous differential equation of Lyapunov | 39 |
| | | 3.3.2. Invariance principle of Barbashin-Krasovski-LaSalle | 41 |
| | 3.4. | Control system development via Lyapunov theory | 42 |
| | | 3.4.1. Attitude control system | 42 |
| | | 3.4.2. Height control system | 44 |
| **4.** | | **Visually aided attitude determination** | **47** |
| | 4.1. | Basics of image processing | 48 |
| | | 4.1.1. CCD- and CMOS-cameras | 48 |
| | | 4.1.2. Camera model | 48 |
| | | 4.1.3. Camera calibration | 50 |
| | | 4.1.4. Detection of ellipses | 52 |
| | 4.2. | Discrete Kalman filters | 53 |

(continued)

| | | | |
|---|---|---|---|
| | | 4.2.1. Indirect Kalman filter | 56 |
| | 4.3. | Visually aided attitude determination of 4-Rotors-Micro-Helicopters | 58 |
| | | 4.3.1. Employed landmark | 59 |
| | | 4.3.2. Image processing | 60 |
| | | 4.3.3. Attitude determination | 61 |
| | | 4.3.4. Noise of the visual attitude determination | 62 |
| | 4.4. | Sensor fusion | 63 |
| | | 4.4.1. Sensor models | 65 |
| | | 4.4.2. Indirect (error-state) Kalman filter | 66 |
| **5.** | **Behaviour based navigation** | | **69** |
| | 5.1. | Exploration of unknown environments | 69 |
| | 5.2. | Path planning | 70 |
| | | 5.2.1. Tree-Search | 72 |
| | 5.3. | Conclusion | 73 |
| **6.** | **Simulations** | | **75** |
| | 6.1. | Attitude-and height control of a 4-rotors micro helicopter | 77 |
| | | 6.1.1. Attitude control | 77 |
| | | 6.1.2. Height control | 78 |
| | 6.2. | Visually aided attitude determination of a 4-rotors micro helicopter | 79 |
| | 6.3. | Behaviour-based navigation for an indoor blimp | 82 |
| | | 6.3.1. Mobile robot simulation | 83 |
| | | 6.3.2. Controllers of basic behaviours | 83 |
| | | 6.3.3. Conversation of a trajectory into a set of basic behaviours | 84 |
| | | 6.3.4. Results of the behaviour-based navigation | 85 |
| | 6.4. | Conclusion | 87 |
| **7.** | **Experiments** | | **89** |
| | 7.1. | System description of the 4-rotors micro helicopter | 89 |
| | 7.2. | Attitude control system | 92 |
| | 7.3. | Complementary, landmark-based attitude determination | 94 |
| | | 7.3.1. Data structure and communication protocol | 94 |
| | | 7.3.2. Latencies of the components | 95 |
| | | 7.3.3. Operation of the system | 99 |
| | | 7.3.4. Determination of the normal position drift | 100 |
| | | 7.3.5. Dynamic adaptation of the Kalman filter | 101 |
| | | 7.3.6. Application in flight | 103 |
| | 7.4. | Height control system | 105 |
| | 7.5. | System description of the blimp | 106 |
| | | 7.5.1. Sensor system | 108 |
| | | 7.5.2. Drift of the sensor system | 110 |
| | | 7.5.3. Determination of the translational velocity | 110 |
| | | 7.5.4. Yaw control in flight | 111 |
| | | 7.5.5. Comparison between simulation and experiment | 111 |
| **8.** | **Summary and Evaluation** | | **115** |
| | **Bibliography** | | **119** |
| **A.** | **Appendix** | | **133** |

**List of Figures**

| | | |
|---|---|---|
| 1.1. | Control loop of 4-rotors-helicopters | 3 |

(continued)

| | | |
|---|---|---|
| 2.1. | Test bench principles: from left to right: single spring/wire system, double spring system, bearing system | 20 |
| 3.1. | Illustration of the inertial, earth-fixed coordinate frame g, and the bodyfixed frame $f$ | 24 |
| 3.2. | Illustration of the helicopter attitude angles $\Phi$, $\Theta$, $\Psi$ and the angular rates $p, q,$ r | 25 |
| 3.3. | Accelerated coordinate frame (non-inertial system) | 27 |
| 3.4. | Inertial sensors not exactly mounted in CG | 31 |
| 3.5. | System with Force and Torque Control and shifted CG | 31 |
| 3.6. | Blade element | 34 |
| 4.1. | Highly integrated camera with CCD-sensor [60] | 48 |
| 4.2. | Pinhole camera model | 49 |
| 4.3. | Lens distortion (left) and correction (right) [36] | 51 |
| 4.4. | Indirect feedforward KALMAN filter [87] | 57 |
| 4.5. | Indirect feedback KALMAN filter [87] | 57 |
| 4.6. | Image sequence for camera calibration | 58 |
| 4.7. | Radial and tangential lens distortion | 59 |
| 4.8. | Employed landmark | 59 |
| 4.9. | Image processing tasks | 60 |
| 4.10. | Hierarchic representation of the landmark | 61 |
| 4.11. | Numbering of inner circles | 61 |
| 4.12. | Sequence of the image processing | 61 |
| 4.13. | Applied camera test setup | 62 |
| 4.14. | System structure, helicopter and ground station | 64 |
| 5.1. | The finite-state machine used for the exploration of unknown environments | 69 |
| 5.2. | Raster-potential field | 71 |
| 5.3. | Minimum time path in the raster-potential field | 71 |
| 5.4. | Potential field | 71 |
| 5.5. | Another path for the same path-planning problem | 72 |
| 5.6. | The distribution of the attractant | 72 |
| 6.1. | Main layer of the Matlab/Simulink model | 75 |
| 6.2. | left: ground-effect model conferring to [61] and experimental data, right: used rotor | 76 |
| 6.3. | System behaviour ($\Phi$) with CG shift, r = (0.04m, 0.04m, -0.03$m$)$^T$, controller without CG adaptation | 77 |
| 6.4. | System behaviour ($\Phi$) with CG shift, r = (0.04m, 0.04$m$, -0.03$m$)$^T$, controller with CG adaptation | 78 |
| 6.5. | System behaviour ($\Phi$ and $\Theta$) with CG shift, r = (0.00m, 0.05m, 0.05$m$)$^T$, controller with CG adaptation, $K_{Pi}$ = 0.0080, $K_{Di}$ = 0.0045 | 78 |
| 6.6. | System behaviour ($\Phi$ and $\Theta$) with CG shift, r = (0.00m, 0.05m, 0.05$m$)$^T$, controller with CG adaptation, $K_{Pi}$ = 0.0080, $K_{Di}$ = 0.0045 | 78 |
| 6.7. | System behaviour with ground effect: with and without controller modification with hyperbolic tangent function, $K_{Pz}$ = 0, 03, $K_{Dz}$ = 0,02 | 79 |
| 6.8. | Structure of the sensor system, helicopter and ground station | 79 |
| 6.9. | Mode of operation of the KALMAN filters within the simulation | 80 |
| 6.10. | Probability mass functions | 81 |
| 6.11. | Simulation of the attitude angles in rest position, without camera support | 81 |
| 6.12. | Simulation of the attitude angles in rest position, with camera support | 82 |
| 6.13. | Measuring the yaw-angle with two sonar sensors | 83 |
| 6.14. | Model of the robot for simulation purposes of the behaviour-based navigation | 84 |
| 6.15. | The three independent controlling elements | 84 |
| 6.16. | Virtual sensor beams analyzing the environment | 85 |
| 6.17. | The Blimp executes the set of behaviours | 86 |
| 6.18. | The trajectory of the blimp exploring the unknown area | 87 |
| 6.19. | Simulation with a blimp and its environment in the virtual reality | 88 |
| 7.1. | 4-rotors-micro-helicopter demonstrator | 89 |

(continued)

| 7.2. | left: topview of the housing, right: sub-structure | 90 |
|---|---|---|
| 7.3. | Basic helicopter system | 91 |
| 7.4. | Indoor flights in the sports hall of the University of Oldenburg | 93 |
| 7.5. | Real system behaviour ($\Phi$) with CG shift, r = (0.00$m$, -0.05$m$, -0.05$m$)$^T$, controller with CG adaptation, $K_{Pi}$ = 0.0080, $K_{Di}$ = 0.0045 | 94 |
| 7.6. | Real system behaviour ($\Theta$) with CG shift, r = (0.00m, -0.05$m$, -0.05$m$)$^T$, controller with CG adaptation, $K_{Pi}$ = 0.0080, $K_{Di}$ = 0.0045 | 95 |
| 7.7. | Work flow of the attitude determination system | 96 |
| 7.8. | Measurement of the camera latency | 98 |
| 7.9. | Drift of the gyroscopes in normal position, real system | 101 |
| 7.10. | Test setup for the experimental validation of the system | 101 |
| 7.11. | Attitude angles corrected with static measurement noise covariance matrix | 102 |
| 7.12. | Variances of the camera data in dependence of the ellipse-sizes and approximation functions | 103 |
| 7.13. | Probability distribution of the camera measurement data for $\Phi$ | 104 |
| 7.14. | Attitude data with dynamic adaptation of the Kalman filter | 104 |
| 7.15. | Attitude data in hovering, sensor: INS | 105 |
| 7.16. | Attitude data in hovering, complementary sensor system: INS and camera | 106 |
| 7.17. | Real system behaviour (height) with CG shift, r = (0.00$m$, 0.05$m$, 0.05$m$)$^T$, height controller without CG adaptation, $K_{Pz}$ = 0.03, $K_{Dz}$ = 0.02 | 107 |
| 7.18. | Real system behaviour, autonomous take-off with CG shift, $r$ = (0.00$m$, 0.05$m$, 0.05$m$)$^T$, height controller without CG adaptation, $K_{Pz}$ = 0.03, $K_{Dz}$ = 0.02 | 107 |
| 7.19. | left: prototype of the blimp, right: sensor platform | 108 |
| 7.20. | Basic blimp system | 109 |
| 7.21. | Sub-structure of the system | 109 |
| 7.22. | Drift of the sensor system | 110 |
| 7.23. | Yaw-angles determined by sonar sensors and gyroscope | 111 |
| 7.24. | Yaw control in flight, desired angle 0˚ | 112 |
| 7.25. | Comparison of practical test and simulation | 112 |
| A.1. | Measurements angle $\Phi$ | 133 |
| A.2. | Measurements angle $\Theta$ | 133 |
| A.3. | Measurements angle $\Psi$ | 134 |

**List of Tables**

| 1.1. | Classification of unmanned aerial vehicles | 2 |
|---|---|---|
| 4.1. | Complementary characteristics of INS and camera | 48 |
| 4.2. | Elements of KALMAN filters | 57 |
| 4.3. | Intrinsic camera parameters | 58 |
| 4.4. | Centre coordinates of the circles of the landmark | 62 |
| 4.5. | Measurements for $\Phi$ and $\Theta$ | 63 |
| 4.6. | Measurements for $\Psi$ | 64 |
| 5.1. | Comparison of path-planning methods | 73 |
| 6.1. | Data structure for the communication with the simulation | 80 |
| 7.1. | Data structure for the communication with the helicopter | 97 |
| 7.2. | Quantitative comparison between simulation and experiment | 113 |

## 1. Introduction

During the last decades the development of autonomous aerial vehicles gained attractiveness due to the availability of novel technologies, for instance inertial and global navigation systems or powerful computer processors. These so called uninhabited/unmanned aerial vehicles (UAV) may be deployed in dangerous or hostile areas or in longsome and monotonous missions. Further, the acquisition and maintenance costs amount only one third to one fourth of the disbursements for similar manned versions [32].

Although UAV are by definition unmanned, these vehicles are not operating fully autonomously by now. This is due to the fact that safety standards of manned aerial vehicles cannot be obtained, so that the application in public airspace is forbidden [34]. Thus, the control is performed via onboard video camera from a telepilot on the ground. The technology progress in miniaturization and the increase of energy capacities and the performance of plenty of electromechanical systems actually allows the development and the manufacturing of small, highly automated versions of UAV. These micro/mini aerial vehicles ($\mu$AV/MAV) represent a novel class of aerial vehicles. In future the diversity (nature and application range) will be almost unbounded. Because, these aircrafts not only represent the smallest man-made aircraft and, equipped with intelligent control systems, they are able to perform observation tasks or courier services as well as urban search and rescue operations for locating earthquake-victims inside collapse endangered buildings. They will be able to execute a desired mission completely autonomously, without any assistance or control of a human. The almost non-restrictive possibility to add different micro machined payloads (e.g. video camera, chemical/biological sensors, powerful communication links or micro processors) will force the reduction of the overall size and purchase price will primarily open civil markets.

Table 1.1 offers a comparison of maximum dimensions of today known classes of aerial vehicles and, one can anticipate that the complexity of the systems and the need for

Table 1.1.: Classification of unmanned aerial vehicles

| abbreviation | name | maximum dimension |
|---|---|---|
| $\mu$AV | Micro Aerial Vehicle | $\leq 15cm$ |
| MAV | Mini Aerial Vehicle | $\leq 1m$ |
| UAV | Uninhabited/Unmanned Aerial Vehicle | $> 1m$ |

innovative technologies increase in dependence of the miniaturization. This is due to the necessary reduction of the size of subsystems and components and due to the dynamics of the small-size aerial vehicles.

The small payloads of $\mu$AV or MAV demand for the application of small and low-weight sensors and micro processors with low energy consumption. Unfortunately, micro machined sensors are subject to larger errors than known from macro machined sensors, cf. [12], so that the reliable state feedback of the fast, nonlinear dynamics becomes difficult and, the complexity of the signal processing and control system will be increased. Further, efficiencies of mini or micro motors or -batteries are much smaller than their bigger archetypes, so that the flight time will be decreased. Moreover, the relevant aerodynamic characteristics (REYNOLDS-number) of $\mu$AV or MAV are located in an unusual, today almost un-researched region, so that flow phenomena are almost unknown, cp. [79, 93]. But, from the ratio of inertial forces to friction forces can be derived that $\mu$AV or MAV show bad lift-to-drag characteristics, cp. [65].

Besides the size, aerial vehicles can also be classified by their principles of generating lift and their actuation principle, cf. [18]. Blimps produce static lift and are simple to control, but solutions lighter-than-air are not suitable to be applied in multitude tasks due to their huge size and inertia. Fixed-wing aircraft produce their lift by forward motion of the vehicle. Thus, their use is also limited by their manoeuvrability and flight velocity. Bird-like vehicles produce lift by wing flapping. Interestingly, all existing designs of these so-called ornithopters use only one degree of freedom wings, so that these prototypes were not able to hover. The wing propulsion relies on passive or coupling mechanisms to control wing rotation, which is hard to develop and to control. It is assumed that flapping wing propulsion can be more favourable in terms of energy balance, due to unsteady aerodynamic effects. Helicopters produce their lift by rotary wing motion so that they are able to hovering. Thus, they are predestined for indoor and urban inspection, security, observation or search and rescue applications.

Due to their fast dynamics and inherent instability helicopters provide the necessary agility, [66].
4-rotors-micro-helicopters - also known as X4-Flyer or quadrotor - feature additional desirable characteristics. Unlike conventional helicopters that have variable pitch angles, a 4-rotors helicopter has fixed pitch angle rotors and the rotor speeds are controlled to produce the desired lift forces to be able to control the helicopter. The advantages of this configuration are that the helicopter can be miniaturized without huge problems and, every rotor is producing lift so that the payload is increased.

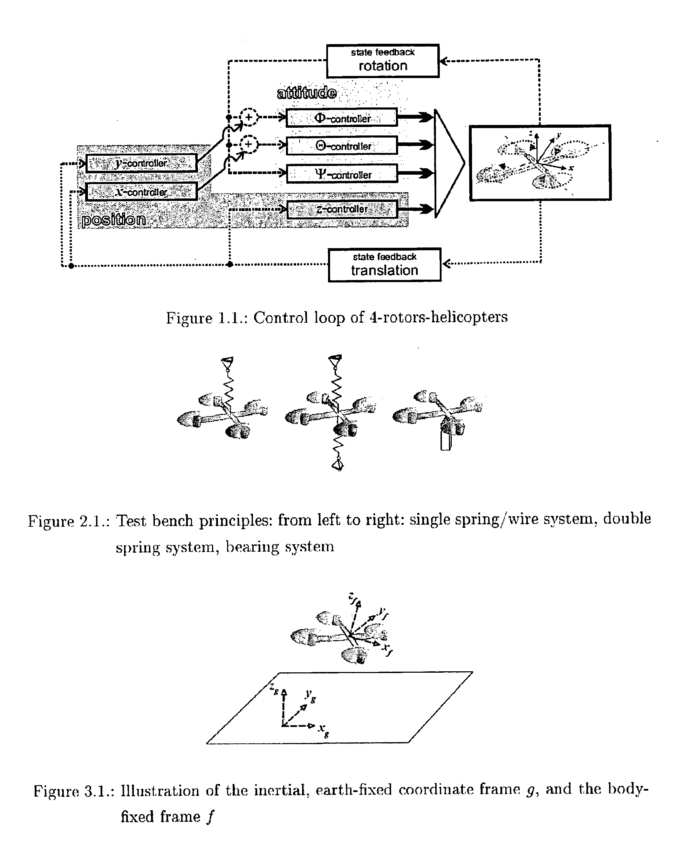

Figure 1.1.: Control loop of 4-rotors-helicopters

Unfortunately, only four degrees of freedom (DoF) can be controlled directly by varying the rotation speed of motors individually or collectively. Thus, the 4-rotors-helicopter belongs to a special class of non-linear, under-actuated systems, because the 6 DoF are controlled via 4 inputs, cp. [97]. Due to this factor it can be concluded that the controller of the total system should be divided into two single control systems: position control and attitude control, cf. figure 1.1. The controlled variables of the attitude subsystem and of the height subsystem are the voltages of the four motors, whereas the postions in $x$ and $y$ are modified by the roll- and pitch angles.

Collective control of all four motors changes the vertical speed and position. Conventional helicopters have a tail rotor in order to balance the moments created by the main rotor. In the four-rotor case, spinning directions of the rotors are set to balance and cancel these moments. Differential control of pairs of engines produces yawing moments about the $z$-axis. Differential control of the engines along the $x$-axis causes roll moments about the $x$-axis, while differential control of the motors along the $y$-axis causes pitch moments about the $y$-axis. The horizontal velocities and positions can only be controlled indirectly through roll or pitch to tilt the thrust vector of the quadrotor producing a horizontal thrust component.

Because only one mechanical DoF can be stabilized by means of one control loop uncontrolled DoF will remain within the system. At this, controlled DoFs and uncontrolled DoFs are coupled by inertial forces and gyroscopic forces, cf. [85].

The advantages of this robust helicopter design have to be bought with huge control efforts. Because of the requirements for indoor applications (low speeds, the ability to hover above targets, high agility at low speeds, fast dynamics) and the non-linearity as well as the under-actuation there is a demand for an optimal and robust real-time control system providing global asymptotic stability. State of the art in controlling mechanical system is e.g. the linear control theory. But, linear control does not directly address the nonlinearities of a quadrotor because good performance is only restricted to an operating point. Further the modification of the operating point can only be performed in very small steps. Thus, for non-linear and under-actuated systems there are only a few established control methods so that worldwide research is focusing on novel techniques. A basic prerequisite in 4-rotors-helicopter controller design is a suitable modelling of the nonlinear dynamic behaviour of the system.

Besides state feedback and control, navigation is also an ambitious topic towards autonomous aerial vehicles. For instance, dead reckoning is a method of navigation and, it is used to estimate vehicle's position and attitude (pose) based on its previous pose by integrating accelerations and angular velocities. Because all inertial navigation systems suffer from integration drift, as errors in sensor signals are integrated into progressively larger errors in velocity and position. These errors can be compensated by complementary coupling with high precision sensors, e.g. GPS, radar or laser scanner. But, the main problem with any concept of indoor navigation is that an external navigation system like GPS is not reliable or available.

Besides the aforementioned local approach to determine vehicle's position (tracking problem) the global approach is not using the initial pose. It is tried to determine the pose by dint of a map of the surrounding and a global coordinates system respectively, see [40, 41]. This so called self-localization problem can be subdivided into two sub-problems. One is the global robot localization, i.e. the estimation of the robot's pose without any a-priori knowledge about its position and orientation within the map. The second problem is to track the robot's pose once it has been found, with the robot's motion sensors (odometer, gyroscope, accelerometer) being erroneous. The most promising concept which is able to solve both problems is a probabilistic approach where the robot's position is estimated by filter techniques. One of those filter techniques is e.g. the classical Monte-Carlo-Method, where the probability distribution of the pose is represented by a set of weighted samples. Each of these particles is updated according to a motion model (representing the robot's movement) and a sensor model for updating the probability distribution, each time the robot receives spatial information about its environment. Thus the aerial robot needs an internal sensory system to perceive its surrounding.

Because of the MAV's limited payload only small and light-weighted sensors can be used for the sensor system. Another restriction when developing a sensor model is the computational tractability. When calculating the sensor model one has to consider all degrees of freedom, i.e. the helicopter's state space has the dimensionality of six. Because the complexity of Monte-Carlo Localization grows exponentially with the dimensionality of the state-space, one can assume real-time computation is not possible today, cf. [35].

A step towards autonomous aerial vehicles in indoor or urban environments is provided by the so called behaviour-based navigation. Because, behaviour-based systems can perform navigation without the need for metric information. A system based on this principle is able to explore unknown areas on its own. Moreover the same system can generate a map of the reconnoitred area and since then, it is able to acquire any user-favoured position. Necessarily the trajectory obtained by path-planning algorithms has to be converted in a sequence of basic behaviours which is then to be performed by the robot itself. The motion-system of the robot can be reduced to a fixed set of basic behaviours (turn left, find wall, find door, enter room, etc.). Such a minimal set of behaviours can again be realized by a minimal set of controlling elements. A higher prioritized task is used to dynamically adjust the desired value and the parameters of the controlling element during the mission's runtime. This leads to the fact that the number of controlling elements needs only to match the number of actuators and not the number of basic behaviours. In addition, motion planning in the presence of moving obstacles can be realized leading the robot to avoid positions near critical objects.

It becomes clear from this introduction that different classes of UAV will provide a plenty of novel possibilities and, may lead to considerably better awareness and quality of human's life. But, the application of UAV will raise new questions and will pose huge challenges for engineers. Especially the degree of autonomy for $\mu$AV or MAV is highly ambitious. Because, it has to be ensured that malfunctions and worst-situations are covered by the autonomous system solely on basis of restricted sensors and low computing power - without the intervention of an human telepilot. These requirements build the general framework for the control- and navigation system and from there also for the work in hand.

Further questions arise in the fields of aerodynamics, energy supplies, sensors, motors, or in the development of micro processors. Moreover for civil applications of $\mu$AV, MAV or UAV system's reliability and the coordinated flight guidance in controlled airspace or over inhabited territories are important topics and, licensing procedures have to be composed.

### 1.1. Objectives and Statement of the contributions

The primary objectives of the thesis are the development of a miniaturized 4-rotors-helicopter and, the investigation of a modern control system, able to provide the possibility to globally stabilize the state space of the technology demonstrator. Robustness and a satisfying performance of the controllers are important prerequisites. Due to erroneous signals of MEMS inertial sensors a landmark-based sensor system is developed to be able to align the inertial data in indoor environments. In parallel a behaviour-based navigation system on basis of sonar sensors for the application in airborne systems is investigated and validated with an indoor blimp.

The main focus in this thesis is on the modelling and control of 4-rotors micro helicopters with respect to broad future applications. The inherently unstable and nonlinear behaviour of helicopters and the aforementioned requirements for indoor flight make an optimal control system essential. Thus, every controller has to take the real flight dynamics into account. Obviously the impact of displacement of the centre of gravity (CG) out of the origin of the body fixed coordinate system become more important for such systems because problems regarding the controllability are caused. For instance, the fastening of batteries or payload sensors as well as the picking up or dropping of payloads will cause CG-shifts and make controllers developed for a system with CG in the origin of the initial body fixed coordinate system, almost unemployable. Due to the shifted CG, additional accelerations and velocities are sensed by the inertial sensors, because the origin of the body-fixed frame is also shifted the inertial sensors are not any more in the CG. In practice the 4-rotors-helicopter has to be trimmed properly by adding further weights or it has to be modified, so that controllers, developed without CG shift can be applied. However, a trimming procedure takes a lot of time and often increases the overall weight and thus decreases the payload and, an in-flight trimming is impossible. Further, sensors can not be mounted perfectly in the CG.

Worldwide approaches towards autonomous control of such systems only use ideal models with the centre of gravity (CG) in the origin of the body fixed coordinate frame. Thus, the dissertation describes the modelling of the dynamic behaviour with respect to variable CGs and Lyapunov-based stability and control aspects of a quadrotor. The dynamic model and the controllers are validated in simulations and under real flight conditions both in consideration of the ground-effect.

Additionally, a landmark-based attitude sensor system is introduced. Due to rather high measurement noise of the inertial MEMS sensor system, it is necessary to aid those signals further absolute measurements. This aiding is performed by a downward-looking colour camera attached to the 4-rotors-helicopter and a computer vision system. This system recognizes a landmark on the floor and estimates the attitude angles of the camera in respect to the mark. The coupling of the inertial sensor data with the vision system's data is performed via Kalman-filter technique. Finally, the thesis describes a behaviour-based navigation system for airborne autonomous robots. The work is validated in simulation and in experiment by controlling an indoor blimp with a finite-state machine. A blimp is chosen as demonstrator due to the auto-lift capability, the slow dynamics and the resulting low need for control and processing power. Nevertheless, it is shown that behaviour-based navigation, especially concerning mobile robots for indoor applications, is predestined to perform reconnaissance of unknown areas and moreover for navigation tasks in familiar environment. Due to the inability of most autonomous indoor aerial vehicles to carry heavy sensors, these systems lack of metrical information and therefore the explicit localization is yet impossible until today. The behaviour-based navigation is combined with a variety of path-planning methods (tree-search, potential fields, etc.) using obstacle-maps of known surroundings enabling the robot to acquire a desired position in a correspondent cluster of rooms.

### 1.2. Outline

In the following chapter the worldwide state of the art in micro aerial vehicles research and, approaches in the fields of modelling and control of 4-rotors-micro-helicopters, control of non-linear systems, attitude control and attitude determination by means of landmarks as well as behaviour-based navigation and path planning are provided.

Chapter 3 contains theoretical contributions in modelling and control of 4-rotors micro-helicopters. The next two chapters then deal with visually aided attitude determination, introducing the basics of image processing and sensor fusion, followed by a summary of behaviour-based navigation and path planning procedures for the application in flying robots. In chapter 7 the theoretical advisements and results from the previous chapters are validated by means of simulations with Matlab/Simulink or Webots respectively. These verifications are examined in experiments by a 4-rotors-micro-helicopter or an indoor blimp accordingly. Finally, a summary and an evaluation are discussed in chapter 8.

## 2. State of the art

### 2.1. Micro aerial vehicles

The definition of the term "Micro Aerial Vehicle ($\mu$AV)" was born on DARPA's[1] workshop on future military scenarios like urban warfare or terrorism defence in 1992, cf. [9]. The demand for surveillance and reconnaissance in the close-up range of the military operator led to several limitations and strong requirements. These aircraft should be limited to a size less than 15 cm in length, width or height. $\mu$AVs should be thought as six-degree-of-freedom machines whose mobility can deploy a useful micro payload to a remote or otherwise hazardous location where it may perform any of a variety of missions, including reconnaissance and surveillance, targeting, tagging and bio-chemical sensing. Although the 15 cm limitation may appear somewhat arbitrary, it derives from both physics and technology considerations. $\mu$AVs should be capable of staying aloft for perhaps 20 to 60 minutes while carrying a payload of 20 grams or less to a distance of perhaps 10 km, having a maximum weight of 140 g and fabrications cost of approx. 1000 US-dollars. It should be able to perform semi-autonomous flight at wind velocities of 50 km/h.

As a background for this strict definition one can see the technological challenge, for instance, advancing the development of MEMS (Micro Electro Mechanical System) or new power-supplies, and the physical basic research challenge, e.g. in the field of aerodynamics. However the targeted military application has larger influence on the definition of DARPA-$\mu$AVs, because the aimed $\mu$AV to be developed shall support the future soldiers with a reconnoit-system. For this purpose, $\mu$AV should be designed to provide small ground combat units with situational awareness of enemy activity, which could be especially useful in urban areas.

[1]US - Defence Advanced Research Projects Agency

The design of micro sized vehicles is not a simple problem. The high degree of integration resulting from the size of these vehicles and the operational requirements has a tremendous effect on their global endurance, which is the most important of any operational capabilities. Many problems arise during the development of a $\mu$AV. Thus, no complete $\mu$AV has been developed by DARPA's conceptions by now, because the requirements are too hard to fulfil and too many disciplines must be investigated. Nevertheless, the definition of the "DARPA $\mu$AV" is world-wide accepted.

Key technologies for $\mu$AV and MAVs are innovative mechanics using new materials (weight reasons), battery and energy scavenging technologies (to optimise flight time), innovative technologies for optimised power consumption (flight time), integration technologies for heterogeneous components (weight reasons) and most important especially for helicopter-based flying indoor micro robots, innovative environmental sensing technologies for localisation and navigation. To fly in buildings or through doors localisation and navigation technology has to be precise and mature.

The Shephard Unmanned Vehicles Handbook 2006 [100] provides an overview of the actual worldwide developments in the field of uninhabited and mini/micro aerial vehicles primarily for military applications. It is mentioned, that MAV and $\mu$AV are playing a significant, if not the most significant, role in theatres of combat. Further, it has been estimated that already more than 750 MAVs have been used in support of Operation Enduring Freedom and Operation Iraqi Freedom.

Besides such military designs, there are a few approaches in the field of autonomous MAV for intelligent civil indoor surveillance and service applications. In order to obtain the necessary capability of hovering or very slow flight while maintaining a high maneuverability, ultralight structures and adequate components are required [20, 65, 95].

### 2.2. Rotorcrafts and Control

Although first ideas in helicopter development were mentioned in China (400 B.C.) or by Leonardo da Vinci (late 15th century) [61] and there were a plenty of design studies and flight demonstrators during the centuries, the first successful large public demonstration of a practical helicopter took place with the flight of the Focke Wulf FW-61 in June 1936 on the airport Bremen. The initial development of rotorcraft faced unsolved problems in the field of light and reliable engines, in light and strong structures and in controlling the helicopter.

Besides different single main-rotor designs [61], the first four-rotors experimental helicopter was developed in 1907 by Breguet and Richet in France. The Gyroplane No. 1 had four rotors with four biplane blades each. It made a tethered flight with a passenger at an height of approximately 1 m for about 1 min., the gross weight was 580 kg, cf. [61, 78]. Further, George de Bothezat built also a quadrotor with four six-bladed rotors in 1922 in the United States. This helicopter with a gross weight of 1600 kg has made many flights with passengers up to an altitude of 4 to 6 m, see [61].

Unfortunately, there were only a few experimental four-rotors-helicopters during the last decades, but it is foreseen, that this conceptual design will become more and more attractive due to their heavy lift characteristics. For instance, a plenty of countries refuse to host military bases, so that especially the USA will be switching to sea bases. The ability of heavy vertical lift capacity would simplify future operations, both on ships and on land, providing unprecedented flexibility, so that the research of Quad Tilt-Rotor designs is focussed, cf. [118].

Besides inhabited four-rotors-helicopters, miniaturized versions of these designs have especially gained interest in hobbyist remote-control-helicopter groups and in different toy companies during the last decade. By this, the commercial availability of low-cost components (e.g. rotor-blades) became also enabled for research groups, so that this is one reason for the investigation of the autonomy of such systems.

### 2.2.1. Control of nonlinear and nonlinear, underactuated systems

The control of mechanical systems is one of the most active fields of research due to diverse applications in real life. First studies in controllability of mechanical systems go back to EULER and LAGRANGE in the 1700's; till WATT found one of the first industrial applications: his regulator for steam engines. During the past century, a plenty of scientific, industrial or military applications motivated the analysis and the controller design for mechanical systems, cf. [97].

A closed control theory exists for linear transfer functions and questions regarding observability and stability are solved properly. A linear, time-invariant system can be written in state-space [126]:

$$\dot{x} \;=\; Ax + Bu, \; y = Vx, \qquad\qquad (2.1)$$

with $x \in IR^n, y \in IR^m$ and $u \in IR^p$. The vector u contains the input variables, the control variables and the disturbance inputs. The system can ideally be controlled via state feedback. With

$$u = Bx + u^{*}, \qquad\qquad (2.2)$$

it can be obtained that:

$$\dot{x} = (A + BK)x + Bu^{*}. \qquad\qquad (2.3)$$

u* is the vector of the commanded manipulated variables as well as disturbance inputs.

The EIGEN-values can be modified by use of the controller matrix $K$ [109].

For nonlinear systems, there is no universal control method. The behaviour of a control loop can be critical in terms of stability and control accuracy, if the controller was developed by a method which is not ideally considering the real nonlinearities. Hence, the methods to be applied depend on the kind of nonlinearity and on the investigation objectives [82]. The classification of the nonlinearities often is performed by mathematical characteristics i.e. the kind of the differential equation is considered [126].

Thus, the control of such systems is of primary interest in the research community so that control of nonlinear systems has witnessed tremendous developments over the last decades.

The description of nonlinear systems can be performed in the general form:

$$\dot{x} = f(x) + g(x)u, \; y = h(x), \qquad\qquad (2.4)$$

with $f, g, h$ as nonlinear functions. If there are highly nonlinear functions, the system can be written as:

$$\dot{x} = f(x, u), \ y = h(x), \qquad\qquad (2.5)$$

with *f* as nonlinear function of (x, u) (neglecting the linearity or nonlinearity of h(x)). Comprehensive theories regarding the controllability, observability, stability or disturbance decoupling of nonlinear systems like equation 2.4 can be found in relevant literature [59, 69, 115]. Especially in the seventies the introduction of geometric tools like LIE brackets of vector fields on manifolds has greatly advanced the nonlinear control theory, and has enabled the proper generalization of many fundamental concepts known for linear dynamic system to the nonlinear world, cp. [115]. This method was rather successful in local analysis of nonlinear systems affine in control, but it usually fails to work for a global analysis and nonlinear systems that are non-affine in control. Further, LIE algebraic conditions are not robust to uncertainties in *f, g* and *h*, cf. [97]. In the eighties, the emphasis in control was primarily on the structural analysis of smooth dynamical control systems, while in the nineties this has been combined with analytic techniques for stability, stabilization and robust control, leading e.g. to backstepping techniques and nonlinear H$_\infty$-control. In the last decade the main focus was on the theory of passivity-based control. This fact was spurred by works in robotics on the possibilities of shaping by feedback the energy in such a way that it can be used as a suitable LYAPUNOV function, cf. [80, 98, 101]. The Input-to-State Stability (ISS) combines absolute stability and robust stability theories in one for highly nonlinear systems [119, 120]. The main tools in this method for robustness analysis to disturbances are Control-LYAPUNOV-Functions (CLF). A general problem is that it is hard to construct CLF's for highly nonlinear systems. Nevertheless, methods of classical control theory can be applied to nonlinear systems [64] by linearizing the system around an operating point.

In linear quadratic (LQ) control, a linear model is obtained by applying the linearization. Then, a linear feedback law is designed by minimizing a quadratic performance index involving the system's state and the control inputs. Because the dynamics of non-linear systems is varying with their state variables (e.g. acceleration, velocity), this procedure is repeated for a number of operating points, rendering several linear control laws, each tailored for a specific operating case. Further, the gain-scheduling[2] method then can be used to blend these control laws together applying interpolation. The main advantage of this method is that it is based on linear control theory, so that the designer is allowed to utilize well-known standard tools for frequency or robustness analysis etc. Unfortunately, the nonlinear effects are neglected in the model and therefore not accounted in the control design. Thus, the use of nonlinear design methods is motivated.
[2]The nonlinearity is considered by varying the gains

The feedback linearization, also known as nonlinear dynamic inversion, is a design method that can handle with nonlinearities, cf. [59]. By using this method, the influences of the nonlinearities on the controlled variables are cancelled and a linear closed loop system is achieved. The variation of the nonlinear dynamics is also considered, so that a single controller can be applied for all states. To be able to perform feedback linearization, the nonlinearities of the system must be completely known, including their derivatives up to some order depending on how the dynamics are affected [55, 121]. This is a primary disadvantage since the nonlinear dynamics often can not be modelled precisely and, thus provides no guarantee of robustness against model uncertainties and disturbances. Besides this, the linearization of the internal dynamics may cause stability problems.

Heuristic approaches (LQ-technique, feedback linearization) may give very useful insight into the system's behaviour; they cannot be used to decide if the nonlinear system is guaranteed to be stable [42].

The internal stability can be investigated by the methods developed by LYAPUNOV. Further, nonlinear controller robustness properties can be increased by using techniques from the field LYAPUNOV based control. These methods trade controller performance for robustness against uncertainties. However, the techniques require $\alpha$-*priori* estimates of parameter bounds which are often hard to obtain, cp. [59, 115].

The LYAPUNOV based controller design is performed by considering the stability characteristics of the dynamic system. That is, the use of energy-related functions that proves stability of the considered closed-loop systems. The selection of a good function depends on the closed-loop system's particular structure and, nonetheless, on good understanding of the physical insight and on experience. By use of this energy-related function controllers can be developed, cf. [42, 59, 115].

The use of LYAPUNOV's approaches within nonlinear control is often hampered by difficulties to find a CLF. If a LYAPUNOV function for the given system can be found, the system is known to be stable, but the task of finding such a function is left to the imagination and experience of the designer [55]. The method of POPOW is an extension of LYAPUNOV's tools but, it provides the possibility to discuss the stability of standard nonlinear systems with a linear part without knowledge of the CLFs. Thus, the Popow criterion can only be applied to a special class of nonlinear systems, cf. [82].

Besides this, Backstepping and Sliding-Mode techniques are systematic methods for nonlinear control design.
In backstepping control design, nonlinearities do not have to be cancelled in the control law. The name "backstepping" refers to a recursive nature of the controller design procedure. With backstepping, nonlinearities become a design choice. For instance, if a nonlinearity acts stabilizing, and thus in a sense is useful, it may be retained in the closed loop system. This leads to robustness to model errors and less control effort may be needed to control the system, cf. [74]. The controller design is performed by firstly considering only a small subsystem, for which a "virtual" control law is constructed. After that, the design is extended in several steps until a control law for the whole system is constructed. Along with the control law a CLF for the controlled system is constructed, cf. [55].

The sliding mode control is a particular type of VSCS (Variable Structure Control Systems). The control system is characterised by a set of feedback control laws and decision rules. It can be regarded as a combination of subsystems where each subsystem has a fixed control structure and is valid for specified operating points. In sliding mode control, the control system is designed to drive and then constrain the system state to lie within a neighbourhood of the switching surface in the state space [11]. Some advantages of this approach are flexible design, robustness and, invariance. A disadvantage of the sliding mode is that a discontinuous control signal may excite high frequency dynamics of the system neglected in the course of modelling such as unmodelled structural modes, time delays, cf. [117]. This causes fast, finite-amplitude oscillations known as "chattering". But, in literature, there are different cited approaches to reduce the effects of chattering, cp. [117].

### 2.2.1.1. Underactuated Systems

Underactuated systems are mechanical control systems with fewer control inputs than degrees of freedom (configuration variables). Because only one mechanical DoF can be stabilized by dint of one control loop uncontrolled DoF will remain within the system. At this, controlled DoFs and uncontrolled DoFs are coupled by inertial forces and gyroscopic forces. Thus stabilizing of the controlled DoFs will stimulate the uncontrolled DoFs to behave in a specific dynamic manner [85]. Underactuated systems can be found in robotics, aerospace or space flight and examples include flexible-link robots, walking robots, swimming robots, aircraft or satellites. Based on recent surveys, control of such systems is a major open problem [97].

Olifati-Saber discusses in [97] the nonlinear control of underactuated systems and defines: "A control mechanical system with configuration vector $q \in$ Q and Lagrangian $L(q, \dot{q})$ satisfying the EULER-LAGRANGE equation

$$\frac{d}{dt}\frac{\partial L}{\partial \dot{q}} - \frac{\partial L}{\partial q} = F(q)u \qquad (2.6)$$

is called an Underactuated Mechanical System (UMS) if $m = $ rank F(q) $< n = dim(Q)$." Where $u \in IR^m$ and $F(q) = (f_1(q),..., f_m(q))$ denotes the matrix of matrix of external forces. This restriction of the control authority does not allow exact feedback linearization of underactuated systems [97].

### 2.2.1.2. 4-Rotors-Micro-Helicopters

Several researchers have examined the problem of controlling small four rotors helicopters: Mistler et al. derived a dynamic model of a 4-rotors helicopter in [92]. It is shown that the nonlinear model of the helicopter cannot be transformed into a linear and controllable model by means of static feeback control law. The input-output decoupling problem of the under-actuated system is not solvable. Thus, a dynamic feedback controller is presented which renders the closed-loop system linear and controllable from an input-output point of view. Finally, the approach has been simulated.

Pounds et al. present the design and fabrication of a prototype four-rotor vertical take-off and landing (VTOL) aerial robot for use as indoor experimental robotics platform in [96]. The derivation of the dynamic model of the system and a pilot augmentation system is proposed and simulated. In [29] Castillo et al. discuss the dynamic model of a four-rotors rotorcraft which was derived via LAGRANGE*ian* approach. The authors propose a controller based on Lyapunov analysis using a nested saturation algorithm and, the global stability analysis of the closed-loop system is presented. Experimental graphs show that the controller is able to perform autonomously the tasks of taking off, hovering and landing. Hamel et al. propose in [52] a model for the dynamics of a four-rotors helicopter which incorporates the airframe and motor dynamics as well as aerodynamic and gyroscopic effects due to the rotors. Further, the authors present a control strategy for configuration stabilization of quasi-stationary flight conditions. The presented approach bases on classical backstepping method and involves separating the airframe dynamics from the motor dynamics, developing separate CLFs for the coupled systems and then bounding the perturbation error due to the interaction. Similar to the abovementioned approaches, in [3, 4] the dynamic modelling and control aspects of a 4-rotors helicopter are presented. A visual feedback is used a primary sensor. The vision system consists of a ground camera to estimate the pose of the helicopter. Two methods of control are studied, one using the feedback linearizing approach, the other using a backstepping-like control law. Finally, simulations and flight experiments have been performed where the helicopter was tethered so that the DoF were restricted to vertical and yaw motions. Lozano et al. provide aspects on discrete-time prediction based state-feedback control of unstable delay systems in [81]. The proposed control scheme has been implemented to control the yaw displacement of a 4-rotors helicopter. The Draganflyer is a 4-rotors radio controlled helicopter and is capable of motion in 6 DoF. It is able to hovering, but flying requires a high degree of skill, with the telepilot continually making adjustments [88]. McKerrow analyses the dynamics of the Dragan-flyer in order to develop a computer control system for stable hovering and indoor flight. Although the author doesn't derive differential equations of motion or control methods, it is concluded that a four-rotors helicopter is a complex system and the under-actuated control and coupled dynamics make it difficult to fly. Tayebi et al. propose in [125] a quaternion based feedback control scheme for exponential attitude stabilization of a four-rotor VTOL. The proposed controller bases upon the compensation of the CORIOLIS and gyroscopic torques and the use of a PD-feedback structure. The authors show that it is possible to achieve global exponential stability for the attitude stabilizing problem of the quadrotor aircraft by using a PD feedback control law. Bouabdallah et al. investigated in [18, 19, 20, 21] the design, dynamic modelling, sensing and control aspects of an indoor micro quadrotor-helicopter. The authors propose the dynamic modelling with CORIOLIS terms and gyroscopic effect and present approaches in 4-rotors helicopter control with PID controllers, LQ, backstepping and sliding-mode techniques. Several simulations have been performed and experimental results are shown obtained with a test bench, where 3 DoF were locked. Hoffmann et al. outline the design and development of a miniature autonomous waypoint tracker flight control system, and the creation of a multi-vehicle platform for experimentation and validation of multi-agent control algorithms in [57]. The flight dynamics of the quadrotor helicopter is discussed and control algorithms are developed. Wherever possible, the simplest linear controllers were used, and only where the situation required were more complex nonlinear effects considered, as in the altitude control loop, for example.

The altitude is controlled via sliding mode technique. The chattering is eliminated by approximating the signum nonlinearity by saturation nonlinearity. This is achieved by smoothing out the control discontinuity in a thin boundary layer. Further, the attitude is controlled via standard LQ-techniques and, the authors performed successful outdoor flight tests.

### 2.3. Landmark-based attitude determination

In basic research the determination of the attitude is often performed with a camera system and artificial landmarks. One primary approach is the use of concentric circles. The circles degenerate to ellipses during their projection to different planes. The centres of the ellipses lie on a straight line, cp. [63, 71]. From the distances of the centres, the extrinsic parameters of the camera can be determined. But, it is impossible to obtain accurate attitude information from the order of concentric circles, cf. [63]. Fremont [43] chose a three-dimensional landmark, a cube. Two planes of the cube were marked with concentric circles. Besides the extrinsic parameters, the intrinsic parameters of the camera can be determined. The authors used synthetic camera data to validate the procedures. In [72] a similar approach is discussed. The authors used real camera data and investigated concentric circles in coplanar planes. The results obtained were compared with the calibration method of ZHANG [136].

In [3, 4] a visual attitude determination system is introduced and applied to a 4-rotors-helicopter. An inertial measurement unit (IMU), a ground-camera and an on-board camera looking at coloured blobs are used to determine the pose. The author introduces in [4] that more robust pose data can be obtained than known from single camera systems. The main disadvantage is the small operating range because the helicopter must hover around the field of view of the ground station.

Schlaile et al. describe in [130] a computer vision system, which provides in combination with a MEMS IMU the navigation information, which is applied to a small four rotors helicopter. The authors show that with only one camera, reliable position and attitude axes can be obtained, suitable for the aiding of MEMS-IMU. The positions of the landmarks (coded markers) found in the camera images were stored in a map database, increasing the information concerning the surrounding. It has been obtained that the accuracy of roll and pitch angle constitutes in average 4˚ - 4,5˚ as well as 1,25˚ for the yaw angle. Further, the accuracy of the vertical position was 2,0 cm and of the horizontal position was 3,1 cm.

### 2.4. Behaviour-based navigation and path-planning

Several approaches were made throughout the world toward navigation systems for indoor vehicles. Whereas the behaviour-based navigation has only been considered rarely. Altenburg [2] introduces the behaviour-based navigation using multi-robot systems. An autonomous set of keeling robots have been enabled to adopt a predetermined position on a map. A swarm of robots automatically changes the formation when required (in narrow corridors, when approaching a door, etc.). The navigation system based on behaviours is also mentioned in [75] where it is amongst others utilized to enable cooperative four-legged robots to compete against another team of robots in a soccer-match.

Other works concentrate on navigation approaches using a camera [112, 135] or laser-scanner [56] and focus on unexplored terrains as well as on completely reconnoitred areas. The landmark-based navigation [76] and camera based navigation in general has the disadvantage of being dependent on the visual properties of the environment (smoke, darkness, humidity, etc.), whereas other sensors cope with such influences. The required performance of the robot's micro controller is significantly higher when using camera-based navigation than distance sensors. Wyeth [132] discusses a landmark-based navigation system applied to an autonomous blimp. Landmarks are recognized to be able to correct erroneous positions.

Path-planning procedures are well described and different authors published several extensions, cf. [30], [31], [103], or [104]. Unfortunately, in literature path-planning methods in combination with behaviour-based navigation with application to airborne systems are unknown, cf. [84].

## 2.5. Concluding remarks

Four rotors helicopters are highly unstable and require permanent control of the non-linear behaviour. The control needs accurate navigation information, which could be provided by an inertial measurement unit. An IMU measures linear acceleration and angular velocities directly. Mainly, in miniaturized, autonomous systems, a strap down algorithm is used to first integrate the angular velocity measurements to gain the attitude of the helicopter. With this attitude information, the linear acceleration can be integrated twice to get a velocity and position solution, cf. [24]. The navigation solution has a drift due to measurement noise and bias of the IMU. Therefore aiding is necessary, for example by using the global positioning system (GPS). GPS fails in jamming, urban or indoor situations.

The importance of modelling for nonlinear control is well known and, it is common practice for working engineers [98]. The real nonlinearities have to be considered to be able to develop an optimal and robust control method. The worldwide approaches toward nonlinear control of 4-rotors-helicopters only use ideal models with the centre of gravity (CG) in the origin of the body fixed coordinate frame. CG-shifts caused by non-perfect trimming procedures and fastening or dropping of payloads are not covered and ground effect is neglected.

In different published approaches theoretical results are validated in test-setups [3, 4, 18, 19, 20, 21, 35], cf. figure 2.1. Due to parasitic effects and shifted revolving axes experimental results are falsified, so that real flight tests should be performed, cp. [29, 57, 68]. The problem of developing nonlinear controllers for 4-rotors-helicopters
Figure 2.1.: Test bench principles: from left to right: single spring/wire system, double spring system, bearing system providing global asymptotic stability, covering CG shifts and ground effect has not been solved in previous works.

Further, precise knowledge of the 4-rotors-helicopter's position and orientation is needed to be able to enable autonomous operation. Limited payload capacity may not permit the use of heavy navigation systems. Typically, complementary sensors are used to overcome limitations in individual sensors, thereby increasing the reliability and decreasing the errors. Vision sensors can be used for estimating the relative position of a target, like a landing site and, special objects can be identified on the visual data. A vision system is not as fast as an inertial sensor, and it is not as reliable as other sensors due to sensitivity changes (e.g. lighting conditions, dust, etc.). A complementary sensor system consisting of MEMS inertial sensors and a vision system can be used to stabilize, hovering the helicopter and also to track moving objects.

Navigation systems for indoor flying robots have not been investigated in detail. In mobile ground robotics there are different approaches of self-localization on basis of Bayesian filter techniques, but those can not be applied in miniaturized airborne system due to their higher DoF and complexity. Real-time computation for such systems is not possible today. Hence, behaviour-based navigation approaches can be applied, because no metric information of the surrounding is necessary.

## 3. Control System

The purpose of this chapter is to introduce 4-rotors-helicopters from a control perspective. This includes developing a dynamic model, describing the control variables available. Based on this, it is discussed how to obtain stability in the control loop.

There is substantial literature on flight dynamics and the presentation in this chapter is mainly based on the textbooks by R. Brockhaus [24], W. Johnson [61] and the standards DIN 9300 [113], ISO 1151 [114]. The earth's yaw rate is neglected and the earth's surface is considered as flat. Thus, the geodetic coordinates (index g) are applied as inertial reference.

### 3.1. Aircraft Primer

### 3.1.1. Definition of inertial- and reference systems

In [13, 89] the most common right-handed coordinate frames are introduced as follows:

*Absolute inertial system*

Within the absolute inertial system NEWTON'S laws can really be applied. In theory it is mounted in the universe so that it can not be regarded as a realistic reference system.

*Earth's inertial system*

The origin of the earth's inertial system is in the centre of the earth. The z-axis of the coordinate frame it pointing toward the fixed stars and is equivalent with the yaw axis of the earth. NEWTON'S laws are valid approximately.

*Earth's reference system*

The origin of the earth's inertial system is also mounted in the centre of the earth. It is rotating together with the earth around its z-axis.

*Earth's navigation system*

The earth's navigation system is fixed in any place near earth's surface. The *x*-axis is pointing to North, the y-axis to East and the z-axis perpendicular to the *x*-*y*-plane to the centre of the earth (north-east-down). This is the most common standard in aviation, but disagrees with the imagination, that positive heights are measured upwards. From top view, the yaw angle Ψ is measured clockwise positive, which accords to a compass.

*Body-fixed frame*

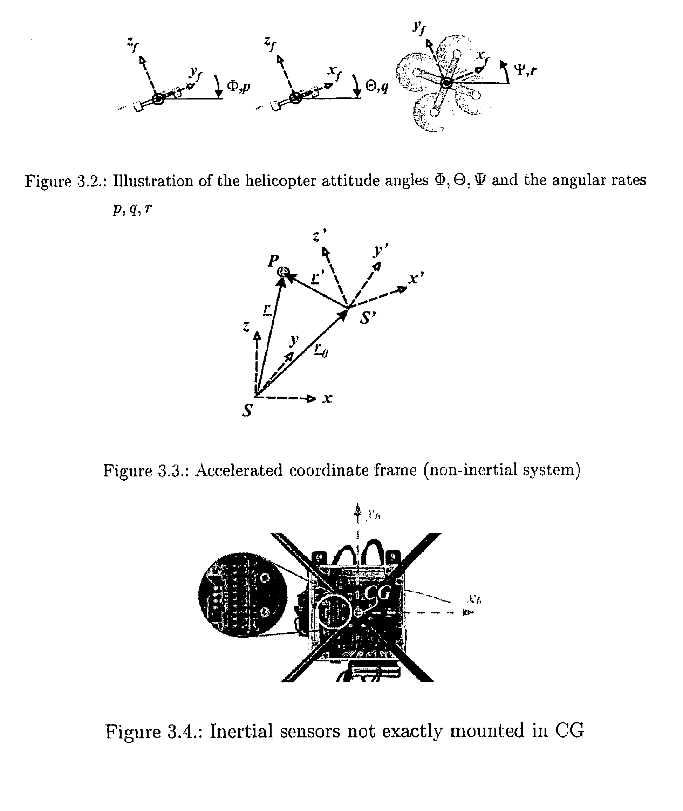

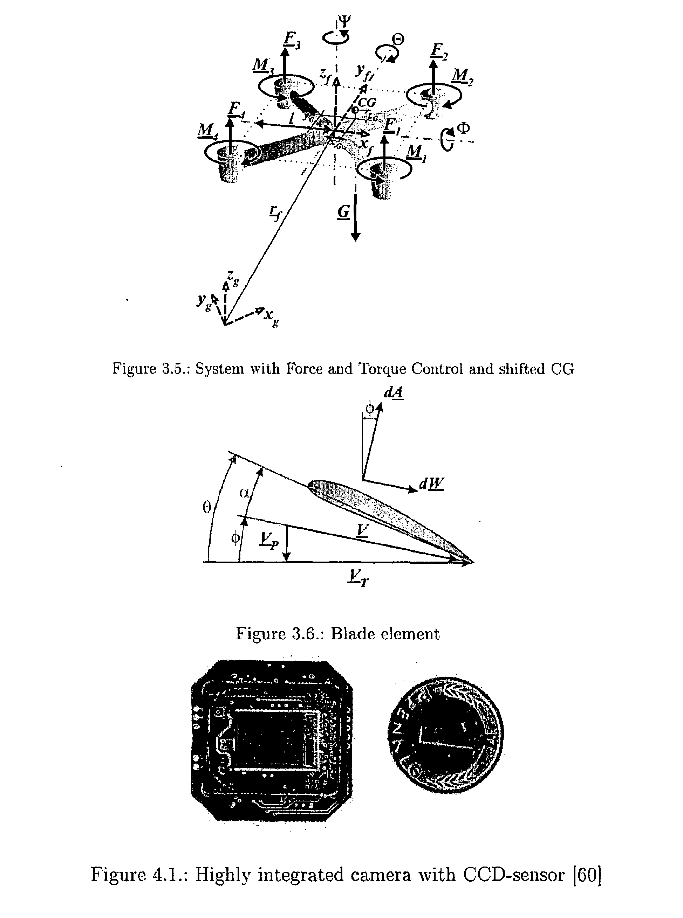

In the body-fixed frame the origin is at the aircraft centre of gravity. In aviation, the *x*-axis is pointing forward, the y-axis along the lateral axis and the z-axis down.
The two coordinate frames most frequently used to describe the motion of an aircraft are the Earth-fixed frame *g,* and the body-fixed frame *f.* Different from the above mentioned approaches, in this thesis the z-axes are pointing upwards, so that positive heights are measured upwards, see fig. 3.1.
Figure 3.1.: Illustration of the inertial, earth-fixed coordinate frame g, and the body-fixed frame *f*

### 3.1.2. Attitude determination

The derivation of the 4-rotors-helicopter's attitude with respect to the horizontal plane in terms of the pitch and roll angles and its heading, that is the direction in which it is pointing in the horizontal plane with respect to North, is essential, cf. [32].
The attitude of an aricraft can be specified by the three EULER angles *yaw* Ψ*, pitch* Θ and *roll* Φ, that are depicted in figure 3.2. A rotation R in space can be divided into
Figure 3.2.: Illustration of the helicopter attitude angles Φ, Θ, Ψ and the angular rates *p, q, r*
3 single rotations around different axes:

$$\mathbf{R} = \mathbf{R_1 R_2 R_3}, \qquad\qquad (3.1)$$

conferring to EULER'S theorem. It is important, that a rotation can be described by different EULER-angles. The sequence of the singe rotations must be considered, because the multiplication of matrices is noncommutative, that is, a different orientation would be obtained if the rotations were made in a different order. In case of very small angles, as often assumed in practice, the sequence can be neglected. The following example shows the transformation of the inertial frame in to the body-fixed frame, cf. [113]:

$$\mathbf{R} = \begin{pmatrix} 1 & 0 & 0 \\ 0 & \cos\Phi & \sin\Phi \\ 0 & -\sin\Phi & \cos\Phi \end{pmatrix} \begin{pmatrix} \cos\Theta & 0 & -\sin\Theta \\ 0 & 1 & 0 \\ \sin\Theta & 0 & \cos\Theta \end{pmatrix} \begin{pmatrix} \cos\Psi & \sin\Psi & 0 \\ -\sin\Psi & \cos\Psi & 0 \\ 0 & 0 & 1 \end{pmatrix} =$$

$$\begin{pmatrix} \cos\Theta\cos\Psi & \cos\Theta\sin\Psi & -\sin\Theta \\ \begin{matrix}\sin\Phi\sin\Theta\cos\Psi-\ldots \\ \ldots-\cos\Phi\sin\Psi\end{matrix} & \begin{matrix}\sin\Phi\sin\Theta\sin\Psi+\ldots \\ \ldots+\cos\Phi\cos\Psi\end{matrix} & \sin\Phi\cos\Theta \\ \begin{matrix}\cos\Phi\sin\Theta\cos\Psi+\ldots \\ \ldots+\sin\Phi\sin\Psi\end{matrix} & \begin{matrix}\cos\Phi\sin\Theta\cos\Psi-\ldots \\ \ldots-\sin\Phi\cos\Psi\end{matrix} & \cos\Phi\cos\Theta \end{pmatrix} \quad (3.2)$$

There are two basic inertial procedures that are used to derive the EULER angles with the required accuracy. *Stable platforms* have the gyroscopes and accelerometers mounted on a platform which is suspended in a set of gimbals. The gyroscopes then control the gimbal servos so that the platform maintains a stable orientation in space irrespective of the helicopter manoeuvres. The rotation pick-offs on the gimbals provide a direct read-out of the EULER angles. *Strap-down* systems have the gyroscopes and accelerometers mounted on a rigid frame or block which is directly fixed to the airframe. The gyroscopes and accelerometers measure the angular and linear motion of the helicopter with respect to the body-fixed frame. The EULER angles are computed from the body rate information, [24, 32]. It is noted that stable platforms and strap-down systems are mathematical equivalent systems. Because, a strap-down system eliminates the mechanical complexity of the stable platform with its gimbals, bearings, servo motors etc., the reliability and cost ownership is improved, power consumption is lower and the weight and volume is reduced. Thus, strap-down systems are predestined for the application in miniaturized systems. [32, 109].

The EULER angles then can be derived from the body rates of rotation measured by the gyroscopes by using suitable algorithms. The difference velocities of the EULER angles are yielded by the decomposition of the vector of the angular velocities regarding the rotational axes of the EULER angles. These axes are normally not an orthogonal system, their directions depend directly on the EULER angles, cf.[113].

The EULER angles defined in figure 3.2 and the equations relating the body angular rates *p,q,r* to the EULER angles rates $\dot{\Phi}$, $\dot{\Theta}$, $\dot{\Psi}$ are derived e.g. in [24, 32, 113]. The equations for $\dot{\Phi}$, $\dot{\Theta}$, $\dot{\Psi}$ can be written as, cf. [113]:

$$\dot{\Phi} = p + q\sin\Phi\tan\Theta + r\cos\Phi\tan\Theta \quad (3.3)$$

$$\dot{\Theta} = q\cos\Phi - r\sin\Phi \quad (3.4)$$

$$\dot{\Psi} = q\frac{\sin\Phi}{\cos\Theta} + r\frac{\cos\Phi}{\cos\Theta} \quad (3.5)$$

The EULER angles can be derived from the EULER angle rates by integration using as initial condition a known attitude at a given point in time.

Besides the inertial attitude determination, the yaw, pitch and roll angles can also be derived by using artificial or natural landmarks. By dint of the rotation matrix R, rotational angles can be determined:

$$\Phi = \arctan\frac{R_{23}}{R_{33}} = \arctan\frac{\sin\Phi\cos\Theta}{\cos\Phi\cos\Theta} \quad (3.6)$$

$$\Theta \;=\; R_{13} = -\arcsin(-\sin\Theta) \tag{3.7}$$

$$\Psi \;=\; \arctan\frac{R_{12}}{R_{11}} = \arctan\frac{\cos\Theta\sin\Psi}{\cos\Theta\cos\Psi} \tag{3.8}$$

The procedure may be critical because of the domains of the arctan- and arcsin-function. In case of 4-rotors-helicopters this approach is not problematic for the attitude angles $\Phi$ and $\Theta$. Due to the change of lift forces with tilt angles the attitude angles will not leave the domain $\left[-\frac{\pi}{2}; +\frac{\pi}{2}\right]$. On the other hand the helicopter can completely move around the z-axis. Thus, the domain of the angle $\Psi$ is $[-\pi; +\pi]$. This circumstance can be covered by using the standard-C-function atan2 (a, b). The function arctan $\frac{a}{b}$ is calculated and the signs of $a$ and $b$ are considered, so that the domain is expanded.

### 3.1.3. Dynamics of mass point

In inertial systems the deviation $\xi$ is, cf. [23]:

$$\dot{\xi} \;=\; v = const. \tag{3.9}$$

$$\ddot{\xi} \;=\; \dot{v} = 0. \tag{3.10}$$

Figure 3.3.: Accelerated coordinate frame (non-inertial system)
Compared with inertial systems non-inertial systems can perform any movement, cp. [23, 27]. The following sections introduce the description of the movement of a point mass while changing its reference system. Within the reference system $S$', a moving mass point $P$ (without dimension) can be located in the inertial system by the position vector $r$ at time $t$, cp. figure 3.3:

$$\underline{r} = \underline{r}_0 + \underline{r}' = \underline{r}_0 + x'\underline{e}'_x + y'\underline{e}'_y + z'\underline{e}'_z \tag{3.11}$$

The function $\underline{r}$ is called *trajectory* with the velocity:

$$\dot{\underline{r}} = \dot{\underline{r}}_0 + \dot{x}'\underline{e}'_x + \dot{y}'\underline{e}'_y + \dot{z}'\underline{e}'_z + x'\dot{\underline{e}}'_x + y'\dot{\underline{e}}'_y + z'\dot{\underline{e}}'_z. \tag{3.12}$$

A fixed observer within the reference system S would not recognize the changing of the direction of the axes. He only would imagine the velocity

$$\dot{\underline{r}} = \dot{x}'\underline{e}'_x + \dot{y}'\underline{e}'_y + \dot{z}'\underline{e}'_z \tag{3.13}$$

of the mass point.
The last three terms in equation 3.12 are responsible for the rotation of the reference frame. The point P is fixed due to the constant components x', y' and z'. The rotation of the system can be described by the angular velocity vector:

$$\dot{x}'\underline{e}'_x + \dot{y}'\underline{e}'_y + \dot{z}'\underline{e}'_z = \underline{\Omega} \times \underline{r}'. \tag{3.14}$$

Considering equation 3.12, it is essential that:

$$\dot{\underline{r}} = \dot{\underline{r}}_0 + \dot{\underline{r}}' + \underline{\Omega} \times \underline{r}'. \tag{3.15}$$

$D_S$ and $D_{S'}$ are operators for the differentials in $S$ and $S'$, i.e. $D_S = \frac{d}{dt}\Big|_S$ and $D_{S'} = \frac{d}{dt}\Big|_{S'}$. Thus, the common operator equation of the differential of a vector $\underline{A}$ (EULERian differential *rule)* in the rotating reference system, cp. [25]:

$$D_S = D_{S'} + \underline{\Omega} \times . \tag{3.16}$$

By considering equation 3.16 it can be concluded that a differential in S is equal to the differential in $S'$ plus the vector product in $\underline{\Omega}$. By dint or the operator equation, the second differential of equation 3.11 can be derived and the differential equation of motion in the non-inertial system can be determined.
With

$$\begin{aligned}
D_{S}^{2}\underline{r} &= D_S(D_{S'}\underline{r} + \Omega \times \underline{r}) = \\
&= D_{S'}^2\underline{r} + \underline{\Omega} \times (D_S\underline{r}) + (D_S\underline{\Omega}) \times \underline{r} + \underline{\Omega} \times (D_S\underline{r}) \\
&= D_{S'}^2\underline{r} + \underline{\Omega} \times (D_{S'}\underline{r}) + (D_{S'}\underline{\Omega} + \underline{\Omega} \times \underline{\Omega}) \times \underline{r} + \underline{\Omega} \times (D_{S'}\underline{r} + \underline{\Omega} \times \underline{r}) \\
&= D_{S'}^2\underline{r} + (D_{S'}\underline{\Omega}) \times \underline{r} + 2\underline{\Omega} \times (D_{S'}\underline{r}) + \underline{\Omega} \times (\underline{\Omega} \times \underline{r}) \tag{3.17}
\end{aligned}$$

one can write for the accelerations::

$$\frac{d^2\underline{r}}{dt^2}\Big|_S = \frac{d^2\underline{r}}{dt^2}\Big|_{S'} + \frac{d\underline{\Omega}}{dt}\Big|_{S'} \times \underline{r} + 2\underline{\Omega} \times \frac{d\underline{r}}{dt}\Big|_{S'} + \underline{\Omega} \times (\underline{\Omega} \times \underline{r}). \tag{3.18}$$

Within the non-inertial system, NEWTON's equation must be modified. With

$$\underline{F} = m\,\frac{d^2\underline{r}}{dt^2}\Big|_S \tag{3.19}$$

the differential equation of motion within the rotating coordinate frame can be written as:

$$m\ddot{\underline{r}}' = \underline{F} - m\ddot{\underline{r}}_0 - m\dot{\underline{\Omega}} \times \underline{r}' - 2m\underline{\Omega} \times \dot{\underline{r}}' - m\underline{\Omega} \times (\underline{\Omega} \times \underline{r}') \tag{3.20}$$

The terms on the right side of $\underline{F}$ in equation are virtual forces. Those forces exist, due to the acceleration of the reference system. The reason of the forces is the inertia of the mass (*inertia forces).* The term $m\underline{\Omega}$ x $\underline{r}'$ is created only if the magnitude and the direction of the rotation speed are time-invariant. The last two terms only appear, if the mass point moves in a rotating reference system. $-2m\underline{\Omega} \times \dot{\underline{r}}'$ is called CORIOLIS-*force* and $-m\underline{\Omega} \times (\underline{\Omega} \times \underline{r})$ is named *centrifugal force.*

The *principle of conversation of angular momentum* can be obtained by writing NEWTON's equation of motion by applying the impetus $\underline{B}$:

$$m\underline{\ddot{r}} = mD_S\underline{\dot{r}} = D_S\underline{B} = \underline{F}_a \qquad (3.21)$$

From equation 3.21 it can be obtained that the differential of the impetus is equal to the external force. If there are no external forces, the *principle of conversation of momentum* can be applied:

$$D_S\underline{B} = 0, \text{ with } \underline{B} = const. \qquad (3.22)$$

By multiplying equation 3.21 with the position vector $\underline{r}$, it can be derived that:

$$m(\underline{r} \times \underline{\ddot{r}}) = \underline{r} \times \underline{F}_a. \qquad (3.23)$$

While considering equation 3.23 with

$$mD_S(\underline{r} \times \underline{\dot{r}}) = m(\overbrace{\underline{\dot{r}} \times \underline{\dot{r}}}^{0}) + m(\underline{r} \times \underline{\ddot{r}}) = m(\underline{r} \times \underline{\ddot{r}}), \qquad (3.24)$$

it is essential, that the left side of equation 3.24 is equal to the differential of the angular momentum $\underline{H}$ = m($\underline{r} \times \underline{\dot{r}}$) of a point mass. Thus, the *principle of conversation of momentum* with reference to a fixed point in space and a moving centre of mass respectively can be written:

$$D_S\underline{H} = \underline{M}_a. \qquad (3.25)$$

Because the velocities of rigid bodies (cp. [27]) are

$$\underline{v}(\underline{r}, t) = \underline{v}' + \underline{\Omega} \times (\underline{r} - \underline{r}'), \qquad (3.26)$$

it can be obtained that $\int_V (\underline{r} - \underline{r}') \times \underline{v} dm = \underline{H}_M$, so that the angular momentum with reference to the centre of mass M of rigid bodies can be determined[1]

$$
\begin{aligned}
\underline{H}_M &= \int_V [(\underline{r} - \underline{r}') \cdot (\underline{r} - \underline{r}')\underline{\Omega} - (\underline{r} - \underline{r}') \cdot \underline{\Omega}(\underline{r} - \underline{r}')]dm \\
&= [I_{xx}\omega_x + I_{xy}\omega_y + I_{xz}\omega_z]\underline{e}_x \\
&+ [I_{yx}\omega_x + I_{yy}\omega_y + I_{yz}\omega_z]\underline{e}_y \\
&+ [I_{zx}\omega_x + I_{zy}\omega_y + I_{zz}\omega_z]\underline{e}_z \\
&= \mathbf{I} \cdot \underline{\Omega} \qquad (3.27)
\end{aligned}
$$

Analogous, the angular momentum with reference to a fixed point in space can be written. With $\int\limits_{V} \underline{r} \times \underline{v} \mathrm{d}m = \underline{H}$ follows:

$$\underline{H} = \mathbf{I} \cdot \underline{\Omega} + \underline{r}' \times m\underline{v}' = \underline{H}_M + \underline{r}' \times \underline{B}. \qquad (3.28)$$

Considering equation 3.25 and applying equation 3.16 yields the *principle of conversation of angular momentum* for rigid bodies with reference to

- the centre of mass *M*

$$
\begin{aligned}
\underline{M}_M &= D_S \underline{H}_M = D_S(\mathbf{I} \cdot \underline{\Omega}) \\
&= \mathbf{I} \cdot \underline{\dot{\Omega}} + \underline{\Omega} \times \mathbf{I} \cdot \underline{\Omega}.
\end{aligned} \qquad (3.29)
$$

- a fixed point in space

$$
\begin{aligned}
\underline{M} &= D_S \underline{H} = D_S(\mathbf{I} \cdot \underline{\Omega}) + D_S(\underline{r}' \times \underline{B}) \\
&= \mathbf{I} \cdot \underline{\dot{\Omega}} + \underline{\Omega} \times \mathbf{I} \cdot \underline{\Omega} + \underline{\dot{r}}' \times \underline{B} + \underline{r}' \times \underline{\dot{B}} \\
&\quad + (\underline{\Omega} \times \underline{r}') \times \underline{B} + \underline{r}' \times (\underline{\Omega} \times \underline{B}).
\end{aligned} \qquad (3.30)
$$

[1]Cartesian coordinate frames with origin in centre of mass *M*: $\underline{r}$ - $\underline{r}'$ = $x\underline{e}_x$ + $y\underline{e}_y$ + $z\underline{e}_z$

## 3.2. 3D-modelling of 4-rotors-helicopters

A body-fixed frame is assumed to be at the centre of gravity of the platform, where the $z_f$-axis is pointing upwards. This body axis is related to the inertial frame by a position vector (*x*, *y*, *z*) and three EULER angles (Φ,Θ, Ψ) representing yaw, pitch and roll. Especially, non-perfect mounted sensors, cf. figure 3.4, additional payloads, different battery joints or payload droppings cause erroneous data.
Figure 3.4.: Inertial sensors not exactly mounted in CG
An example of a 4-rotors-helicopter model is shown in figure 3.5 with the initial body-fixed frame in the geometric centre and with CG-shift. The orientation of the body can be described by a rotation R body-fixed f → inertial g.
Figure 3.5.: System with Force and Torque Control and shifted CG
The derivation of the nonlinear differential equations is based on the following simplifying assumptions:

• The earth is considered as a non-rotating reference System. The assumption affects no errors in subsonic and transonic flight.

• The helicopter is a rigid body. Additional elastic degrees of freedom are neglected. Due to the small moments of inertia in conjunction with the stiff construction this simplification is valid.

• During the motion of the helicopter, the position of the centre of gravity remains constant or is changing very slowly.

so that the equations 3.20 as well as 3.30 can be applied and the inertial tensor $I_f$ is constant:

$$I_f = \begin{pmatrix} I_x & -I_{xy} & -I_{zx} \\ -I_{xy} & I_y & -I_{yz} \\ -I_{zx} & -I_{yz} & I_z \end{pmatrix} \tag{3.31}$$

where the products of inertia $I_{xy}$, $I_{zx}$ und $I_{yz}$ for symmetric aircrafts with principal axes system are zero. Further, it is assumed that the variation of the inertial tensor in dependence of the CG-shift can be neglected. Considering the Earth as a non-rotating system (inertial system), with equation 3.20 can be obtained that

$$\begin{aligned} \underline{F} \;=\; & m\begin{pmatrix} \dot{u} \\ \dot{v} \\ \dot{w} \end{pmatrix} + m\left[ \begin{pmatrix} \dot{p} \\ \dot{q} \\ \dot{r} \end{pmatrix} \times \begin{pmatrix} x_G \\ y_G \\ z_G \end{pmatrix} \right] + 2m\left[ \begin{pmatrix} p \\ q \\ r \end{pmatrix} \times \begin{pmatrix} u \\ v \\ w \end{pmatrix} \right] \\ & + m\left[ \begin{pmatrix} p \\ q \\ r \end{pmatrix} \times \left( \begin{pmatrix} p \\ q \\ r \end{pmatrix} \times \begin{pmatrix} x_G \\ y_G \\ z_G \end{pmatrix} \right) \right] \\ =\; & m\begin{pmatrix} \dot{u} + 2(wq - vr) - x_G(q^2 + r^2) + y_G(pq - \dot{r}) + z_G(pr + \dot{q}) \\ \dot{v} + 2(ur - wp) + x_G(pq + \dot{r}) - y_G(r^2 + p^2) + z_G(qr - \dot{p}) \\ \dot{w} + 2(vp - uq) + x_G(pr - \dot{q}) + y_G(qr + \dot{p}) - z_G(p^2 + q^2) \end{pmatrix} \end{aligned} \tag{3.32}$$

Analogous to this, it is essential from equation 3.30 that

$$\begin{aligned} \underline{M} \;=\; & \begin{pmatrix} I_x & -I_{xy} & -I_{zx} \\ -I_{xy} & I_y & -I_{yz} \\ -I_{zx} & -I_{yz} & I_z \end{pmatrix}\begin{pmatrix} \dot{p} \\ \dot{q} \\ \dot{r} \end{pmatrix} + \begin{pmatrix} p \\ q \\ r \end{pmatrix} \times \begin{pmatrix} I_x & -I_{xy} & -I_{zx} \\ -I_{xy} & I_y & -I_{yz} \\ -I_{zx} & -I_{yz} & I_z \end{pmatrix}\begin{pmatrix} p \\ q \\ r \end{pmatrix} \\ & + \left[ \begin{pmatrix} p \\ q \\ r \end{pmatrix} \times \begin{pmatrix} x_G \\ y_G \\ z_G \end{pmatrix} \right] \times m\begin{pmatrix} u \\ v \\ w \end{pmatrix} + \begin{pmatrix} x_G \\ y_G \\ z_G \end{pmatrix} \times \left[ \begin{pmatrix} p \\ q \\ r \end{pmatrix} \times m\begin{pmatrix} u \\ v \\ w \end{pmatrix} \right] \\ & + \begin{pmatrix} x_G \\ y_G \\ z_G \end{pmatrix} \times m\begin{pmatrix} \dot{u} \\ \dot{v} \\ \dot{w} \end{pmatrix} + \underbrace{\begin{pmatrix} u \\ v \\ w \end{pmatrix} \times m\begin{pmatrix} u \\ v \\ w \end{pmatrix}}_{=0} \\ =\; & \begin{pmatrix} I_x\dot{p} + (I_z - I_y)qr - I_{zx}(pq + \dot{r}) + I_{yz}(r^2 - q^2) + I_{xy}(pr - \dot{q}) \\ I_y\dot{q} + (I_x - I_z)pr - I_{xy}(qr + \dot{p}) + I_{zx}(p^2 - r^2) + I_{yz}(pq - \dot{r}) \\ I_z\dot{r} + (I_y - I_x)pq - I_{yz}(pr + \dot{q}) + I_{xy}(q^2 - p^2) + I_{zx}(qr - \dot{p}) \end{pmatrix} \\ & + m\begin{pmatrix} x_G(wr + vq) + y_G(\dot{w} - uq) - z_G(\dot{v} + ur) \\ -x_G(\dot{w} + vp) + y_G(up + wr) + z_G(\dot{u} - vr) \\ x_G(\dot{v} - wp) - y_G(\dot{u} + wq) + z_G(vq + up) \end{pmatrix} \end{aligned} \tag{3.33}$$

with $(\dot{x}, \dot{y}, \dot{z})^T$ - $(u, v, w)^T$. The two non-nonlinear vector differential equations 3.32 and 3.33 describe the force and torque equilibriums within and around the CG respectively.

From these representations it can be realized that fast movements in all directions - which is the case for miniaturized helicopters - and a CG-shift effect additional non-linear terms, caused by the coupling of translational as well as rotational accelerations and velocities.

A third differential equation describes the coherence between the body-fixed rotational velocities and the attitude of the helicopter in the inertial frame (EULER-transformation). The transformation from the body-fixed frame into the inertial frame, i.e. from a rotating system into a non-rotating system can be performed with the rotation matrix $\mathbf{R}_{zyx}$, while considering the EULER-angles $-\Phi$, $-\Theta$, $-\Psi$, cf. [113]. The matrix can be written as:

$$R_{zyx} = \begin{pmatrix} \cos\Theta\cos\Psi & \begin{array}{c} \sin\Phi\sin\Theta\cos\Psi - \ldots \\ \ldots - \cos\Phi\sin\Psi \end{array} & \begin{array}{c} \cos\Phi\sin\Theta\cos\Psi + \ldots \\ \ldots + \sin\Phi\sin\Psi \end{array} \\ \cos\Theta\sin\Psi & \begin{array}{c} \sin\Phi\sin\Theta\sin\Psi + \ldots \\ \ldots + \cos\Phi\cos\Psi \end{array} & \begin{array}{c} \cos\Phi\sin\Theta\cos\Psi - \ldots \\ \ldots - \sin\Phi\cos\Psi \end{array} \\ -\sin\Theta & \sin\Phi\cos\Theta & \cos\Phi\cos\Theta \end{pmatrix} \quad (3.34)$$

For indoor applications the speed is very low (pure viscous fluid flow), so it is assumed that the drag forces in the 6 DoF are straight proportional to the velocity. In case of higher velocities, the pressure drag gains influence, so that the drag forces are squared proportional to the velocities.

The relation of the lift and the drag of the rotation speed of the rotors can be described by the *blade element theory,* cp. [17, 65]. Figure 3.6 presents the geometry of an infinitesimal blade element that is cut out of a blade of the rotor. At rotating propellers, there is an in-plane velocity $V_T$ (caused by rotation of rotor) and an out-of-plane velocity $V_P$. The latter is perpendicular to the horizontal circular area, where $\theta$ is the pitch angle, $\phi$ is the inflow angle, and $\alpha$ is the angle of attack. Due to the different direction and magnitude of resulting flow $V$, the aerodynamic forces vary along the blade from boss to tip. The infinitesimal lift $dA$ and drag $dW$ at the blade element i will be:

$$dA_i = \frac{\rho}{2}V_i^2 c_a b_i dr_i \qquad (3.35)$$

$$dW_i = \frac{\rho}{2}V_i^2 c_w b_i dr_i \qquad (3.36)$$

$\rho$ is fluid density, dr is the length, and $b$ is the wing depth of the blade element. The lift coefficient $c_a$ and drag coefficient $c_w$ depend on the angle of attack $\alpha$, the REYNOLDS number $Re$ and the profile shape, cf. [65]. The MACH-number Ma has to be considered

Figure 3.6.: Blade element

in compressible fluids. If $\frac{1}{2}Ma \ll 1$, relative density changes can be neglected [67]. The contribution of a blade element to the thrust $F$ and to the moment $M$ of all $N$ blades can be derived to:

$$dF = N(dA\cos\phi - dW\sin\phi) \qquad (3.37)$$

$$dM = N \cdot r(dA\sin\phi + dW\cos\phi) \qquad (3.38)$$

the integration over the radius $R$ gives the total thrust $F$ and total moment $M$ of a propeller. With the total thrust $F$ the thrust coefficient $c_F$ can be obtained to [61]:

$$c_F = \frac{F}{\rho b R (\omega R)^2} \tag{3.39}$$

where the inflow ratio $\lambda_h$ can be written as:

$$\lambda_h = \sqrt{\frac{c_F}{2}} \tag{3.40}$$

For small inflow ratios $\lambda_h$ (0.05 to 0,07) the following simplifying assumptions may be considered, see [61]:

1. the out-of-plane velocity $V_P$ is considerably less than the in-plane velocity $V_T$; so that

$$V = \sqrt{V_P^2 + V_T^2} \approx V_T \tag{3.41}$$

2. the inflow angle $\phi$ is small, so that $\phi \approx \frac{V_P}{V_T}$, $\sin \phi \approx \phi$ respectively and $\cos \phi \approx 1$

3. the drag forces are considerably smaller than the lift forces, so that term $dW \cdot \sin \phi$ can be neglected.

By using these assumptions, neglecting stall as well as compressibility, and considering a lift coefficient which is linearly related to the angle of attack $c_a = \frac{dc_a}{d\alpha} \cdot \alpha = c_a' \cdot \alpha$ the equations 3.37 and 3.38 for thrust and moments are simplified to:

$$dF \;\; = \;\; \frac{\rho}{2} N V_T^2 c_a' b (\theta - \frac{V_P}{V_T}) dr \tag{3.42}$$

$$dM \;\; = \;\; \frac{\rho}{2} N V_T^2 b [c_a'(\theta - \frac{V_P}{V_T})\phi + c_w] dr \tag{3.43}$$

$c_a'$ is the slope of the two dimensional lift curve. With a further assumption that the helicopter has fixed pitch rotors, the setting angle $\theta$ and the angle of attack $\alpha$ are constant. By insertion of the angular velocity $V = \omega R$ and collection of the constant terms to the constant variables $C_1$ and $C_2$ the equations simplify to, cp. [52]:

$$F_i \;\; := \;\; C_1 \omega_i^2, \; C_1 \in \mathbb{R}^+ \tag{3.44}$$

$$M_i \;\; := \;\; C_2 \omega_i^2, \; C_2 \in \mathbb{R}^+ \tag{3.45}$$

The above mentioned connections show, that successful control of the helicopter requires direct control of the rotor speed $w_i$, cp. [52]. The rotation speed $w_i$ can be calculated from the torque $\tau_i$ of the motor [52]:

$$\tau_i = \mathbf{I}_R \dot{\omega}_i + C_2 \omega_i^2 \qquad\qquad (3.46)$$

$I_R$ is the inertial tensor of the rotor.

With the derived basics in section 3.1.3, the gyroscopic effects of the motors can be determined. With $\underline{\Omega}$ as rotation speed of the helicopter can be written:

$$
\begin{aligned}
\underline{M}_{M,R} &= \mathbf{I}_R \cdot \dot{\underline{\omega}} + \underline{\Omega} \times \mathbf{I}_R \cdot \underline{\omega} \\
&= \begin{pmatrix} I_{x,R}\dot{\omega}_x \\ I_{y,R}\dot{\omega}_y \\ I_{z,R}\dot{\omega}_z \end{pmatrix} + \begin{pmatrix} qI_{z,R}\omega_z - rI_{y,R}\omega_y \\ rI_{x,R}\omega_x - pI_{z,R}\omega_z \\ pI_{y,R}\omega_y - qI_{x,R}\omega_x \end{pmatrix}.
\end{aligned} \qquad (3.47)
$$

The rotors are only rotating about the body fixed axes $z_f$, thus it is essential that:

$$\omega_x = \omega_y = 0. \qquad\qquad (3.48)$$

On the assumption that the rotary speeds of the rotors are constant follows:

$$\dot{\omega}_x = \dot{\omega}_y = \dot{\omega}_z = 0. \qquad\qquad (3.49)$$

This leads to the equation for the gyroscopic moment and is treated like an inertia term:

$$\underline{M}_{M,R} = \begin{pmatrix} qI_{z,R}\omega_z \\ -pI_{z,R}\omega_z \\ 0 \end{pmatrix}. \qquad\qquad (3.50)$$

The complete set of equations of motion now can be written using the equations 3.32, 3.33, 3.34 and 3.50:

$$\dot{u} = \frac{1}{m}[\tilde{u}_1(\cos\Phi\sin\Theta\cos\Psi + \sin\Phi\sin\Psi) - c_{W1}u]$$
$$-2(wq - vr) + x_G(q^2 + r^2) - y_G(pq - \dot{r}) - z_G(pr + \dot{q})$$

$$\dot{v} = \frac{1}{m}[\tilde{u}_1(\cos\Phi\sin\Theta\cos\Psi - \sin\Phi\sin\Psi) - c_{W2}v]$$
$$-2(ur - wp) - x_G(pq + \dot{r}) + y_G(r^2 + p^2) - z_G(qr - \dot{p})$$

$$\dot{w} = \frac{1}{m}[\tilde{u}_1(\cos\Phi\cos\Theta) - c_{W3}w] - g$$
$$-2(vp - uq) - x_G(pr - \dot{q}) - y_G(qr + \dot{p}) + z_G(p^2 + q^2)$$

$$\dot{p} = \frac{l}{I_x}[\tilde{u}_2 - c_{W4}p] - \frac{1}{I_x}\{(I_z - I_y)qr - I_{zx}(pq + \dot{r}) + I_{yz}(r^2 - q^2)$$
$$+I_{xy}(pr - \dot{q}) + m[x_G(wr + vq) + y_G(\dot{w} - uq) - z_G(\dot{v} + ur)] + qI_{z,R}\omega_z\}$$

$$\dot{q} = \frac{l}{I_y}[\tilde{u}_3 - c_{W5}q] - \frac{1}{I_y}\{(I_x - I_z)pr - I_{xy}(qr + \dot{p}) + I_{zx}(p^2 - r^2)$$
$$+I_{yz}(pq - \dot{r}) + m[-x_G(\dot{w} + vp) + y_G(up + wr) + z_G(\dot{u} - vr)] - pI_{z,R}\omega_z\}$$

$$\dot{r} = K\frac{l}{I_z}[\tilde{u}_4 - c_{W6}r] - \frac{1}{I_z}\{(I_y - I_x)pq - I_{yz}(pr + \dot{q}) + I_{xy}(q^2 - p^2)$$
$$+I_{zx}(qr - \dot{p}) + m[x_G(\dot{v} - wp) - y_G(\dot{u} - wq) + z_G(vq + up)]\} \qquad (3.51)$$

The thrust coefficient $K$ characterizes the ratio of force-to-moment, the input variables $\tilde{u}_i$ are defined as:

$$\tilde{u}_1 = (F_1 + F_2 + F_3 + F_4)$$
$$\tilde{u}_2 = (F_1 - F_2 - F_3 + F_4)$$
$$\tilde{u}_3 = (-F_1 - F_2 + F_3 + F_4)$$
$$\tilde{u}_4 = (F_1 - F_2 + F_3 - F_4) \qquad (3.52)$$

$\tilde{u}_1$ represents the total thrust on the helicopter along the z-axis, $\tilde{u}_2$ and $\tilde{u}_3$ are the roll and pitch inputs, and $\tilde{u}_4$ is the yawing input.

With the equations 3.44 and 3.45, the inputs $\tilde{u}_i$ now can be rewritten in dependence on $\omega_i$:

$$\begin{pmatrix} \tilde{u}_1 \\ \tilde{u}_2 \\ \tilde{u}_3 \\ \tilde{u}_4 \end{pmatrix} = \begin{pmatrix} C_1 & C_1 & C_1 & C_1 \\ C_1 & -C_1 & -C_1 & C_1 \\ -C_1 & -C_1 & C_1 & C_1 \\ C_2 & -C_2 & C_2 & -C_2 \end{pmatrix} \begin{pmatrix} \omega_1^2 \\ \omega_2^2 \\ \omega_3^2 \\ \omega_4^2 \end{pmatrix} = C_a \begin{pmatrix} \omega_1^2 \\ \omega_2^2 \\ \omega_3^2 \\ \omega_4^2 \end{pmatrix} \qquad (3.53)$$

## 3.3. Stability analysis of Lyapunov

In the late 19th century A. M. LYAPUNOV investigated a theory for analysing the stability of nonlinear dynamic systems. Due to the growing interest of nonlinear systems, the theory gained importance in 1960th. The two methods of LYAPVNOV can be used for the study of stability of motion described by systems of ordinary differential equations, cp. [59, 115]. The classical approach for studying the stability of a dynamic nonlinear system like equation 3.51 is the use of LYAPUNOV theory. It consists in finding a definite positive function which decreases along the trajectories $\underline{x}(t)$ of the system considered, cf. [126]. The study of the stability matters begins with the time-invariant ordinary differential equation [42]:

$$\dot{\underline{x}}(t) = \underline{f}(\underline{x}(t), \underline{u}(t), t), \qquad (3.54)$$

with $\underline{x}$ as the state vector, and with the presupposition, that the solution for $t \geq t_0$ exists and is definite. The solution $\underline{x}(t)$ depends on the initial condition:

$$\underline{x}_0(t_0) = \underline{x}_0 \qquad (3.55)$$

To be able to investigate the stability of a special solution $\underline{x}_R$ of equation 3.54, a solution $\underline{x}(t)$ (disturbed motion) is considered, which is at the time $t = 0$ near $\underline{x}_R(t)$, and it is verified, whether it stays near $\underline{x}_R$ with increasing t.
Further, it is assumed that the reference solution $\underline{x}_R(t)$ of equation 3.54 is known:

$$\dot{\underline{x}}_R = \underline{f}(\underline{x}_R, \underline{u}, t), \qquad (3.56)$$

With the initial condition

$$\underline{x}_R(t_0) = \underline{a}. \qquad (3.57)$$

The reference solution can be bounded to $\underline{x}_R = \underline{0}$ with the transformation of the state variables. Now, the definition for stability or instability is searched. Hence, the deviation $\underline{\xi}(t)$ of the reference solution is allowed:

$$\underline{\xi}(t) = \underline{x}(t) - \underline{x}_R(t), \qquad (3.58)$$

according to equation 3.54 and 3.56 it is the differential equation of motion

$$\dot{\underline{\xi}} = \dot{\underline{x}} - \dot{\underline{x}}_R = \underline{f}(t, \underline{x}_R + \underline{\xi}, \underline{u}) - \underline{f}(t, \underline{x}_R) =: \underline{f}^*(t, \underline{\xi}, \underline{u}) \qquad (3.59)$$

 with the initial condition

$$\underline{\xi}(t_0) = \underline{\xi}_0 = \underline{x}_0 - \underline{a} \qquad (3.60)$$

according to equation 3.55 and 3.57. The considered solution $\underline{x}_R$ corresponds within the representation of $\underline{\xi}$ for all values of $t \geq 0$ to

$$\underline{\xi}(t) = \underline{0}, \qquad (3.61)$$

thus, it is a point in state space, which can be described as neutral position (equilibrium point) of the transformed system of equation 3.59 due to $\dot{\underline{\xi}} = \underline{0}$, cf. [126]. Because, the transformation is always possible, the stability can be interpreted as *stability of the equilibrium,* this is the neutral position of the origin of the state space $\underline{x} = \underline{0}$. From $\underline{\xi}$ it can be obtained if the (disturbed) solution $\underline{x}$ stays within the neighbourhood of the reference solution $\underline{x_R}$ (stability) or not (instability).

**Definition 3.1**

*The solution $\underline{x}_R(t)$ is stable, if for each $\in$ > 0 there exists a $\delta(\in)$ > 0, such that for $t \geq t_0$:*

$$\left\|\underline{\xi}(t)\right\| < \epsilon, \ \text{if} \ \left\|\underline{\xi}_0\right\| < \delta(\epsilon) \qquad (3.62)$$

**Definition 3.2**

*The solution $\underline{x}_R$ is asymptotically stable, if there exists a $\delta$ > 0, such that*

$$\lim_{t \to \infty} \left\|\underline{\xi}(t)\right\| = 0, \ \text{if} \ \left\|\underline{\xi}_0\right\| < \delta \qquad (3.63)$$

**Definition 3.3**

*The solution $\underline{x}_R$ is unstable if it is not stable*
Considering the first and second definition a solution is stable if, a neighbour-solution, which belongs to a different initial condition, remains around the neighbourhood or it tends to the reference solution. The restriction to a disturbance (deviation) on the initial condition, narrows the application of LYAPUNOV's stability analysis, cp. [102]. Usually, the solution $\underline{x}_R$ can not be determined analytically. But LYAPUNOV explored, that the state vector $\underline{\xi}(t)$ can be transformed into a scalar function. By use of the *direct* (or *second) method* of LYAPUNOV the stability of the trivial solution of equation 3.59 can be investigated, without solving the differential equations. This method combines characteristics of the total energy stored in the dynamic system with the stability behaviour.
For the investigation of the trivial solution, a scalar function (energy function) of the state $V(\underline{\xi})$, called a LYAPUNOV function, is needed. $V(\underline{\xi})$ must have continuous partial derivatives around $\underline{\xi} = \underline{0}$ with respect to all components of $\xi_i$ with the characteristic $V(\underline{0}) = 0$.

**Definition 3.4**

*A scalar function $V(\underline{\xi})$ is positive definite if a h > 0 exists, such that $V(\underline{\xi})$ > 0 ($V(\underline{\xi})$ < 0) for $0 < \|\underline{\xi}\| \leq h$.*
*A scalar function $V(\underline{\xi})$ is positive (negative) semidefinite if a h > 0 exists, such that $V(\underline{\xi}) \geq 0$ ($V(\underline{\xi}) \leq 0$) for $0 < \|\underline{\xi}\| \leq h$.*
*Non-definite and non-semidefinite functions are called indefinite. Odd orders are always indefinite.*

**3.3.1. Stability basics for autonomous differential equation of Lyapunov**

**Stability theorem 3.1**

*If one can find a positive definite function $V(\underline{\xi})$ for $\dot{\underline{\xi}} = \underline{f}^* (\underline{\xi})$ in the neighbourhood of $\underline{\xi} = \underline{0}$, whose derivative $\dot{V}$ is negative semidefinite, then the trivial solution $\underline{\xi} \equiv \underline{0}$ is LYAPUNOV stable.*

**Stability theorem 3.2**

*If one can find a positive definite function $V(\underline{\xi})$ for $\dot{\underline{\xi}} = \underline{f}^*(\underline{\xi})$ in the neighbourhood of $\underline{\xi} = \underline{0}$, whose derivative $\dot{V}$ is negative definite, then the trivial solution $\underline{\xi} \equiv \underline{0}$ is asymptotically stable.*

**Instability theorem 3.3**

*If one can find a function $V(\underline{\xi})$ for $\dot{\underline{\xi}} = \underline{f}^*(\underline{\xi})$ in the neighbourhood of $\underline{\xi} = \underline{0}$, whose derivative $\dot{V}$ is positive definite and $V$ can be positive for small values $\underline{\xi}$, then the trivial solution $\underline{\xi} \equiv \underline{0}$ is unstable.*

A positive definite function $\dot{V}(\underline{\xi})$ that satisfies $\dot{V}(\underline{\xi}) \leq 0$ is called LYAPUNOV function. A system is stable, if all trajectories for $t \to \infty$ end in the equilibrium point. The *global asymptotic stability* of the equilibrium point can be proved, if a continuously differentiable scalar function $V(\underline{\xi})$ exists, which is radially unbounded $\lim\|\underline{\zeta}\|\to\infty$ $V(\underline{\xi}) = \infty$ and if the stability theorem 3.2 is fulfilled. The radial unboundness of $V(\underline{\xi})$ is necessary, because level curves (in case of higher dimensions level planes respectively) of $V(\underline{\zeta})$ would be open otherwise. In consequence, it would be possible, that the state trajectories would drift away from the equilibrium point, although the state trajectories cross the level curves (or planes) with decreasing values.

The direct method of LYAPUNOV consists in finding suitable energy functions $V$ whose derivatives $\dot{V}$ are not indefinite. For instance, in [126] methods in finding LYAPUNOV functions are introduced, since it is not always easy to find such functions. Non-conservative dynamic systems[2] can often be compared with conservative systems and damping or stimulations are small. In these cases, one can choose the total energy of the system as LYAPUNOV function [102]. The total energy of simple systems consists of the sum of the squares of their variables. For this problem, LYAPUNOV considered a function $V(\underline{\xi})$ of quadratic form and presupposed, that a positive definite matrix P can be found, cp. [42]. The LYAPUNOV function is defined as:

$$V(\underline{\xi}) = \underline{\xi}^T \mathbf{P} \underline{\xi}. \qquad (3.64)$$

Thus, to be able to proof the stability of a dynamic system, one has to find a positive definite LYAPUNOV function $V$, whose derivative $\dot{V}$ is negative definite. The following example shows, that this procedure may cause problems (Example 3.5.3, [102]):

**Example 3.3:** The differential equation of motion of a spring-mass system with one DoF can be written as:

$$\ddot{y} + 2\delta\dot{y} + \omega_0^2 y = 0 \ , \quad \delta, \omega_0 \ > \ 0. \qquad (3.65)$$

[2]Most physical systems are non-conservative and different from conservative systems the total energy is decreased due to dissipation.

With $\xi_1 := y$, $\xi_2 := \dot{y}$ it can be written that:

$$\dot{\xi}_1 = \xi_2 \ , \quad \dot{\xi}_2 = -2\delta\xi_2 - \omega_0^2\xi_1 \qquad (3.66)$$

with the trivial solution $\underline{\xi} \equiv \underline{0}$. The function $V = \omega_0^2\xi_1^2 + \xi_2^2$ is positive definite and the derivative

$$\dot{V} = 2\omega_0^2\xi_1\dot{\xi}_1 + 2\xi_2\dot{\xi}_2 = \dots = -4\delta\xi_2^2. \qquad (3.67)$$

$V$ is negative semidefinite and the trivial solution $y \equiv 0$ and $\underline{\xi} \equiv \underline{0}$ respectively is LYAPUNOV-stable (stability theorem 3.1). But, the exact analytic solution would show, that $y \equiv 0$ is asymptotically stable. The stability theorem 3.1 underestimates the stability of the dynamic system. A system, which is identified by the stability theorem 3 as stable may be identified as asymptotically stable through finding a different LYAPUNOV function, but it would never be identified as unstable.

A system is asymptotically stable (stability theorem 3.2) if it can be proved, that $\dot{V}(\underline{\xi}) < 0$ and $\dot{V}(0) = 0$. If it can be ensured, that $\dot{V}(\underline{\xi}) \leq 0$, the state variables of the system are bounded, so that the system is LYAPUNOV stable. In special classes of dynamic systems, the *invariance principle* of BARBASHIN-KRASOVSKI-LASALLE [10, 69] can be applied, so that the asymptotic stability for $\dot{V}(\underline{\xi}) \leq 0$ can be proved.

### 3.3.2. Invariance principle of Barbashin-Krasovski-LaSalle

It is assumed that $\underline{\xi} = Q$ is the equilibrium point of an autonomous system and $\chi \subseteq IR^n$ is the neighbourhood of this origin. If a function $V(\underline{\xi}):\chi \to IR$ exists, such that $V(\underline{\xi})$ is on $\chi$ positive definite and $\dot{V}(\underline{\xi})$ is on $\chi$ negative semidefinite, then the equilibrium point $\underline{\xi} = 0$ is asymptotically stable, if the largest positive invariant set contained in the set $\{\underline{\xi} \in \chi | V(\underline{\xi}) = 0\}$ is M = {0}. Further, if the radial unboundness of $V(\underline{\xi})$ is shown, the globally asymptotic stability of the equilibrium point $\underline{\xi} = \underline{0}$ is proved.

The reconsideration of example 3.3 with the *invariance principle* shows, that the largest positive invariant set in the set of points $(\underline{\xi} \in \chi | \dot{V}(\zeta) = 0)$ is the equilibrium point $\underline{\xi} = \underline{0}$. Further, $V(\zeta)$ is radially unbounded, because $lim\|\underline{\xi}\| \to \infty$ $(V(\underline{\xi})) \to \infty$. Thus, it can be concluded, that the system described by equation 3.65 is globally asymptotic stable.

### 3.4. Control system development via Lyapunov theory

As already stated in chapter 1, four DoF of the 4-rotors-helicopter can be controlled directly, the remaining 2 DoFs can be controlled indirectly. Hence, the control system has to be divided into a position control subsystem and an attitude control subsystem. The x- and y-controllers generate the required roll and pitch control variables, the height and the yaw angle are controlled directly. By using this controller scheme, the 4-rotors-helicopter is able to reach a desired position (x, y, z) and heading $\Psi$. It is obvious from this point of view that primarily the rotations system and the height control system have to be global asymptotic stable.

For the development of nonlinear controllers, equation 2.5 is reconsidered:

$$\dot{\underline{x}} = \underline{f}(\underline{x}, \underline{u}),$$

with the state $\underline{x}$ and the input $\underline{u}$. A control law

$$\underline{u} = \underline{k}(\underline{x}) \tag{3.68}$$

shall be found, such that global asymptotic stability of the closed loop system

$$\dot{\underline{x}} = \underline{f}(\underline{x}, \underline{k}) \tag{3.69}$$

for the initial condition $\underline{x}(0) = \underline{x}_0$ within the desired value $\underline{x} = \underline{0}$ is guaranteed.

To be able to determine $\underline{k}(\underline{x})$, a positive definite, radial unbounded energy function $V(\underline{x})$ has to be found, fulfilling the requirement

$$\dot{V}(\underline{x}) = V_x(\underline{x})\underline{f}(\underline{x}, \underline{k}(\underline{x})) < 0, \ \underline{x} \neq \underline{0} , \tag{3.70}$$

cf. section 3.3.1.

### 3.4.1. Attitude control system

For the investigation of attitude control system, the differential equation of motion 3.51(4) is re-considered:

$$
\begin{aligned}
I_x \dot{p} = {} & l[\tilde{u}_2 - c_{W4}p] + (I_y - I_z)qr + I_{zx}(\dot{r} + pq) + I_{yz}(q^2 + r^2) \\
& + I_{xy}(\dot{q} + pr) - m(x_G(wr + vq) + y_G(\dot{w} - uq) \\
& - z_G(\dot{v} + ur)) + I_{z,Rotor}\omega_z q
\end{aligned} \tag{3.71}
$$

and it is assumed that $I_z \approx I_y$ and $I_{xy} = I_{xz} = I_{yz} = I_{z,R} \approx 0$. Thus, one can rewrite:

$$I_x \dot{p} = l[\tilde{u}_2 - c_{W4}p] - m(x_G(wr + vq) + y_G(\dot{w} - uq)$$
$$-z_G(\dot{v} + ur)) + I_{z,Rotor}\omega_z q. \qquad (3.72)$$

The differential equation of motion is assumed to be a simple system, so that the total energy is the sum of the squares of the variables. Thus, it can easily be found, that the energy of this second order system can be represented by the positive-definite Lyapunov function candidate:

$$V(\Phi, p) = \frac{1}{2}p^T I_x p + \frac{1}{2}e_{q\Phi}^T K_{P\Phi}e_{q\Phi} \qquad (3.73)$$

with $K_{P\Phi} > 0$ and $e_{q\Phi} = \Phi_{desired} - \Phi$. Then, the time derivative of equation 3.73 can be obtained to:

$$\dot{V}(\Phi, p) = \frac{d}{dt}V(\Phi, p) = p^T I_x \dot{p} + \frac{1}{2}p^T \dot{I}_x p + e_{q\Phi}^T K_{P\Phi}\dot{e}_{q\Phi}, \qquad (3.74)$$

so that the derivative of the LYAPUNOV function $V(\Phi,p)$ can be rewritten with equation 3.72:

$$\dot{V}(\Phi, p) = p^T \{l\tilde{u}_2 - lc_{W4}p - m[x_G(wr + vq) + y_G(\dot{w} - uq)$$
$$-z_G(\dot{v} + ur)] + \frac{1}{2}p^T \dot{I}_x p + e_{q\Phi}^T K_{p\Phi}\dot{e}_{q\Phi}\}. \qquad (3.75)$$

An asymptotically stabilizing feedback control is found by designing the control input $\tilde{u}^* = \tilde{u}_2$ so that the time derivative is negative definite in a region of the equilibrium point. For this simplified example a controller with PD-structure with a feedback term which compensates the CG-shift is chosen:

$$\tilde{u}^* = K_{P\Phi}\underbrace{(\Phi_{desired} - \Phi)}_{e_{q\phi}} - K_{D\Phi}p + m[x_G(wr + uq) + y_G(\dot{w} - uq) - z_G(\dot{v} + ur)] \quad (3.76)$$

now that one can show with $\dot{e}_{q\phi} = \frac{d}{dt}(\phi_{desired} - \phi) = -p$, and $\dot{I}_x = 0$, that the time derivative results to:

$$\dot{V}(\Phi, p) = -p^T K_{D\Phi}p - p^T lc_{W4}p, \qquad (3.77)$$

and it is obvious, that equation 3.77 is only negative semidefinite, i.e. $\dot{V}(\Phi,p) \leq 0$ so that only the simple stability for equilibrium can be shown. Further, the largest positive invariant set of the system in equation 3.72 under control is restricted only to the equilibrium point, so that local asymptotic stability is ensured. The global asymptotic stability is proved, because $V(\Phi,p)$ is radially unbounded, cf. section 3.3.2.

Thus, the global asymptotic stabilizing angular rotations controller can be rewritten to:

$$\tilde{u}_2 \;=\; \frac{1}{l}[K_{P\Phi}e_{q\Phi} - K_{D\Phi}p \\ + m(x_G(wr + vq) + y_G(\dot{w} - uq) - z_G(\dot{v} + ur))] \qquad (3.78)$$

Analogous, the controller for yaw and pitch can be derived:

$$\tilde{u}_3 \;=\; \frac{1}{l}[K_{P\Theta}e_{q\Theta} - K_{D\Theta}p \\ + m(-x_G(\dot{w} + vq) + y_G(up + wr) - z_G(\dot{u} - vr))] \qquad (3.79)$$

$$\tilde{u}_4 \;=\; \frac{1}{l}[K_{P\Psi}e_{q\Psi} - K_{D\Psi}p \\ + m(x_G(\dot{v} + wp) - y_G(\dot{u} + wq) + z_G(vq - up))] \qquad (3.80)$$

The same controller development procedure shown in this section can be performed to derive controllers for position.

### 3.4.2. Height control system

The aim of this section is to derive a height controller able to perform the simple task for the 4-rotors-helicopter of hovering at a desired height. With the assumption, that the CG-shift and the CORIOLIS terms can be neglected, the height controller can be obtained from equation 3.51 (3) as follows:

$$m\dot{w} \;=\; \tilde{u}_1 \cos\Phi \cos\Theta - c_{W3}w - mg \qquad (3.81)$$

With the assumption, that the system 3.81 is represented by the energy function

$$V(z, w) = \frac{1}{2}w^T m w + \frac{1}{2}e_{qw}^T K_{Pz} e_{qw} \qquad (3.82)$$

with $K_{Pz} > 0$ and $e_{qz} = Z_{desired} - z$. The time derivative of equation 3.82 is

$$\dot{V}(z, w) = \frac{d}{dt}V(z, w) = w^T m\dot{w} + \frac{1}{2}w^T \dot{m}w + e_{qz}^T K_{Pz} \dot{e}_{qz} \qquad (3.83)$$

so that the derivative of the LYAPUNOV function V(z, w) can be rewritten with equation 3.81:

$$\dot{V}(z, w) = w^T[\tilde{u}_1 \cos\Phi \cos\Theta - c_{W3}w - mg] + \frac{1}{2}w^T \dot{m}w + e_{qz}^T K_{Pz} \dot{e}_{qz} \qquad (3.84)$$

The control input $\tilde{u}^{**} = \tilde{u}_1 \cos\Phi \cos\Theta$ asymptotically stabilizes the system 3.81 the time derivative is negative definite in a region of the equilibrium point. By choosing the controller with PD-structure:

$$\tilde{u}^{**} = K_{Pz}\underbrace{(z_{desired} - z)}_{e_{qz}} - K_{Dz}w + mg \qquad (3.85)$$

it can be shown with $\dot{e}_{qz} = \frac{d}{dt}(z_{desired} - z) = -w,$ and $\dot{m} = 0$, that the time derivative results to the semidefinite function:

$$\dot{V}(z, w) = -w^T K_{Dz} w - w^T c_{W4} w. \qquad (3.86)$$

Analogous to the previous section and section 3.3.2 the global asymptotic height controller can be written as:

$$\tilde{u}_1 = \frac{1}{cos\Phi cos\Theta}[K_{Pz}(z_{desired} - z) - K_{Dz}w + mg]. \qquad (3.87)$$

Besides the nonlinear dynamic behaviour of the 4-rotors-helicopter, there is a further nonlinear effect: the so-called *ground-effect*. Because the lift increases near the ground, a simple height controller can not manage to overcome this effect. The investigation of the nonlinear lift increase near the ground lead to the approach of dynamically adapting the parameter $K_{Dz}$ in dependence of the height. Therefore, a hyperbolic tangent term is added into equation 3.87:

$$\tilde{u}_1 = \frac{1}{cos\Phi cos\Theta}\{K_{Pz}(z_{desired} - z) \\ -K_{Dz}\tanh[K_{tanh}(z + \epsilon_{tanh})]w + mg\}, \qquad (3.88)$$

with $K_{tanh} > 0$ and $\epsilon_{tanh} > 0$. The term $z + \epsilon_{tanh}$ depends on the actual height and prevents the *tanh* function from becoming zero. The variable $K_{Dz}$-term prevents the well known rapid descent of the quadrotor after leaving the ground-effect zone. Because, the tanh-term is always positive and non-zero, this approach does not effect the stability of the system.

### 4. Visually aided attitude determination

The most important feature of a vision system is, unlike other sensors, it can capture a representation of the surrounding. Thus, the images contain various information that can not be obtained with any other sensors. Because, visual sensors capture the light reflected from objects, while non-visual sensors use changes in physical quantities to make measurements.

A visual sensor system normally consists of a camera, digitizing hardware and processing software. The disadvantage of the visual sensor is the sensing time as the time necessary to capture, digitize and process the image is much longer than many other sensors, cf. [3]. Further, visual data produce a huge amount of data which depends on the resolution of the images and the capture frequency. Although, it is possible to visually determine helicopter's attitude very accurate, one has to find an optimum between processing time and storage capacity as well as accuracy.

Visual systems are subject to disturbances, e.g. different illuminations, reflections, weather conditions or noise, so that their use is restricted. Additional sensors can help to reduce errors caused by such effects. For instance, stereo cameras can be applied to determine ranges in the surrounding.

Because the inertial navigation solution has drift due to measurement noise, and bias of the IMU, a visual sensor system can be applied to improve the erroneous data, cf. table 4.1.

Table 4.1.: Complementary characteristics of INS and camera

| Property | INS | Camera |
|---|---|---|
| latency | low | high |
| long term accuracy | low | high |

(continued)

| Property | INS | Camera |
|---|---|---|
| short term accuracy | high | middle - high |
| availability | high | low |

### 4.1. Basics of image processing

### 4.1.1. CCD- and CMOS-cameras

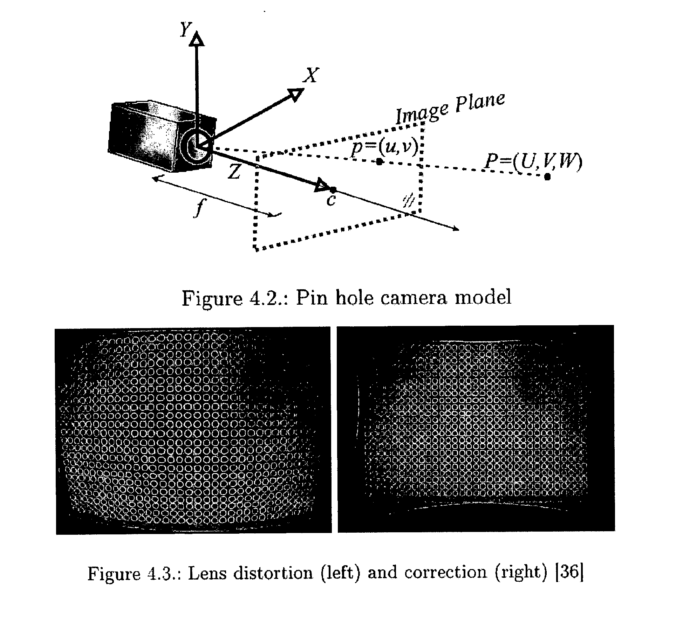

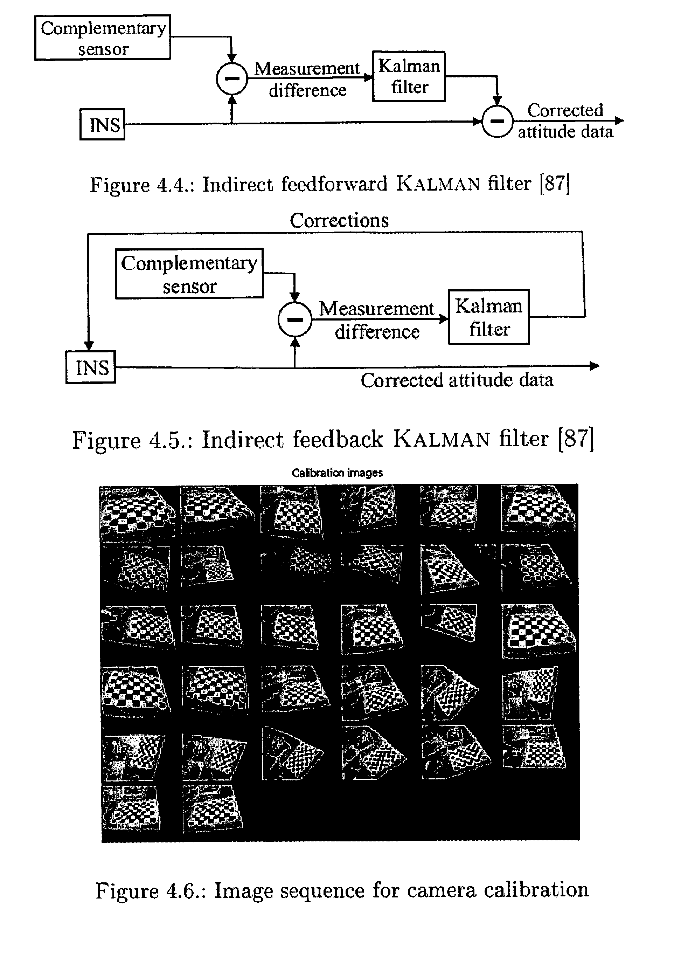

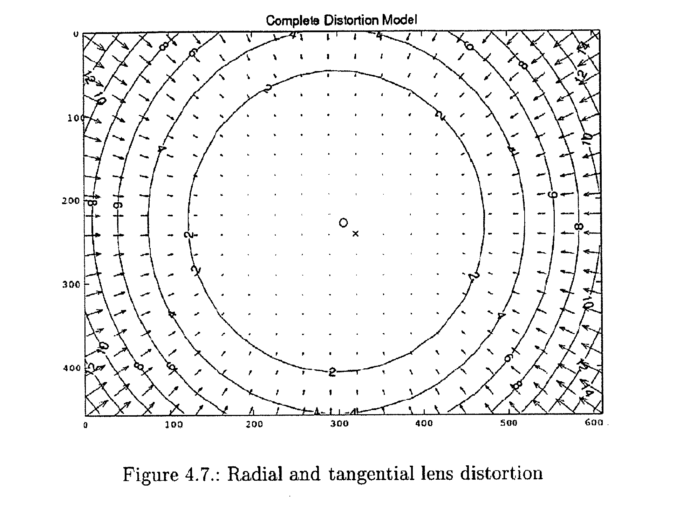

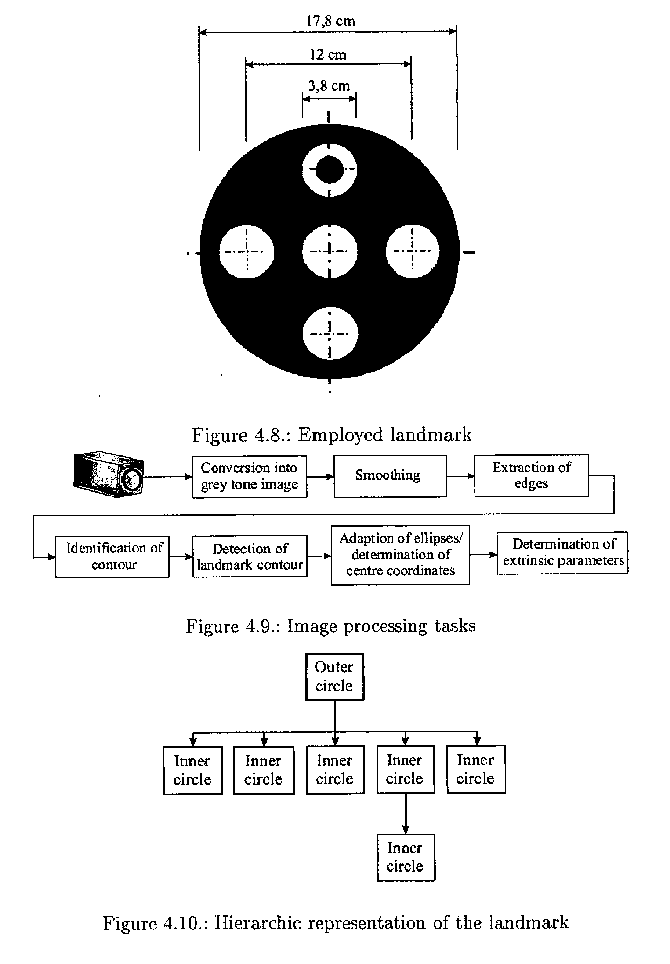

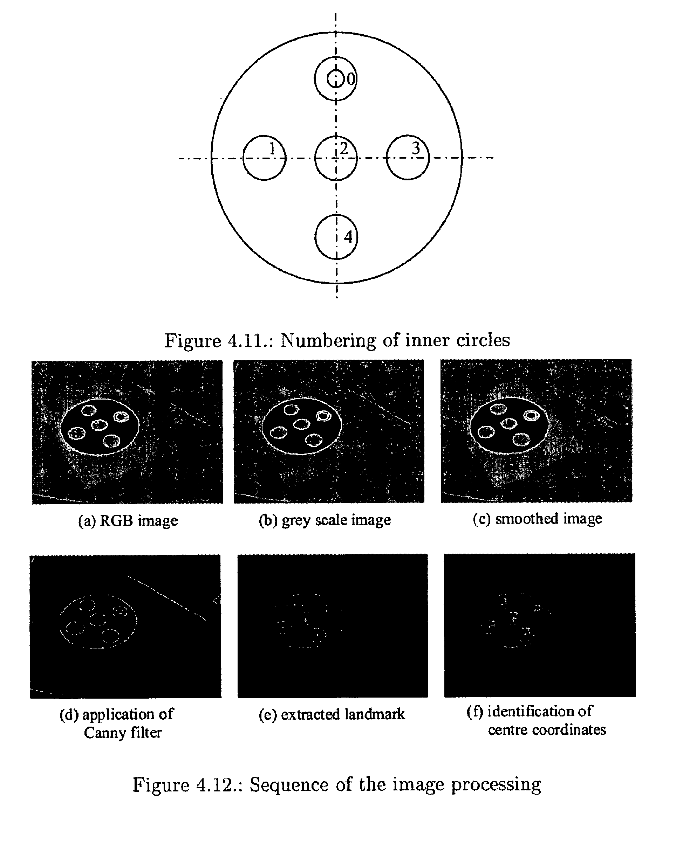

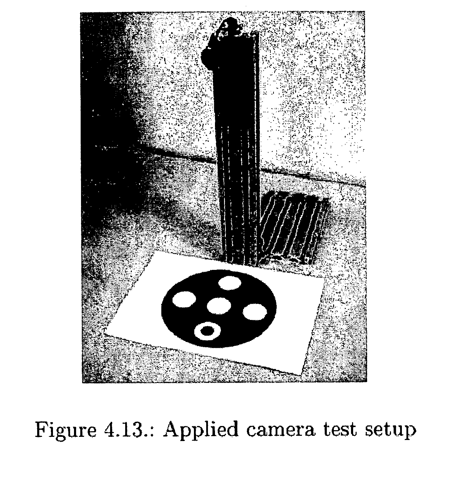

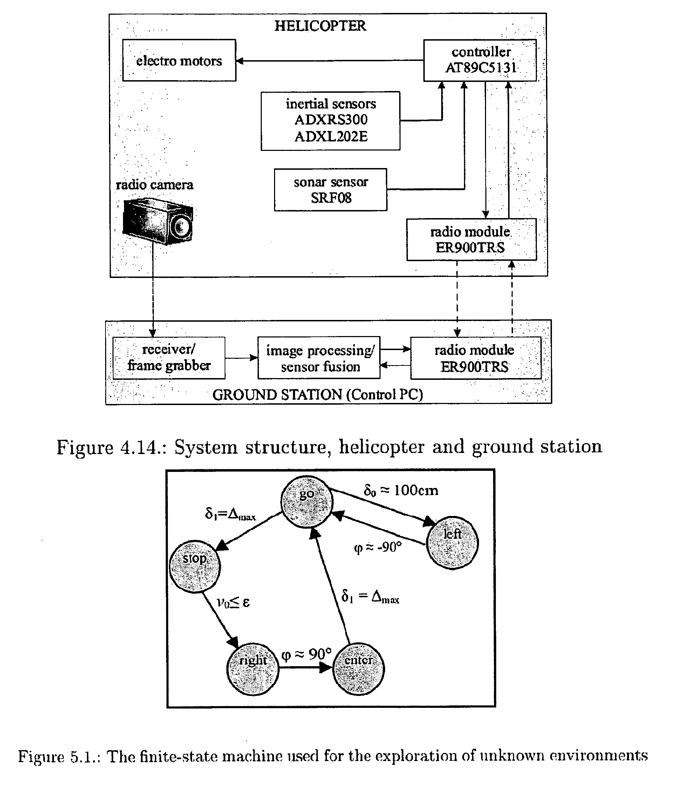

The attitude determination system needs digital image data. Cameras consist of lenses or lens-systems, which bundle the incident light and project it on a plane. In case of analogous cameras, this plane is the film. Digital cameras use solid state sensor technologies CCD (Charge-Coupled Device) or CMOS (Complementary Metal Oxide Semiconductor) image processing and, the incident light is transformed into electric signals. Both work like an array of solar cells, i.e. more light means more charge or current, respectively. The photo sensitive elements (pixels) of a CCD sensor operate as exposition meters accumulating charge and are read out in certain intervals. CMOS sensors continuously measure the light induced photo current. One uses the proportional relation between reverse current and exposure of a photo diode. The image sensor chips enable the construction of highly integrated cameras, cf. figure 4.1. The detailed

Figure 4.1.: Highly integrated camera with CCD-sensor [60]

function principles are described in e.g. [48, 60]. Although, the energy consumption and the manufacturing costs of CMOS sensors are lower than those of CCD-sensors, the image quality of CMOS sensors is often worse [48].

### 4.1.2. Camera model

The pinhole camera represents the first approximation model to the real optics of cameras. The beams of the light are projected through an infinitesimal hole[1] onto the image plane. The distance between the point c and the image plane is the focal length. The image plane provides a mirror-inverted copy of the real world. In a real pinhole camera, the projection is always focussed, independent of the location of the image plane. But, this is not the case for the optics typically mounted on a CCD camera, cp. [54].

[1] also known as optical centre

Figure 4.2.: Pinhole camera model

The camera frame is positioned in the centre of the lens, its z-axis points along the optical axes. The image frame is oriented as the camera frame but translated along the optical axis into the image plane. The pixel frame is oriented as the image frame, but coordinates in this frame are in pixels instead of meters. For a point $p = (u, v)^T$ in the camera frame and the corresponding 3D-point $P = (U, V, W)^T$ it is essential that:

$$u = \frac{f}{W}U, \qquad (4.1)$$

$$v = \frac{f}{W}V, \qquad (4.2)$$

u and v are the coordinates of the projected point $p$ onto the image frame (e.g. the sensor of the camera). By introducing the scaling factors $s_u$ and $s_v$, the position p can be described in pixel coordinates:

$$f_x = \frac{f}{s_u}, \qquad (4.3)$$

$$f_y = \frac{f}{s_v}, \qquad (4.4)$$

$s_u$ and $s_v$ correspond to the breadth and height of a pixel of the sensor of the camera. With the image centre c = ($c_x$, $c_y$)$^T$, which is build by the section of the optical axis and the image frame, it can be written that:

$$\begin{pmatrix} x \\ y \\ 1 \end{pmatrix} = \begin{pmatrix} f_x & 0 & c_x \\ 0 & f_y & c_y \\ 0 & 0 & 1 \end{pmatrix} \cdot \begin{pmatrix} u \\ v \\ 1 \end{pmatrix} = \mathbf{A} \begin{pmatrix} u \\ v \\ 1 \end{pmatrix}. \tag{4.5}$$

The variables $f_x$, $f_y$, $c_x$ and $c_y$ are the *intrinsic* parameters of the camera. Those are invariable, if the focal length of the camera is constant. The so-called *extrinsic* parameters $t_e$ and $R_e$ are determined by the positions of the body-fixed camera coordinate frame and the inertial frame. It is assumed, that $P_i = (X, Y, Z)^T$ is the corresponding point P in the inertial frame, so that:

$$P = \mathbf{R}_e P_i + t_e, \tag{4.6}$$

with the rotation matrix $\mathbf{R}_e = \begin{pmatrix} r_1 & r_2 & r_3 \\ r_4 & r_5 & r_6 \\ r_7 & r_8 & r_9 \end{pmatrix}$ and the translation vector $t_e = \begin{pmatrix} t_1 \\ t_2 \\ t_3 \end{pmatrix}$.

The connection of a point within the two dimensional image frame to a 3D-point within the inertial frame can be written as::

$$s \begin{pmatrix} u \\ v \\ 1 \end{pmatrix} = \mathbf{A}(\mathbf{R}_e t_e) \begin{pmatrix} X \\ Y \\ Z \\ 1 \end{pmatrix}, \tag{4.7}$$

with s as scaling factor.

### 4.1.3. Camera calibration

### 4.1.3.1. Elimination of lens distortion

Due to imperfect lenses or imprecise optical configurations, cameras only provide distorted images. In [44] a modelling approach of such distortions is introduced. These error influences are separated into a radial and tangential part. The distortion can be modelled as follows, cp. [46]: It is assumed, that $(x, y)$ is a point within an undistorted image and $(\hat{x}, \hat{y})$ is the corresponding point within the distorted image. The dependencies can be written as:

$$\hat{x} = x + x[k_1 r^2 + k_2 r^4] + [2p_1 xy + p_2(r^2 + 2x^2)], \tag{4.8}$$

$$\hat{y} = y + y[k_1 r^2 + k_2 r^4] + [2p_1 xy + p_2(r^2 + 2y^2)], \tag{4.9}$$

with $r^2 = x^2 + y^2$. The coefficients $k_1$ and $k_2$ determine the grade of the radial distortion, whereas the grade of the tangential distortion is determined by $p_1$ and $p_2$. The centre of the radial distortion corresponds to the centre of the camera image $(c_x, c_y)$. From these metric dimensions, the distortion $(\hat{u}, \hat{v})$ of the pixel coordinates $(u, v)$ can be determined:

$$\hat{u} \;=\; u + (u - c_x)x\{[k_1 r^2 + k_2 r^4] + [2p_1 xy + p_2(r^2 + 2x^2)]\}, \qquad (4.10)$$

$$\hat{v} \;=\; v + (v - c_y)y\{[k_1 r^2 + k_2 r^4] + [2p_1 xy + p_2(r^2 + 2y^2)]\} \qquad (4.11)$$

The application of this transformation yields a corrected image, cp. figure 4.3, right.

Figure 4.3.: Lens distortion (left) and correction (right) [36]

The parameters $k_1$, $k_2$, $p_1$ and $p_2$ are determined by calibrating the camera. In [136], an algorithm for the determination of these parameters is derived, which is also implemented in the library *OpenCV* [46].

### 4.1.3.2. Extrinsic parameters

The extrinsic camera parameters describe the pose of the camera in space. Conferring to equation 4.6 the relation of a point within the camera frame and a point within the inertial frame can be described by dint of the rotation matrix $\mathbf{R}_e$ and a translation $t_e$. For instance, the calibration method of ZHANG [136] enables the determination of $\mathbf{R}_e$ and $t_e$ by means of an image with planar pattern, if the initial pattern and the intrinsic parameters are known. For visually blended attitude determination systems, the determination of the rotation matrix $R_e$ is interesting. By this, the position of the camera and the aircraft respectively in correspondence to the image patterns can be determined. It can assumed, that a planar pattern deem on the *XY*-plane *(markers plane)* of the inertial frame, i.e. Z = 0, cf. [136]. With equation 4.7 one can write:

$$s \begin{pmatrix} u \\ v \\ 1 \end{pmatrix} = \mathbf{A}(r_1, r_2, r_3, t)^T \begin{pmatrix} X \\ Y \\ Z \\ 1 \end{pmatrix} = \mathbf{A}(r_1, r_2, r_3, t)^T \begin{pmatrix} X \\ Y \\ 0 \\ 1 \end{pmatrix} = \mathbf{A}(r_1, r_2, t)^T \begin{pmatrix} X \\ Y \\ 1 \end{pmatrix}, (4.12)$$

$r_1$, $r_2$ and $r_3$ are the column vectors of $R_e$. The point $P_M = (X, Y)^T$ lies within the plane of a pattern and $P_m = (u, v)^T$ is the corresponding point within the image frame. Equation 4.12 now is considered with $\hat{P}_M = (X, Y, 1)^T$ and $\hat{P}_m = (u, v, 1)^T$, such that the homography is

$$s\hat{P}_m = \mathbf{H}\hat{P}_M \text{ with } \mathbf{H} = \mathbf{A}(r_1, r_2, t)^T. \qquad (4.13)$$

The goal is to determine the $3 \times 3$ homography matrix H. $P_{M,i}$ are points within the markers plane and $P_{m,i}$ are the corresponding points within the image plane. Ideally, these points satisfy equation 4.13. In practise, the coordinates $P_{m,i}$ are subject to noise, so that measurement errors are caused. ZHANG solves this problem in [136] by implementing the *Maximum Likelihood Estimation,* such that an approximation for **H** can be determined. With the homography **H** the rotation matrix $\mathbf{R}_e$ and the translation vector $t_e$ can be written:

$$\begin{aligned} r_1 &= \lambda \mathbf{A}^{-1} h_1, \\ r_2 &= \lambda \mathbf{A}^{-1} h_2, \\ r_3 &= r_1 \times r_2, \\ t &= \lambda \mathbf{A}^{-1} h_3, \qquad (4.14) \end{aligned}$$

with $\lambda = \frac{1}{\|A^{-1}h_1\|} = \frac{1}{\|A^{-1}h_2\|}$. The variables $h_1$, $h_2$ and $h_3$ are the column vectors of H.

### 4.1.4. Detection of ellipses

A major objective in the field of object recognition and image processing is to adapt geometric models to image data. Especially in the object recognition it is advantageous, if the object to be recognized is given as a model, which imitates the object with geometric shapes such as circles or rectangles. Ellipses represent the perspectivic projection of circles. Therefore, that detection is often of significant importance. Some methods use variants of the HOUGH transformation, cf. [77, 133]. The HOUGH transformation produces a special parameter space. In this space, for every image point to be classified, all parameters of the geometric shape to be found are listed. The so-called HOUGH space is searched for accumulations, which correspond to the sought-after shape. By this procedure, any geometric objects can be recognized. The main disadvantage of this method is the huge processing time, so that the method is often not suitable for real-time applications. Different procedures use the principle of smallest-squares. For instance, the method of *Fitzgibbon* [39] uses this procedure. The conic section[2] can be written as:

$$F(\underline{a}, \underline{x}) = \underline{a} \cdot \underline{x} = ax^2 + bxy + cy^2 + dx + ey + f = 0, \qquad (4.15)$$

with $\underline{a}$ = [*a b c d e f*] and $\underline{x}$ = [$x^2$ *xy* $y^2$ *x y* 1]$^T$. $F(\underline{a}, x_i)$ is the algebraic distance of the point $x_i$ = (x, y) of the conic section. To be able to fit a conic section to an amount of points N, the squared distances of the points to the shape are minimized:

$$D_A(\underline{a}) = \sum_N^{i=1} F(\underline{a}, x_i)^2 \qquad (4.16)$$

[2]including circles and ellipses

To avoid the trivial solution $\underline{a}$ = $\underline{0}$ and to produce a better fit to a special conic section *ellipse,* the parameter vector $\underline{a}$ must satisfy different side conditions. The strict requirement for an ellipse is given by $b^2$ - $4ac$ < 0. This inequation causes problems at the calculation of equation 4.16. For instance, it is not ensured, that an ellipse can be fitted to the points. Hence, in [39] the side condition *4ac* - b$^2$ = 1 is proposed. Thus, this can be written with $\underline{a}^T C \underline{a}$ and

$$\underline{a}^T \begin{pmatrix} 0 & 0 & 2 & 0 & 0 & 0 \\ 0 & -1 & 0 & 0 & 0 & 0 \\ 2 & 0 & 0 & 0 & 0 & 0 \\ 0 & 0 & 0 & 0 & 0 & 0 \\ 0 & 0 & 0 & 0 & 0 & 0 \\ 0 & 0 & 0 & 0 & 0 & 0 \end{pmatrix} \underline{a} = 1 \qquad (4.17)$$

The minimization of equation can be solved by a generalized EIGEN value system, cf. [39]. The advantage of this method is, that an ellipse is always built during the approximation of the image points. Further, the procedure is very efficient, and therefore interesting for real-time applications.

### 4.2. Discrete Kalman filters

The KALMAN filter was firstly introduced in 1960 by *R. Kalman,* cp. [32, 62]: It is an optimal, recursive data processing algorithm which processes sensor measurements to estimate the states of the system using:

  1. a knowledge of the system and the measurement device dynamics

  2. a statistical model of the system model uncertainties, noises, measurement errors

3. initial condition information

4. Visually aided attitude determination

The KALMAN filter is using the same equations again and again, that is the recursive nature of the filter. It only requires the last value of the state of the system, cf. [32, 90]. The KALMAN filter contains an error model for all the systems involved, enabling the dynamic behaviour of the system errors to be modelled. The memory contains a current estimate for each term in the error model and this estimate, which is based on all previous measurements, is periodically updated. At the time of a new measurement, the difference in the outputs of the systems is predicted based on the current estimate of the errors in the systems. This difference is then used to update each of the estimates of the errors through a set of weighting coefficients. These coefficients are variables which are computed periodically in the system computer and are based on the assumed statistical error model for the errors. The filter takes into account the past history of the system including the effects of previously applied information and of the vehicle motions which affect the system errors, [24, 32].

Formally, the KALMAN filter tries to estimate the state $x \in IR^n$ of an process, controlled by discrete time periods, which is described by the linear, stochastic differential equation [129]:

$$x_k = \mathbf{A} x_{k-1} + w_{k-1} \qquad (4.18)$$

and the measurement

$$z_k = \mathbf{H} x_k + v_k \qquad (4.19)$$

with $z \in IR^m$. The random variables $w_k$ and $v_k$ represent the process and sensor noise.
It is assumed, that they are normal variables and independent. Thus, it is essential that:

$$p(w) \quad \sim \quad \mathbf{N}(0, \mathbf{Q}) \qquad (4.20)$$

$$p(v) \quad \sim \quad \mathbf{N}(0, \mathbf{R}) \qquad (4.21)$$

The n $\times$ n matrix A in equation 4.18 correlates the state to the previous discrete time $k$ - 1 with the actual space, whereas the $m \times n$-Matrix **H** in equation 4.19 correlates the time $k$ with the measurement $z_k$. It is required, that successive states are given in a linear equation system, that calculates the state $x_k$ with $x_{k-1}$. Analogous, the successive measurements must depend linearly on each other, cf. equation 4.19. Nonlinear relationships can be linearized or alternatively those can be treated with an Extended KALMAN Filter (*EKF*), cf. [129].

An *a-priori* $\hat{x}_k^- \in IR$ and an *a-posteriori* $\hat{x}_k \in IR$ can be defined for the state $x_k$. $\hat{x}_k^-$ in an estimate of the system state at the time $k$ without knowledge of the sensor data. Analogous, the estimate $\hat{x}_k$ is given with knowledge of the sensor data. Hence, the estimates of the errors can be defined:

$$e_k^- \quad \equiv \quad x_k - \hat{x}_k^-, \qquad (4.22)$$

$$e_k \quad \equiv \quad x_k - \hat{x}_k. \qquad (4.23)$$

Therefore

$$\mathbf{P}_k^- = \mathbf{E}[e_k^- e_k^{-T}] \qquad (4.24)$$

is the *a-priori* estimates-of-errors covariance and

$$\mathbf{P}_k = \mathbf{E}[e_k e_k^T] \qquad (4.25)$$

is the *a-posteriori* estimates-of-errors covariance. The α-*posteriori* state estimate can be written as:

$$\hat{x}_k = \hat{x}_k^- + \mathbf{K}(z_k - \mathbf{H}\hat{x}_k^-) \qquad (4.26)$$

with $\left(z_k - \mathbf{H}\hat{x}_k^-\right)$ as *residuum.* The value of the matrix K (KALMAN *gain matrix)* is continuatively adapted, such that the *a-posteriori* estimates-of-errors covariance in equation 4.25 is minimized. The equation

$$\mathbf{K}_k = \frac{\mathbf{P}_k^- \mathbf{H}^T}{\mathbf{H}\mathbf{P}_k^- \mathbf{H}^T + \mathbf{R}} \qquad (4.27)$$

is one possibility, cp. [129]. The detailed derivations can be found in e.g. [87]. It can be recognized, that K is increasing at a small estimates-of-errors covariance R, i.e. the residuum in equation 4.26 gains weight. Hence, the real measurement is more important. And, K tends to zero, if $\mathbf{P}_k^-$ tends to zero. In this case, the estimate is more trusted. Thus, K determines the influence of the ratio of the real measurement to the estimate of the system state in the actual system estimate.

A KALMAN filter performs two basic alternating processed operations: *Predict* and *Correct.* Thus, the calculations can be divided in two tasks. The first is the update of the time:

$$\hat{x}_k^- = \mathbf{A}\hat{x}_{k-1} \qquad (4.28)$$

$$\mathbf{P}_k^- = \mathbf{A}\mathbf{P}_{k-1}\mathbf{A}^T + \mathbf{Q} \qquad (4.29)$$

the second is represented by equation 4.26 and 4.27

$$\hat{x}_k = \hat{x}_k^- + \mathbf{K}(z_k - \mathbf{H}\hat{x}_k^-)$$

$$\mathbf{K}_k = \frac{\mathbf{P}_k^- \mathbf{H}^T}{\mathbf{H}\mathbf{P}_k^- \mathbf{H}^T + \mathbf{R}}$$

as well as

$$\mathbf{P}_k = (\mathbf{I} - \mathbf{K}_k\mathbf{H})\mathbf{P}_k^- \qquad (4.30)$$

as measurement updates. Thus, the predict function is calculating the equations. Equation 4.28 calculates the actual estimated system state without knowledge of the actual vector of measurements (*a-priori*). With equation 4.29 the a-priori estimates-of-errors covariance is updated. Q is the covariance of the process noise in equation 4.20. The predict function updates the KALMAN gain matrix. The equation corresponds to 4.27.

In a second step (Equation 4.26) the estimate of the system state is updated with the measurement $z_k$. Finally, the correction of the estimates-of-errors covariance in equation 4.30 is performed. The most important elements of the KALMAN filter are summarized in table 4.2.

### 4.2.1. Indirect Kalman filter

KALMAN filters are stochastic estimators and can be applied to mixed navigation systems. A number of navigational aids can be combined with an INS by means of the filter. The dissimilar properties of the error characteristics of an INS and the various position (attitude and velocities) aids is exploited by the KALMAN filter to achieve an overall accuracy and performance which is better than the individual systems, cp. [32].

The filter can be distinguished between the *direct* and *indirect* variants, cf. [87]. The direct KALMAN filter (*total state)* contains the real state variables, e.g. angular velocities, heading, etc. The measurements are the real sensor data. In this case, the filter is

Table 4.2.: Elements of KALMAN filters

| | |
|---|---|
| a-priori state | $\hat{x}_k$ |
| a-posteriori state | $\hat{x}_k^-$ |
| measurement | $z_k$ |
| state transformation matrix | A |
| matrix of measurements | H |
| process noise covariance | Q |
| measurement noise covariance | R |
| a-priori estimates-of-errors covariance | $\mathbf{P}_k^-$ |
| a-posteriori estimates-of-errors covariance | $P_k$ |
| KALMAN gain | $K_k$ |

connected to the INS. The filter has to process all data with the INS sampling frequency and a breakdown of the filter will cause a total breakdown of the system. Hence, due to the obvious disadvantages of the total state filter, the indirect KALMAN filter is often used, [26, 49, 50, 87, 129]. In this case, the state vector contains no absolute states, but errors of the INS. The idea is, to use the complementary properties of the different sensors and to give the sensor with the temporary best results a higher weight. The KALMAN filter estimates the difference between the different sensor signals, which is treated as measurement. Thus, the indirect KALMAN filter is also named *error* state or *complementary filter.* It can be divided into the indirect *feedforward* and the indirect *feedback* filter. The feedforward filter estimates the error continuatively and the INS data are corrected, see. figure 4.4. The attitude data is also provided, if the KALMAN

Figure 4.4.: Indirect feedforward KALMAN filter [87]

filter or the complementary sensor break down. The major disadvantage of this filter is, that the accumulated error is not corrected. And, in case of translational measurements with accelerometers it is necessary, that the gravitation vector is eliminated within the algorithms. This can only be performed, if the INS provides highly accurate attitude data, which is not the case. Hence, engineers often choose the feedback filter, cf. figure 4.5. This KALMAN filter is used for the continuatively calibration of the inertial

Figure 4.5.: Indirect feedback KALMAN filter [87]

sensors. In case of a breakdown of the filter or of the complementary sensor, the INS is calibrated with the previous corrections. Further, this filter can be operated with small update rates. Hence, the indirect KALMAN filter can be applied in systems with distributed subsystems, e.g. where the communication is restricted regarding data transfer, latency or reliability.

### 4.3. Visually aided attitude determination of 4-Rotors-Micro-Helicopters

The knowledge of the intrinsic camera parameters and of the grade of the lens distortion is an important precondition for a reliable attitude determination with camera images. For this purpose, the *Camera Calibration Toolbox*

*for Matlab* from Jean-Yves Bouget [22] was used. It is also implemented in the OpenCV-library. The Toolbox demands for an amount of images as input, showing a chess board pattern with different perspectives, cp. figure 4.6. Therefore, a sequence of images with a resolution of 640×480 were taken, cf. [108]. The parameters, which were determined with the

Figure 4.6.: Image sequence for camera calibration

toolbox, are shown in table 4.3. The radial and tangential distortion is illustrated in

Table 4.3.: Intrinsic camera parameters

| parameter | | value |
| --- | --- | --- |
| resolution | (w, h) | $640 \times 480$ |
| focal length | $f_x$ | 619,40021 |
| | $f_y$ | 647,09260 |
| image centre | $c_x$ | 330,21414 |
| | $c_y$ | 213,74388 |
| radial distortion | $k_1$ | -0,29551 |
| | $k_2$ | 0,17008 |
| tangential distortion | $t_1$ | -0,00179 |
| | $t_2$ | 0,00078 |

figure 4.7. The arrows indicate the extent of the distortion of certain points.

Figure 4.7.: Radial and tangential lens distortion

### 4.3.1. Employed landmark

The attitude of the camera can be determined indirectly by evaluating the perspectivic projection of a landmark on the image frame of the camera. A similar approach is followed in [130]. The landmark used in this work is pictured in figure 4.8. The landmark

Figure 4.8.: Employed landmark

consists of a huge circle containing five inner circles. One inner circle is marked with an additional inner circle. This is important, to be able to determine the yaw angle $\Psi$. The circle array was chosen, because of the applicability of the algorithm for the detection of ellipses (perspectivic projections of circles) [39]. Further, corrupted ellipses can be detected.

Although only the dimensional ratios of circles are important for the detection, the absolute dimensions can be taken from figure 4.8. Hence, the landmark can be used in any scale. Some special thought led to the choice of this landmark. Because, it is necessary to determine a number of points to be able to specify the extrinsic parameters of the camera (the attitude of the helicopter). Due to the low resolution of the camera (640x480) the identification of points within the camera image is very restricted. The recognition of the perspectivic projection of the circle (ellipse) enables the determination of its centre. The centre coordinates can be used as input for the attitude calculation. Due to the consideration of ellipses and the determination of their centres, the resolution of the attitude data is higher than the camera resolution is. Another advantage of the circle shape is the robust recognition in all perspectives. Disregarding the wrapping circle, five centre coordinates can be determined and the attitude can be calculated with the method introduced in section 4.1.3. According to [1] and [38], at least four coplanar points are necessary to solve the perspectivic n-point problem *(PnP).* That is, the perspectivic projection of these points onto the image frame yields an appropriate, univocal attitude. The number of five points is sufficient to achieve reliable measurements, cf. [108]. It is important, that all inner circles have the same diameter, because the centre coordinates of a circle are unequal to the centre coordinates of an ellipse, which is formed by perspectivic projection, see [94]. Hence, for small pitch and roll angles of the helicopter, all ellipses shall be above the same size, so that the central points of the ellipses have the same distance from the corresponding centre coordinates of the circle.

### 4.3.2. Image processing

For the visual extraction of attitude information with landmarks, as shown in figure 4.8, several tasks have to be processed, cp. figure 4.9.

Figure 4.9.: Image processing tasks

Conversion into grey tone image: For the tasks in this work, the colour information of the images is unimportant. Thus, the RGB-images are reduced to a corresponding grey tone image. (Figure 4.12(b))

**Smoothing:** Although the following CANNY filter proceeds a smoothing, it is necessary to add a further smoothing filter. Experiments in [108] have shown, that a GAUSSian filter with a 7 $\times$7 mask provides suitable results, cp. figure 4.12(c). Basics are introduced in [60].

**Canny filter:** The pre-treated image is processed by the CANNY filter, [28]. The filter is described by three parameters, that can be determined experimentally, [108]. The dimension of the GAUSSian filter mask is 3 $\times$ 3. The valiues for the hysteresis-thresholding are 100 for the upper and 50 for the lower threshold. By this, it was possible to obtain good results under challanging light condition, cf. figure 4.12(d).

**Extraction of edges:** The OpenCV library contains a method for the extraction of edges, cf. [45]. The basics are described in [37]. The pre-work yields an image with the outlines[3] of the ellipses of the landmark. These outlines can be recognized as contours by means of the hierarchic algorithm depicted in figure 4.10.
[3]line-width: one-pixel

Figure 4.10.: Hierarchic representation of the landmark

Adaptation of ellipses: For every potential landmark, recognized as a contour, an ellipse is adapted. This task is performed by the procedure introduced in section 4.1.4. For this, it is necessary, that every contour consits of six points. If it is possible to approximate all contours by ellipses, the processing can be continued. The contours within the image are compared with the areas of the inner circles, so that the landmark can reliably be recognized, cp. 4.12(e) [108].

Determination of centre coordinates: This task is the major presupposition for the determination of the extrinsic parameters. The centre coordinates are directly obtained by the algorithm for the detection of ellipses. The centre coordinates of the ellipses have to be matched to the inner circles of the landmark, cf. figure 4.12(f). The numbering of the circles is shown in figure 4.11.

Figure 4.11.: Numbering of inner circles
Figure 4.12.: Sequence of the image processing

### 4.3.3. Attitude determination

The procedure introduced in section 3.1.2 is used for the determination of the extrinsic parameters. The implementation in OpenCV enables the calculation of the lens distortions. Die late elimination of distorions is advantageous, because the correction has only to be performed for five points and not for all points of the image. The described algorithm uses the 2D-pixel coordinates in the camera frame and the 3D-coordinates of the landmark points, as shown in table 4.4. It is assumed, that the landmark lies within the xy-plane of the inertial frame. Although, the extrinsic parameters constist of a rotation matrix and a translation vector, only the rotation matrix is relevant. Thus, the ratios of the distances of the points can be described, and it is not necessary to describe the coordniates in metric units. With these specifications, the rotation matrix can be calculated and the angles $\Phi$, $\Theta$, $\Psi$ can be determined by dint of equation 3.6 to 3.8.

Table 4.4.: Centre coordinates of the circles of the landmark

| point number | coordinates | | |
|---|---|---|---|
| | x | y | z |
| 0 | 1 | 0 | 0 |
| 1 | 0 | 1 | 0 |
| 2 | 1 | 1 | 0 |
| 3 | 2 | 1 | 0 |
| 4 | 1 | 2 | 0 |

### 4.3.4. Noise of the visual attitude determination

The knowledge of the noise behaviour is especially important for the implementation of the KALMAN filter (measurement noise covariance). The accuracy of the attitude data was determined by means of a sequence of measurements with a static setup, shown in figure 4.13. The wireless camera was mounted in the upper part of the setup and two axes were rotatable. The distance between the landmark and the camera constituted 60 cm.

Figure 4.13.: Applied camera test setup

The measurements were performed by adjusting the angle of one axis. Every sequence consisted of 130 single measurements, so that the noise was determined. The measurements of the angle $\Phi$ and $\Theta$ were performed in 5˚-steps in the range 0˚-45˚. The setting angles of the camera were variated with a goniometer and a perpendicular. Similarly, the angle $\Psi$ was variated by rotating the landmark and the measurements were performed in 15˚-steps in the range 0˚-360˚. The results are summarized in table 4.5 and 4.6, the corresponding diagrams are shown in the appendix A. With this representation it can be recognized, that the noise of the yaw angle $\Psi$ is less by the power of ten than the noise of the angles $\Phi$ and $\Theta$. The standard deviation of the single measurments is a direct indicator for the intensity of the noise. The difference of the average value of the setting angles can be ascribed to the accuracy of the measurement utilities. The visibleness of the landmark was always sufficient due to the small distance between the camera and the landmark. Further, the position of the landmark within the camera image was unchanged during the measurements. The use of the camera on a helicopter system will cause stronger noise due to the movement of the landmark within the camera image.

Table 4.5.: Measurements for $\Phi$ and $\theta$

| setting angle [˚] | average [˚] value | standard deviation $\Phi$ [˚] | average value [˚] | standard deviation $\Theta$ [˚] |
|---|---|---|---|---|
| 0 | 0,22589 | 0,03140 | 0,01806 | 0,03591 |
| 5 | 4,99608 | 0,03377 | 4,80280 | 0,03236 |
| 10 | 9,92047 | 0,02376 | 9,45071 | 0,02517 |
| 15 | 14,88770 | 0,02587 | 15,41140 | 0,03307 |
| 20 | 20,04620 | 0,01751 | 19,61150 | 0,01812 |
| 25 | 24,98640 | 0,02245 | 24,99450 | 0,01805 |
| 30 | 30,17350 | 0,01829 | 30,40480 | 0,02579 |
| 35 | 35,32140 | 0,02120 | 34,44400 | 0,01456 |
| 40 | 40,30540 | 0,05633 | 40,58620 | 0,01344 |
| 45 | 45,07560 | 0,01745 | 45,83990 | 0,01566 |
| average value [˚] | | 0,02680 | | 0,02321 |
| variance [˚$^2$] | | 0,00072 | | 0,00054 |

## 4.4. Sensor fusion

The characteristics mentioned in table 4.1 let conclude, that the complementary coupling of an INS and a camera can provide long-term stable attitude data. Cameras are subject to huge latency times, due to the processing and digitizing of image data. Further, the wireless data transmission and the processing of the frame grabber card cause delay. The description of the determination of the delays between the acquisition of an image and the digital availability in the computer of the system can be found in section 7.3.2.

The small update rate is due to the sampling rate of the camera (25 Hz) and the image processing (40 ms per image). Further, it can not be guaranteed, that every image will

Table 4.6.: Measurements for $\Psi$

| setting angle [˚] | average [˚] value | standard deviation [˚] | setting angle [˚] | average value [˚] | standard deviation [˚] |
|---|---|---|---|---|---|
| 15 | 15,00480 | 0,00714 | 195 | 195,61000 | 0,00592 |
| 30 | 30,20330 | 0,00541 | 210 | 210,03900 | 0,00581 |
| 45 | 45,29860 | 0,00726 | 225 | 224,99000 | 0,00463 |
| 60 | 60,09750 | 0,00662 | 240 | 239,97100 | 0,00545 |
| 75 | 74,71490 | 0,00442 | 255 | 254,67900 | 0,00530 |
| 90 | 90,53120 | 0,00553 | 270 | 270,06500 | 0,05227 |
| 105 | 105,37600 | 0,00569 | 285 | 284,97900 | 0,00647 |
| 120 | 119,83600 | 0,00821 | 300 | 300,17100 | 0,00745 |
| 135 | 135,18600 | 0,01560 | 315 | 315,08000 | 0,01695 |
| 150 | 150,03500 | 0,01277 | 330 | 330,08800 | 0,00780 |
| 165 | 165,36100 | 0,01254 | 345 | 345,19500 | 0,00709 |
| 180 | 180,11900 | 0,00585 | 360 | 359,97400 | 0,00641 |

(continued)

| setting angle [°] | average [°] value | standard deviation [°] | setting angle [°] | average value [°] | standard deviation [°] |
|---|---|---|---|---|---|
| | | | average value [°] | | 0,00950 |
| | | | variance [°2] | | 0,00009 |

lead to attitude data. For instance, disturbances within the field of view or within the image can hamper the image processing. Further, it can be possible, that the landmark captured by the camera is too small for the attitude determination. The camera and

Figure 4.14.: System structure, helicopter and ground station

the ground station as well as the ground station and the controller board are connected via wireless link. The characteristics of these links are small band widths and delays. Further, it is possible, that the transmission path is disturbed so that data can get lost. These disadvantages led to the decision, not to use the camera data directly as input for the control loop, but to calibrate the gyroscopes and couple the sensor systems with a KALMAN filter, [108]. Hence, the control loop can always operate on basis of the inertial sensor's data.

Besides, in [130] a similar approach is introduced. The KALMAN filter is often applied to couple INS with complementary systems, cp. [26, 49, 50, 87, 129]. Primarily, the combination of INS/GPS with a KALMAN filter is outlined. In section 4.2.1 different kinds of the combination of an INS with complementary sensors are described. The non-direct implementation of the complementary sensor into the INS-system leads to the requirement for an error-state KALMAN filter. In [87] applications with sampling-rates up to minutes are introduced. The discrete KALMAN filter estimates the state of the dynamic system by means of a discrete model of the system. Hence, it is necessary to develop a suitable system model for the application in a helicopter. Another way could be the implementation of the dynamics of the helicopter. The state of the KALMAN filter would consist of the attitude data and additionally of the angular velocities. Further, the camera data must also provide angular velocities. This procedure would dramatically increase the efforts in developing the KALMAN filter.

In [107] a KALMAN filter is developed while avoiding the dynamic modelling of the system. Instead of that, a dynamic model of the drift of the sensor data of the gyroscopes is derived. On basis of relative attitude information (gyroscope) and absolute angular data a model is developed. The one-dimensional approach, introduced in [107], is now expanded for the 3D-case and transformed into a discrete model.

### 4.4.1. Sensor models

To be able to include the characteristics of the complementary sensors (gyroscopes and camera) in the sensor fusion, suitable sensor models have to be developed. The attitude data are subject to high frequent noise and to drift. These properties complicate the use of the attitude data with a KALMAN filter, because the resulting noise behaviour can not assumed to be GAUSSian distributed. Two independent noise processes can be modelled by the following method, cp. [107]:

$$\omega = \dot{\Phi} = \omega_m + b + n_r \qquad (4.31)$$

$\omega$ is the angular velocity and $\dot{\Phi}$ is the derivative of the corresponding angle $\Phi$. The real angular velocity can be determined with the measured (gyroscope) angular velocity $w_m$, which is superposed with a bias $b$ and the noise $n_r$. The parameter $n_r$ is assumed to be CAUSSian distributed, white noise with the variance $N_r$. $b$ is not a statistic parameter, but is caused by a further noise process, such that $b = n_w$ with a variance $N_w$. $b$ should not be mixed with the bias of the sensor data of the gyroscope, it is the difference between the calculated (estimated) angle and the real angle. Hence, b is the actual error in the angle calculation. The two noise processes are assumed to be independent. The sensor model of the complementary sensor (camera) is simpler, because the sensor data are drift-free. The data are only superposed with a single noise process. Hence, it is essential for one axis that:

$$\Phi_c = \Phi_{true} + n_{c\Phi}. \qquad (4.32)$$

This white noise is also assumed to be GAUSSian distributed.

### 4.4.2. Indirect (error-state) Kalman filter

By means of these sensor models, Roumeliotis et al. [107] developed an indirect feedback KALMAN filter according to [87]. Analogous with equation 4.31 it is essential for the real angular velocity $\dot{\Phi}_{true}$:

$$\dot{\Phi}_{true} = \omega_{true} = \omega_i + b_{true} + n_r \qquad (4.33)$$

$W_i$ is the sensor value of the gyroscope and $\dot{b}_{true} = n_w$. In matrix notation it can be written:

$$\frac{d}{dt}\begin{pmatrix} \Phi_{true} \\ b_{true} \end{pmatrix} = \begin{pmatrix} 0 & 1 \\ 0 & 0 \end{pmatrix}\begin{pmatrix} \Phi_{true} \\ b_{true} \end{pmatrix} + \begin{pmatrix} 1 \\ 0 \end{pmatrix}\omega_i + \begin{pmatrix} n_r \\ n_w \end{pmatrix} \qquad (4.34)$$

The calculated angle $\Phi_i$ results from the iteration of the angular rate $\omega_i$. Thus, it can be written that:

$$\dot{\Phi}_i = \omega_i + b_i \qquad (4.35)$$

$b_i$ is a constant bias, which is estimated for the sensor data of the gyroscope. Hence, it is essential that $\dot{b}_i = 0$. For simplification, the bias is assumed to be small, so that it is neglected. For the integrator of the INS, the following process can be written:

$$\frac{d}{dt}\begin{pmatrix} \Phi_i \\ b_i \end{pmatrix} = \begin{pmatrix} 0 & 1 \\ 0 & 0 \end{pmatrix}\begin{pmatrix} \Phi_i \\ b_i \end{pmatrix} + \begin{pmatrix} 1 \\ 0 \end{pmatrix}\omega_i \qquad (4.36)$$

The subtraction of equation 4.33 and 4.34 yields:

$$\begin{aligned} \Delta\dot{\Phi} &= \dot{\Phi}_{true} - \dot{\Phi}_i = \omega_i + b_{true} + n_r - (\omega_i + b_i) \\ &= b_{true} - b_i + n_r = \Delta b + n_r \end{aligned} \qquad (4.37)$$

with $\Delta\Phi$ as angle error and $\Delta b$ as bias errors. By use of the subtraction, $\omega_i$ was eliminated. With $\dot{b}_i = 0$ and $b_{true} = n_w$, it can be written that:

$$\Delta\dot{b} = \dot{b}_{true} - \dot{b}_i = n_w. \qquad (4.38)$$

With equation 4.37 and 4.38 the system model for the KALMAN filter can be obtained:

$$\frac{d}{dt}\begin{pmatrix} \Phi \\ b \end{pmatrix} = \begin{pmatrix} 0 & 1 \\ 0 & 0 \end{pmatrix}\begin{pmatrix} \Delta\Phi \\ \Delta b \end{pmatrix} + \begin{pmatrix} n_r \\ n_w \end{pmatrix}. \qquad (4.39)$$

The measurement for the filter is defined and difference between the camera measurements and the calculated angles of the INS:

$$\Delta z = \Phi_c - \Phi_i = \Phi_{true} + n_{c\Phi} - \Phi_i$$
$$= (1\ 0)\begin{pmatrix} \Delta\Phi \\ \Delta b \end{pmatrix} + n_{c\Phi} \tag{4.40}$$

Because $n_r$ and $n_w$ are assumed to be independent, the process noise matrix can be written as:

$$\mathbf{Q} = \begin{pmatrix} N_r & 0 \\ 0 & N_w \end{pmatrix},$$

i.e. it is a diagonal matrix. The measurement noise covariance only consists of one element, such that $R_m = (N_{c\Phi})$.
For the application in this work, the model introduced in [107] has to be expanded: The continuative model has to be discretised for the implementation into a KALMAN filter:

$$\begin{pmatrix} \Phi \\ b \end{pmatrix}_k = \begin{pmatrix} 1 & 1 \\ 0 & 1 \end{pmatrix}\begin{pmatrix} \Delta\Phi \\ \Delta b \end{pmatrix}_{k-1} + \begin{pmatrix} n_r \\ n_w \end{pmatrix}. \tag{4.41}$$

Further, the helicopter can move with three rotational degrees of freedom, so that the model has to be adapted to the 3D-case. Hence, the final model can be written as:

$$\begin{pmatrix} \Delta\Phi \\ \Delta b_\Phi \\ \Delta\Theta \\ \Delta b_\Theta \\ \Delta\Psi \\ \Delta b_\Psi \end{pmatrix}_k = \begin{pmatrix} 1 & 1 & 0 & 0 & 0 & 0 \\ 0 & 1 & 0 & 0 & 0 & 0 \\ 0 & 0 & 1 & 1 & 0 & 0 \\ 0 & 0 & 0 & 1 & 0 & 0 \\ 0 & 0 & 0 & 0 & 1 & 1 \\ 0 & 0 & 0 & 0 & 0 & 1 \end{pmatrix}\begin{pmatrix} \Delta\Phi \\ \Delta b_\Phi \\ \Delta\Theta \\ \Delta b_\Theta \\ \Delta\Psi \\ \Delta b_\Psi \end{pmatrix}_{k-1} + \begin{pmatrix} n_r \\ n_w \\ n_r \\ n_w \\ n_r \\ n_w \end{pmatrix}$$

$$= \Delta x_k = \mathbf{A}\Delta x_{k-1} + w. \tag{4.42}$$

Analogous, the measurement for the 3D-case can be defined:

$$\begin{pmatrix} \Delta\Phi_m \\ \Delta\Theta_m \\ \Delta\Psi_m \end{pmatrix}_k = \begin{pmatrix} 1 & 0 & 0 & 0 & 0 & 0 \\ 0 & 0 & 1 & 0 & 0 & 0 \\ 0 & 0 & 0 & 0 & 1 & 0 \end{pmatrix}\begin{pmatrix} \Delta\Phi \\ \Delta b_\Phi \\ \Delta\Theta \\ \Delta b_\Theta \\ \Delta\Psi \\ \Delta b_\Psi \end{pmatrix}_k + \begin{pmatrix} n_{c\Phi} \\ n_{c\Theta} \\ n_{c\Psi} \end{pmatrix}$$

$$= \Delta z_k = \mathbf{H}\Delta x_k + v. \tag{4.43}$$

It is assumed, that the three independent gyroscopes are superposed by the same drift and noise. The process noise matrix is a diagonal matrix:

$$Q = \begin{pmatrix} N_r & 0 & 0 & 0 & 0 & 0 \\ 0 & N_w & 0 & 0 & 0 & 0 \\ 0 & 0 & N_r & 0 & 0 & 0 \\ 0 & 0 & 0 & N_w & 0 & 0 \\ 0 & 0 & 0 & 0 & N_r & 0 \\ 0 & 0 & 0 & 0 & 0 & N_w \end{pmatrix}. \qquad (4.44)$$

The noise of the angles, obtained from the camera data, is defined as different and independent. In reality, this is not the case, because bad images will cause comparably bad measurement data. Nevertheless, this simplification is assumed to be satisfying.

Thus, the measurement noise covariance matrix is:

$$\mathbf{R} = \begin{pmatrix} N_{c\Phi} & 0 & 0 \\ 0 & N_{c\Theta} & 0 \\ 0 & 0 & N_{c\Psi} \end{pmatrix}. \qquad (4.45)$$

## 5. Behaviour based navigation

### 5.1. Exploration of unknown environments

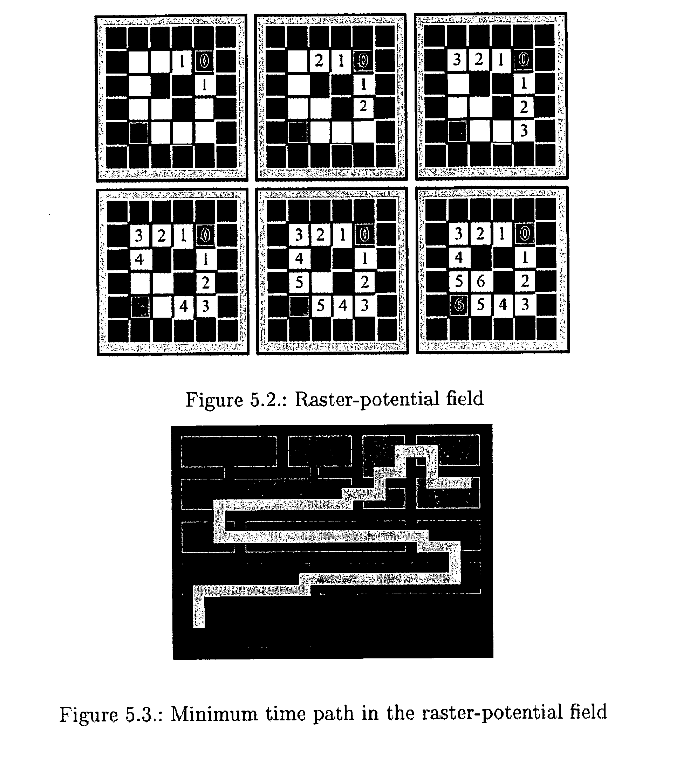

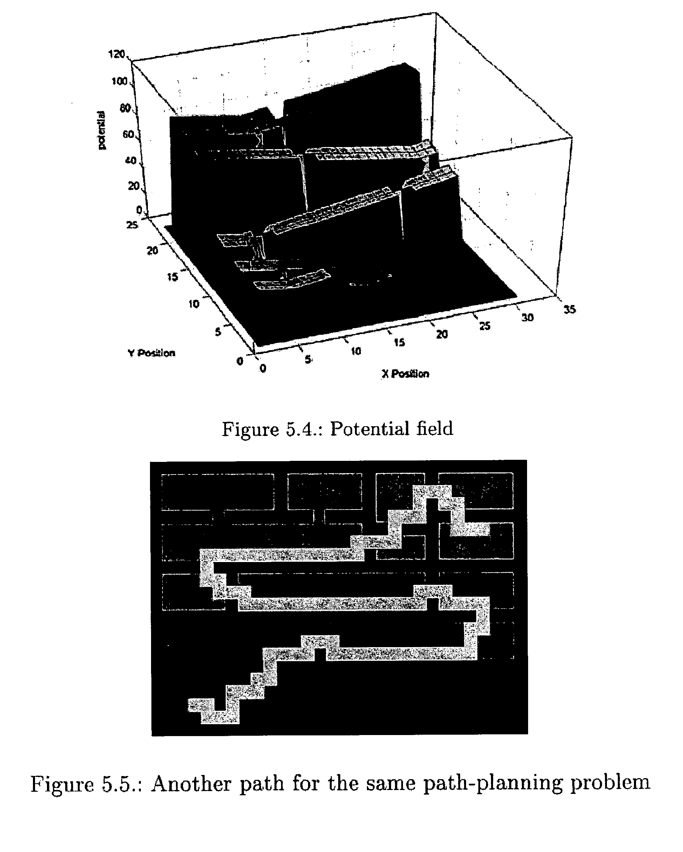

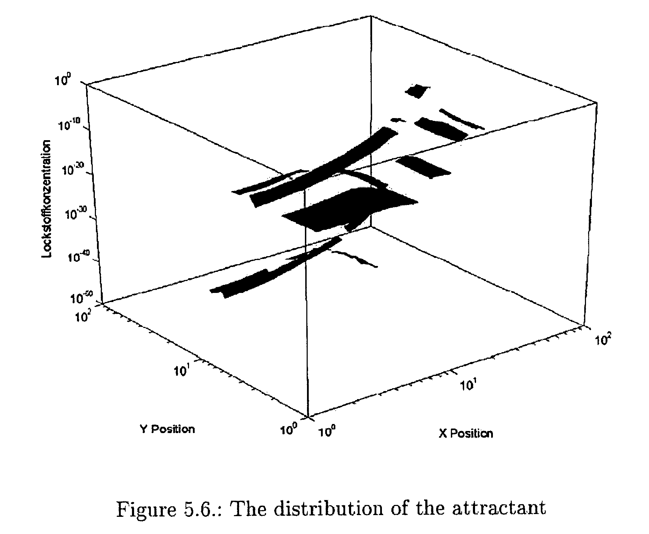

An important task for autonomous robots is the exploration of an unknown environment and to generate a map of the reconnoitred area (used for path-planning), cp. [83]. Figure 5.1 shows the finite-state machine which enables the robot to explore a surrounding. Each state consists of a controlling element to perform the special goal. The Figure 5.1.: The finite-state machine used for the exploration of unknown environments system starts in the state "*go*" which makes the robot follow a wall until the value of the distance-sensor to the front approaches one ($\delta_0 \approx 100$cm) or the distance-sensor to the side is out of its measuring range ($\delta_1 = \triangle_{max}$). The transition to the *"left"* is fired when the robot encounters a wall in the front. The controlling element in that state will initiate a 90° rotation along the yaw-axis and the robot will return to the state *"go"*. If the sensor attached to the right side of the blimp is out of range, the *"stop"* will become the active state resulting in a rotation to the right after the system has stopped ($v_0 \leq \in_{min}$). The system assumes that it has found a door to its right side and turns its front towards it. The state "*enter*" makes the robot enter a room and the state "*go*" will be re-entered afterwards.

That method is similar to the backtracking-problem and enables the system to explore the unknown area. During the flight a map, representing the already covered area, is drawn.

### 5.2. Path planning

In [16] and [70] the artificial potential field approach is introduced. This approach is also knows as the *virtual force field method* (VFF). The idea is that a robot moves in a virtual field of forces in which the desired position for the robot is an attractive pole and obstacles generate repulsive forces.

The attracting and repulsive forces can be calculated by using different equations. Borenstein et al. suggest in [16] the repulsive force, pushing the robot away from obstacles to be:

$$F_a(i,j) = \frac{F_{cr}C(i,j)}{d^2(i,j)} \left[ \frac{x_t - x_0}{d(i,j)}\hat{x} + \frac{y_t - y_0}{d(i,j)}\hat{y} \right] \qquad (5.1)$$

where

$F_{cr}$ = the repelling force
d(i, j) = the distance between cell (*i,j*) and robot
$C(i,j)$ = certainty level of cell (*i,j*)
$x_0, y_0$ = the present coordinates of the robot
$x_i, y_i$ = coordinates of cell (*i, j*)

whereby the attracting force, pulling the robot towards the target is given by:

$$F_r(i,j) = F_{ct}\left[\frac{x_t - x_0}{d(t)}\hat{x} + \frac{y_t - y_0}{d(t)}\hat{y}\right] \tag{5.2}$$

where

$F_{ct}$ = the constant force attracting the robot to the target
d(t) = the distance between the robot and the target
$x_t, y_t$ = the coordinates of the target

Taking into account that the blimp ought to travel closely to walls, which are interpreted as obstacles, the repulsive forces tend to push the robot away from these objects. Therefore the repulsive force is not considered when generating the virtual force field for the blimp.

Many algorithms providing the calculation of the attracting force field suffer the local minimum trap problem which can be solved by a raster-potential field for minimum time path planning. Figure 5.2 shows the stepwise construction of a raster-potential field. The black boxes represent walls or other solid obstacles. The initial potential

Figure 5.2.: Raster-potential field

at the goal (red box) is zero. In the first step, each cell, neighbouring a cell which has already been equipped with a potential is given the potential of the neighbouring cell with the increment of one. This step is iterated until the whole grid is calculated. Because the robot is supposed to perform rotations fixed to 90˚, only the four direct neighbours are influenced by one cell. Using this method to calculate a raster-potential field, the result is shown in figure 5.3. The green areas are close to the target and

Figure 5.3.: Minimum time path in the raster-potential field

the red cells indicate a long distance to the goal. A path can be found by moving from the current cell (position of the robot) to the neighbouring cell with the lowest potential. Figure 5.4 gives a three-dimensional impression of the resulting force field. The potential field is independent from the starting position of the robot. Therefore it is not necessary to generate a new potential field for each starting position. Another

Figure 5.4.: Potential field

method to calculate the attracting force is inspired by the flight of a bee approaching an attractant (nectar, etc.). The potential for a cell can be retrieved by [123]:

$$\frac{1}{\epsilon + \eta} \cdot \sum_{n=1}^{4} pot(n)$$

where

$\epsilon$ = the rate of chemical decomposition
$\eta$ = number of adjoining cells, not occupied by an obstacle
pot(n) = the potential of neighbouring cell(n)

The resulting path is shown in figure 5.5. The path surpasses the room to the right of the starting position whereas the first planned path did not. The cumulative percentage of changing the orientation is not desirable. Figure 5.6 shows the corresponding virtual

Figure 5.5.: Another path for the same path-planning problem

attracting force to the target.

Figure 5.6.: The distribution of the attractant

### 5.2.1. Tree-Search

The disadvantage of using the VFF-method is that the resulting path is fixed to the mathematical formula used to generate the force field. Tree-search algorithms are able to find all solutions to the path-planning problem, and not just a single one. Thus paths can be investigated regarding the best flight-route and the set always contains the minimum time path. Due to the fact that algorithms like depth- or breath-search use a lot of computational time (especially in complex spaces) and considering that the path resulting from the raster-potential field is always a minimum-time path, the VFF method (simplified to the raster-potential field) was used to compute all trajectories henceforward.

### 5.3. Conclusion

The path-planning has been investigated regarding the virtual-force-field method and its modifications (potential-field and attractant distribution) as well as tree-search algorithms. Table 5.1 compares the used methods regarding their computing time and quality of solution. The weighting function for the solution quality turns its attention on the length of the retrieved path and shifts in direction. The path ought to be as short as possible and as straight as feasible. Taking into consideration that the micro controller of the unmanned vehicle does not have the means to provide complex algorithms, the potential-field method has been chosen to carry out the path-planning, [83, 84].

Table 5.1.: Comparison of path-planning methods

| method | computing time | memory requirements | quality of solution |
|---|---|---|---|
| virtual force field | + | ++ | + |
| potential field | ++ | ++ | ++ |
| attractant distribution | O | + | - |
| tree-search | -- | - | ++ |

### 6. Simulations

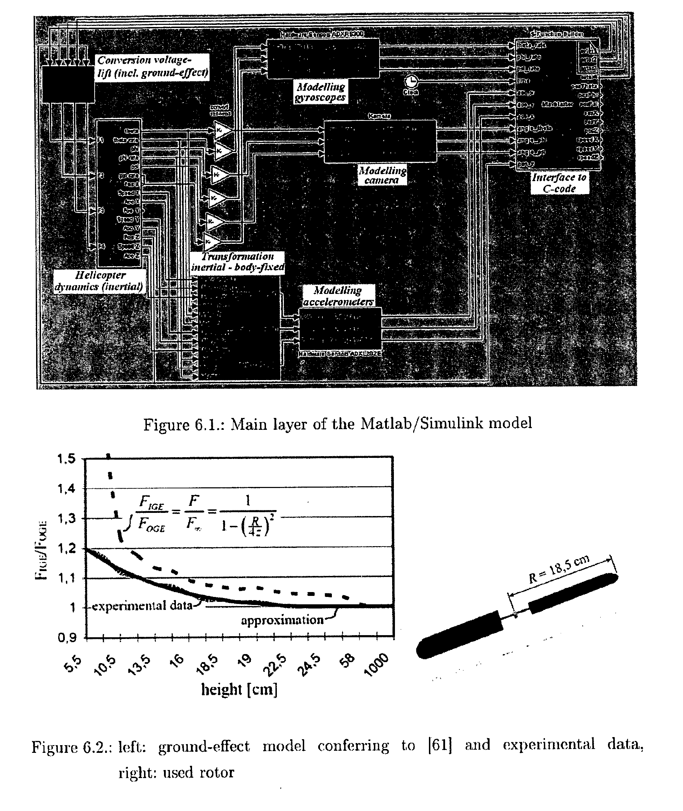

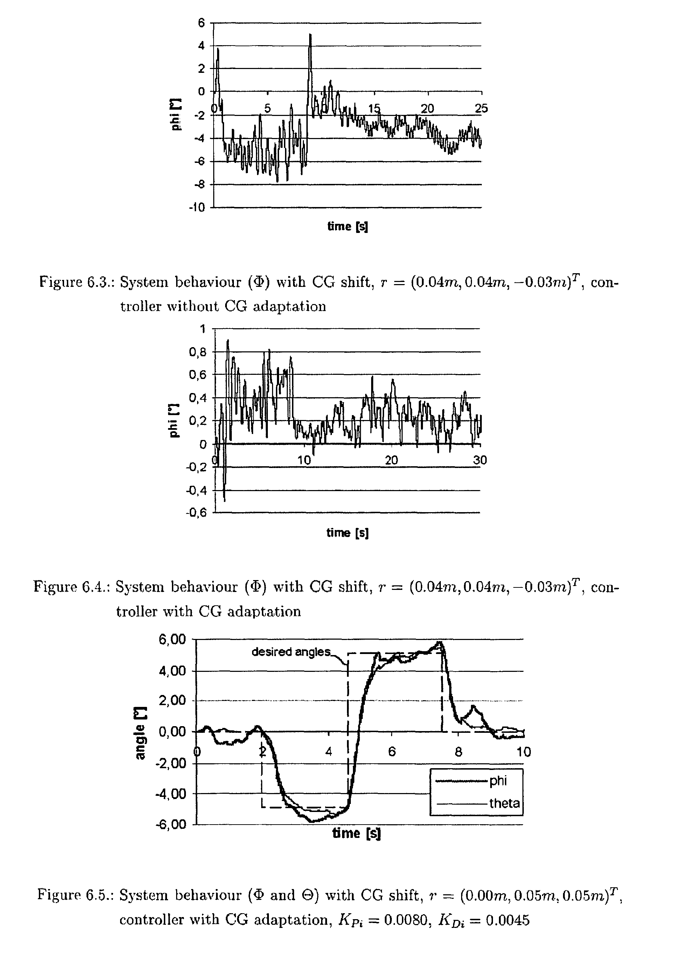

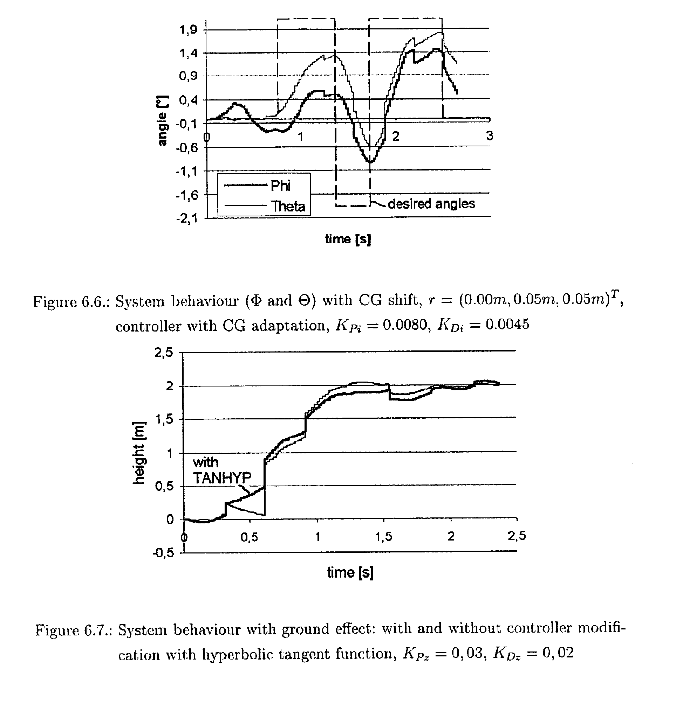

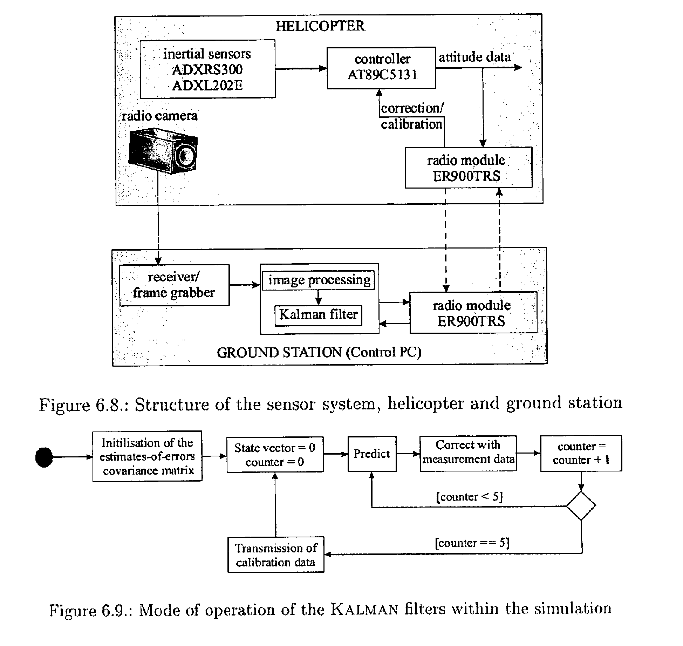

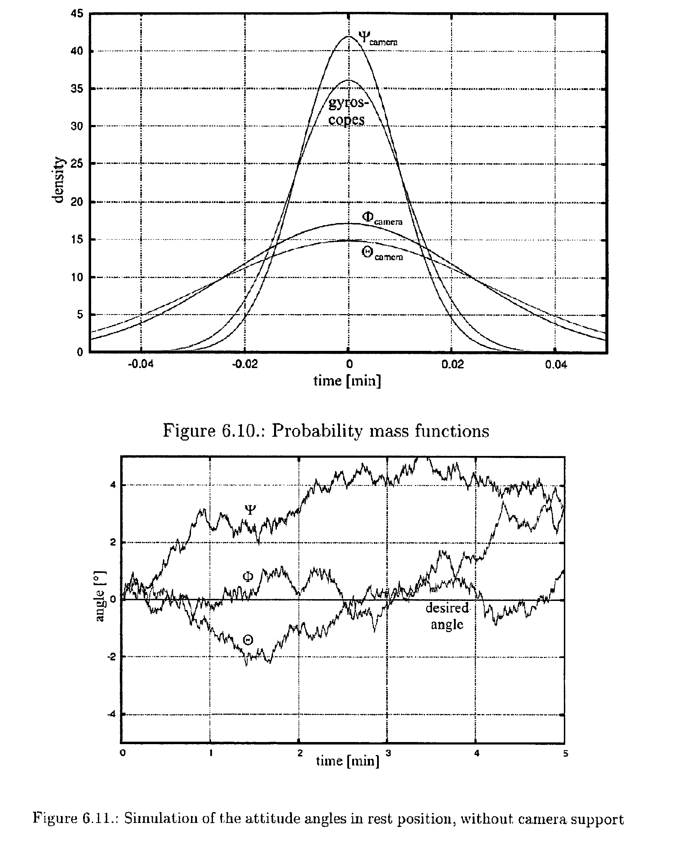

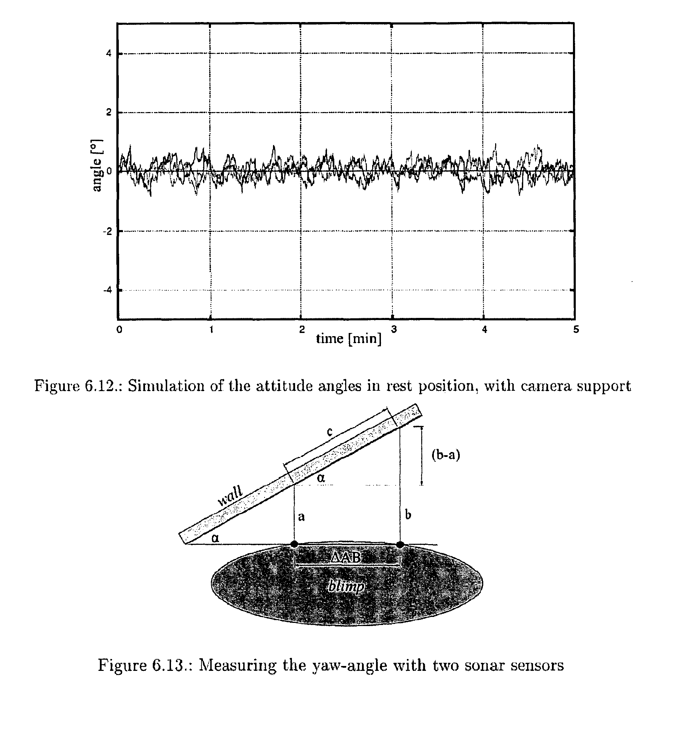

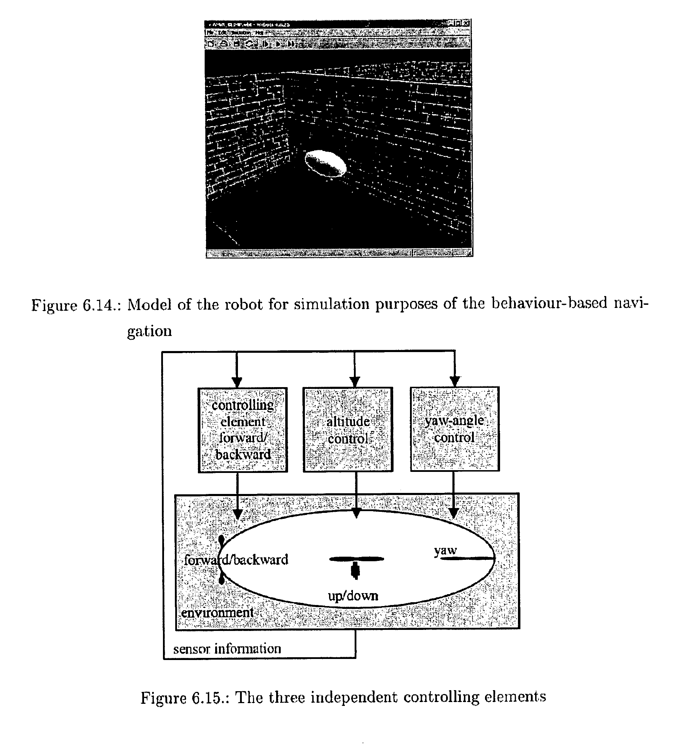

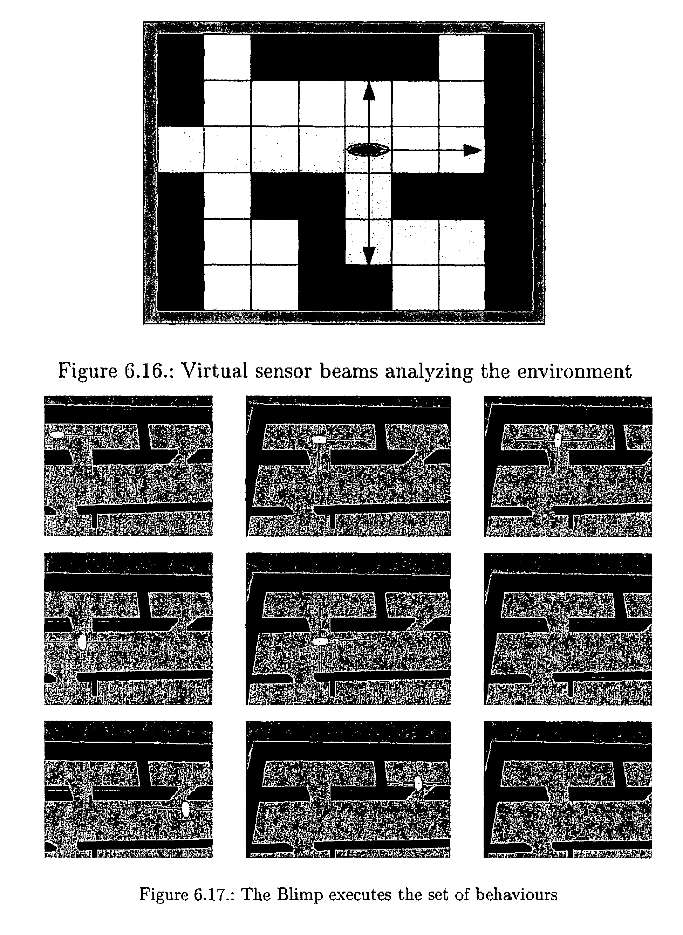

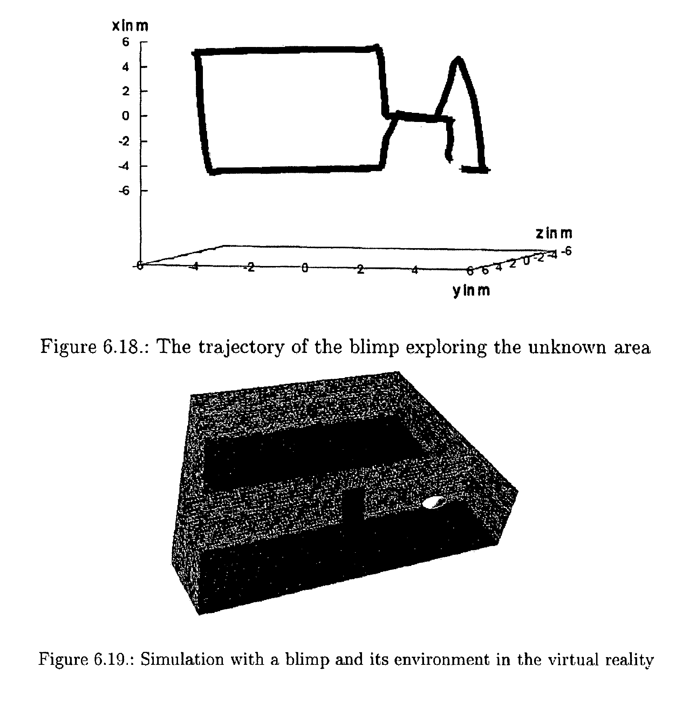

The system of differential equations 3.51, that describes the movements of the helicopter in 6 DoF, cannot be solved analytically. Hence, the calculations have to be performed step-by-step, i.e. numerical. Differential equation can be solved by simulation tools, e.g. Matlab/Simulink. Besides this, Matlab/Simulink enables the investigation of complex dynamic systems and to support the controller development. Further, C-codes can directly be implemented, so that algorithms can be developed, validated and optimized in an early project phase. Hence, it is essential for the simulation of the control loop, that all real properties of the dynamic system are considered. Figure 6.1 shows the main layer of the model.

Figure 6.1.: Main layer of the Matlab/Simulink model

The subsystem "Helicopter dynamics (inertial)" contains the differential equations of motion of the system conferring to equation 3.51. The actual lift forces $F_1$ to $F_4$ of the motor-rotor system are the input values. These variables are generated by the subsystem "Conversion voltage-lift (incl. ground-effect[1]). The rotation speeds $n_i$ of the motors are calculated with the voltages $U_1 \ldots U_4$. This conversion is performed by the approximation:

$$F(n) = 0,0011n^2 + 0,001n, \qquad\qquad (6.1)$$

this was determined by dint of the setup introduced in [65]. The increase of the lift near the ground $F_{IGE}$ *(ground effect)* in relation to the undisturbed lift $F_{OGE}$ can be described with the experimental determined function

$$\frac{F_{IGE}}{F_{OGE}} = 3 \cdot 10^{-5} z^3 - 9 \cdot 10^{-4} z^2 + 6,1 \cdot 10^{-1} z + 1,2506 \qquad\qquad (6.2)$$

[1]The ground-effect increases the thrust at a given power. Thus, the helicopter can hover in ground effect (IGE) at a higher gross weight or altitude than is possible out of ground effect (OGE). in dependence of the height over ground z. Figure 6.2 shows the graph of the experimental data and the approximation graph for conventional helicopters [61]:

$$\left.\frac{F_{IGE}}{F_{OGE}}\right|_{conv.} = \frac{1}{1 - \left(\frac{R}{4z}\right)^2} \ , \ \text{with } R = \text{rotor-radius.} \tag{6.3}$$

For micro or mini aerial vehicles, the approximation in equation 6.3 can not be used. By comparison of the curve generated by equation 6.2 with the propeller radius R = 18.5 cm and the experimental data acquired in this work one can see that there is a huge difference especially in low heights. This effect could be explained by different flow phenomena around the airfoils and REYNOLDS-numbers, so that interrelationships from the macro-world should not be transferred directly to the "micro" world.

The experimental data show, that a maximal lift increase of 20% can be achieved with the rotor depicted in figure 6.2, right. The ground effect can not be noticed any more above heights of 22 cm.

Figure 6.2.: left: ground-effect model conferring to [61] and experimental data, right: used rotor

The output of the dynamic-system is the state vector in inertial space. The subsystem "Transformation inertial - body-fixed" generates the centrifugal and CORIOLIS forces in consideration of the CG-shifts. After the transformation, the body-fixed translational accelerations can be calculated. In the next step, the angular velocities and accelerations are determined. This is performed by the subsystems "Modelling gyroscopes" and "'Modelling accelerometers" that contain the specific sensor characteristics. The inherent errors and the dynamics of the gyroscopes and accelerometers have been taken from the data-sheets (Analog Devices ADXL202E and ADXRS300), supplemented by further measurements. For attitude control tasks, blended with a camera, the visual system is modelled within the subsystem "Modelling camera". Finally, the control loop is closed with the subsystem "Interface to C-code". Besides filters and coordinates transformations, the control algorithms are implemented, that generate the controlled variables.

Thus, the results gained allow a reasonable modelling of the quadrotor prototype.

### 6.1. Attitude-and height control of a 4-rotors micro helicopter

The simulations have been performed by the Matlab/Simulink model introduced in the previous section. The LYAPUNOV-based controllers derived in section 3.4.1 and 3.4.2 were implemented into the C-code.

### 6.1.1. Attitude control

Figure 6.3 shows a simulation of a system with shifted CG with a nonlinear controller with PD-structure without CG-shift compensation. The controller has to keep the angle $\Phi$ constantly zero (horizontal position) but it doesn't manage to keep this attitude accurately.

Figure 6.3.: System behaviour ($\Phi$) with CG shift, r = (0.04m, 0.04m, -0.03m)$^T$, controller without CG adaptation

From controller equation 3.78

$$\tilde{u}_2 = 1/l[K_{P\Phi}e_{q\Phi} - K_{D\Phi}p + m(x_G(wr + vq) + y_G(\dot{w} - uq) - z_G(\dot{v} + ur))]$$

it can be concluded that controllers, developed for systems with the CG in the origin of the body-fixed coordinate system, will not properly stabilize systems with CG shift, cf. equation system 3.51, due to inadequate control inputs. For comparison figure 6.4 shows a similar simulation but the system is stabilized by the controller equivalent with equation 3.78. The controller also has to keep the attitude angle $\Phi$ constantly zero. The deviations are mainly caused by white noise representing the drift and noise characteristics of real sensor system. It is obvious from this figure that the nonlinear controller with CG-shift compensation is able to stabilize the system accurately.

In the next step, nonlinear attitude controllers in PD-structure comparatively to equation 3.78 for the rotation angles $\Phi$ and $\Theta$ were manually optimized regarding the constants $K_{Pi}$ and $K_{Di}$ and a CG shift $x_G = 0$ cm, $y_G = -5$ cm and $z_G = -5$ cm.

Figure 6.4.: System behaviour ($\Phi$) with CG shift, r = (0.04m, 0.04m, -0.03m)$^T$, controller with CG adaptation

Figure 6.5 and 6.6 show the system behaviour with different desired values and the responses are sufficiently fast and accurate. It is observable from these figures that the control accuracy is different between the $\Phi$- and $\Theta$- responses due to unequal drift behaviours in the Simulink model. Due to the fact, that the yaw-angle $\Psi$ is subordni-

Figure 6.5.: System behaviour ($\Phi$ and $\Theta$) with CG shift, r = (0.00m, 0.05m, 0.05m)$^T$, controller with CG adaptation, $K_{Pi}$ = 0.0080, $K_{Di}$ = 0.0045

Figure 6.6.: System behaviour ($\Phi$ and $\Theta$) with CG shift, r = (0.00m, 0.05m, 0.05m)$^T$, controller with CG adaptation, $K_{Pi}$

= 0.0080, $K_{Di}$ = 0.0045
nate and does not effect the flight stability directly, it is controlled by a standard PID controller, cf. [106].

6.1.2. Height control

For the investigation of the dynamic behaviour of the height control and the impact of the ground effect, the z-term of equation 3.51 was considered to derive a height controller able to perform the simple task for the helicopter of hovering at a desired height, cf. equation 3.87:

$$\tilde{u}_1 = \frac{1}{\cos\Phi\cos\Theta}[K_{Pz}(z_{desired} - z) - K_{Dz}w + mg].$$

It is assumed that the term cos $\Phi$ cos $\Theta$ is always unequal to zero, due to the fact that the lift is insufficiently high for flight in case of large roll or pitch angles. The Matlab/Simulink simulation was modified by adding the ground effect equation 6.2 so that control strategies could be investigated to be able to solve the problem with the nonlinear lift increase near the ground.
The modification of the height controller in equation 3.88 leads to:

$$\tilde{u}_1 = \frac{1}{\cos\Phi\cos\Theta}\{K_{Pz}(z_{desired} - z) \\ -K_{Dz}\tanh[25(z + 0,03)]w + mg\}, \qquad (6.4)$$

cf. section 3.4.2. Figure 6.7 shows the behaviour of the system in ground effect. The desired height is 2 m, the step is initialized at 0,3 seconds. From this graph it can be concluded that a simple height controller cannot manage to overcome the ground effect but the desired height can be achieved. The comparison of both graphs show that the variable $K_D$-term prevents the rapid descent of the quadrotor after leaving the ground-effect zone.
Figure 6.7.: System behaviour with ground effect: with and without controller modification with hyperbolic tangent function, $K_{Pz}$ = 0, 03, $K_{Dz}$ = 0, 02

### 6.2. Visually aided attitude determination of a 4-rotors micro helicopter

The following results were also obtained with the Matlab/Simulink model shown in figure 6.1. The main aspects of the coupled sensor system are depicted in figure 6.8.
Figure 6.8.: Structure of the sensor system, helicopter and ground station
The sensor "camera" was modelled by superposing GAUSS*ian*, white noise to the attitude data of the subsystem "Helicopter dynamics (inertial)". The intensity of the noise was determined by the in section 4.3.4 identified standard deviations of the attitude data.
In the style of the real system, the simulation of the 4-rotors-helicopter and the generation of calibration data are performed on two different computers. The Matlab/Simulink model was running on a computer that was connected via serial bus to the image processing computer. Table 6.1 shows the data structure for the commu-

```
typedef struct    Angle {
            float    phi, theta, psi;
}
typedef struct    ReceiveDataModel {
            float    startSeq;
            Angle    insAngle;
            Angle    cameraAngle;
}
typedef struct    SendDataModel {
            Angle    angleDelta;
}
```

Table 6.1.: Data structure for the communication with the simulation

nication. During the transmission via serial bus, the data structures are transformed into a byte-stream that can be interpreted by the receiver. ReceiveDataModel is a data package from Matlab to the image processing computer and SendDataModel is a data package in the opposite direction. The arrays startSeq are markers for be beginning of data packages and serve as synchronization. insAngle and cameraAngle are the actual INS data and the camera-generated attitude data.

Because the simulation was not running in real-time, the integration of the image processing had to be adapted. A data package that contained the actual attitude data was sent by the controller every 200 ms of the simulated time. Once the image processing computer received the data package successfully, it transmitted a data package with corrections back. Hence, the synchronization of the camera data with the INS was not necessary. The processing of the calibration data, the indirect KALMAN filter, introduced in section 4.4.2 was implemented. The mode of operation is shown in figure 6.9. For the correct operation of the KALMAN filter, the estimates-of-errors covariance ma-

Figure 6.9.: Mode of operation of the KALMAN filters within the simulation

trix (cp. section 4.2) had to be estimated and the state vector had to be initialized, while the parameters of the matrix can be chosen arbitrarily, cf. [108]. The values for the measurement noise covariance were taken from the measurements explained in section 4.4.2. The process noise covariance were also determined experimentally. Here, it was simulated, that the helicopter resides in rest position and that the motors are turned off. At this, within the Simulink-model the connection of the controller to the motors were cut. The result is shown in figure 6.11. Every 200 ms (of the simulated time) a sample was taken from these attitude data and the difference to the previous sample was determined. Hence, the variance for the process noise covariance matrix (equation 4.44) was determined. It was assumed, that the gyroscopes are superposed with the equivalent noise and that $N_r = N_w$. Figure 6.10 shows the probability mass

Figure 6.10.: Probability mass functions

functions of the single angles in rest position with the assumption of GAUSS*ian* distributed attitude data. Here, the drift of the gyroscopes is neglected.

By means of the determined parameters, the KALMAN filter was tested. As can be seen in figure 6.9, the predict function is called at the arrival of the sensor data. Then, the correct function is executed with the difference values of the camera and the gyroscopes. After five updates, the differences of the angles are read out of the state vector of the KALMAN filter and sent to the simulated helicopter and the state vector is set to zero. The choice of five cycles were obtained by experiments: a higher number of cycles led to an impact of the drift of the gyroscopes; a lower number of cycles led to inaccurate calibration data of the KALMAN filter - in fact, the drift was corrected but the noise increased significantly, cp. [108].

The attitude data of the INS were continuatively calibrated by afore introduced method. Figure 6.12 shows the calibrated data of the INS. Compared with figure 6.11, it can be seen, that the noise maintained, but the drift was eliminated. Further, every engagement of the KALMAN filter can be noticed, because the graph is bonded in periodical distances to the *x*-axis. Altogether, the maximum error constitutes to $\pm 0.5°$.

Figure 6.11.: Simulation of the attitude angles in rest position, without camera support

Figure 6.12.: Simulation of the attitude angles in rest position, with camera support

### 6.3. Behaviour-based navigation for an indoor blimp

The modelled blimp was equipped with a gyroscope to be able to calculate the yaw-angle relative to a wall which it is ought to follow. As already discussed, calculating this angle leads to an integrational-error over the time due to inherent erroneous sensor data (e.g. drift, bias, etc.). The robot has to be able to operate autonomously for periods lasting at least several minutes. Therefore the calculated angle is not precise enough to rely on. To solve this problem, the blimp uses the two parallel attached sonar-range finders on its sides to calculate the yaw-angle.

Figure 6.13.: Measuring the yaw-angle with two sonar sensors

The yaw-angle can easily be determined by the sonar range finders. The distance $\Delta AB$ between the two sensors has significant influence on the resolution of the resulting yaw-angle. Although the scale of an indoor aerial vehicle does not allow large distances between sensors, $\Delta AB$ should span between two points close to the outer dimensions of the robot.

### 6.3.1. Mobile robot simulation

The finite-state machine, introduced in section 5.1, which is used to choose the desired controlling element, as well as the controlling elements itself were implemented in a high-level programming language C. The simulation-software Webots [91] was used to model the blimp, its sensor- and actuator-system, forces and the virtual environment. For simulation purposes, the blimp was modelled on basis of the Webots function *"blimp_asl2"* controller from C. ZUFFER-EY and A. GUANELLA of the *Autonomous Systems Lab 2, EPFL, Lausanne* and adapted, cf. [83]. Figure 6.14 shows the new model of the blimp in the Webots environment.

The adapted source code contains an output interface for the sensor data or the coordinates of the blimp, to be able to investigate input variables or system responses. The controller receives the sensor data and calculates the controlled variables. The choice

Figure 6.14.: Model of the robot for simulation purposes of the behaviour-based navigation

between the border of the simulation and the controller enables the fast adaptation of the program to the real blimp.

### 6.3.2. Controllers of basic behaviours

Due to the small processing power of the micro controller of the real system, only linear, standard PI-controllers were implemented [83]. In figure 6.15 the three parallel controllers for the trajectory stabilization is depicted. A finite-state machine generates the controller parameters in dependence of the specific basic behaviour.

Figure 6.15.: The three independent controlling elements

### 6.3.3. Conversation of a trajectory into a set of basic behaviours

The raster-potential field delivers an appropriate path from any starting position on the obstacle map to any target. The path itself is a sequence of positions. In order to perform behaviour-based navigation this path needs to be transformed into a set of basic behaviours.

Hence each discrete spot of the trajectory is a coordinate, it is occupied with a virtual model of the robot measuring the distance from that coordinate to the surrounding obstacles. The lengths of the sensor beams are calculated (ray-tracing) and compared to a fixed archetype. The algorithm assumes that each set of sensor beams can be assigned to a predefined basic behaviour. In figure 6.16 this principle is shown and the blimp is situated next to a door. The right sensor beam rises to a value greater than the distance to the antecedent wall (including a fixed threshold $\in_{min}$) or exceeds its

Figure 6.16.: Virtual sensor beams analyzing the environment

working range. The controller of the blimp is equipped with the controlling elements which are dynamically adjusted by the higher priorized task, selecting the parameters in connection to the current asked basic behaviour. Figure 6.17 shows the blimp (white robot) executing the basic behaviours planned before. The red lines leaving the blimp represent the beams of the sonar sensors.

Figure 6.17.: The Blimp executes the set of behaviours

### 6.3.4. Results of the behaviour-based navigation

The developed finite-state machine was implemented in to a C-code and simulated in Webots. The implementation enabled the exploration of unknown environments by the autonomous blimp. The simulation results can be traced in the environment at the monitor. Due to the metrical flight data, the trajectory can be sketched. Figure 6.18 shows the trajectory of the blimp exploring a virtual world consisting of a room and a corridor connected by a door. Due to the modelled noise of the sensors, the trajectories are non-perfect. In real experiments, turbulences (e.g. caused by air condition, open windows etc.) act negative on the stability of the trajectories. Figure 6.19 shows the

Figure 6.18.: The trajectory of the blimp exploring the unknown area

model of two rooms. The blimp is located in the initial position. The dimensions of the surrounding and of the blimp are scaled. The width of a door is 1 m, the width of the blimp constitutes 80 cm. The exploration of the environment and the flying of the distance of 44 m took approximately 4 minutes and 30 seconds. The height control system guaranteed a constant height (1 m) during the whole flight phase. Further, a collision avoidance algorithm for static objects for the straight-forward direction is implemented to ensure collision-free flights. It is assumed, that there are no dynamically moving objects within the environment.

Figure 6.19.: Simulation with a blimp and its environment in the virtual reality

### 6.4. Conclusion

In this chapter, basic simulations were outlined. The impact of shifted CGs or non-perfect mounted sensors was investigated by using the differential equations of motion derived in chapter 3 and Matlab/Simulink. The ground-effect problematic was discussed and nonlinear controllers for the attitude and height control were implemented and validated. The results show, that the control system can successfully deal with the additional accelerations and velocities perceived by the sensors due to CG-shift or sensor-misalignments. A nonlinear parameter-variation solves the problem with the increased lift near the ground.

A complementary sensor system on basis of INS and computer vision system was simulated. The sensors were merged by means of an error-state KALMAN filter. The landmark-based attitude determination system was described and the results have shown, that with one camera only, reliable attitude axes can be obtained, suitable for the aiding of the MEMS-IMS.

Further, it has been shown that the behaviour-based navigation system can be applied to indoor aerial vehicles. Metric information is nonessential and the system can be used to explore unknown surroundings as well as to navigate in reconnoitred areas. But, limitations applied on the systems ability to operate in non-cooperative environments with moving obstacles and the presence of furniture were unconsidered. Nevertheless behaviour-based navigation turned out to be an applicable solution to navigation problems and is not affected by the problem of explicit self-localization.

### 7. Experiments

### 7.1. System description of the 4-rotors micro helicopter

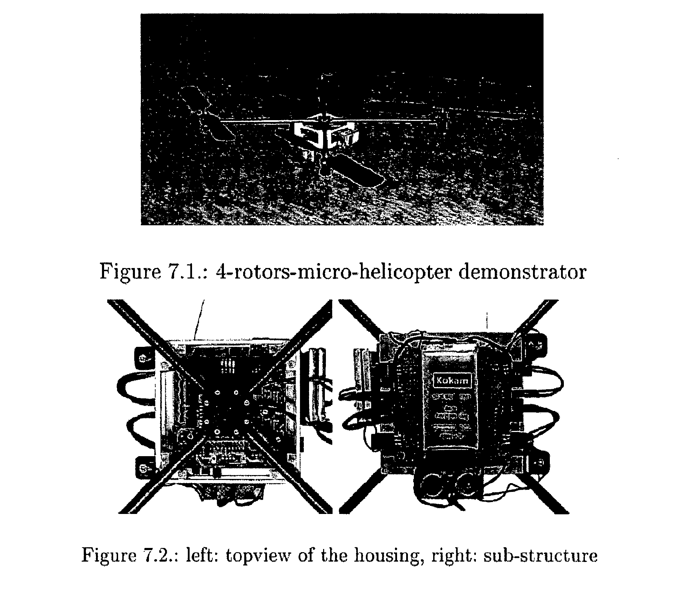

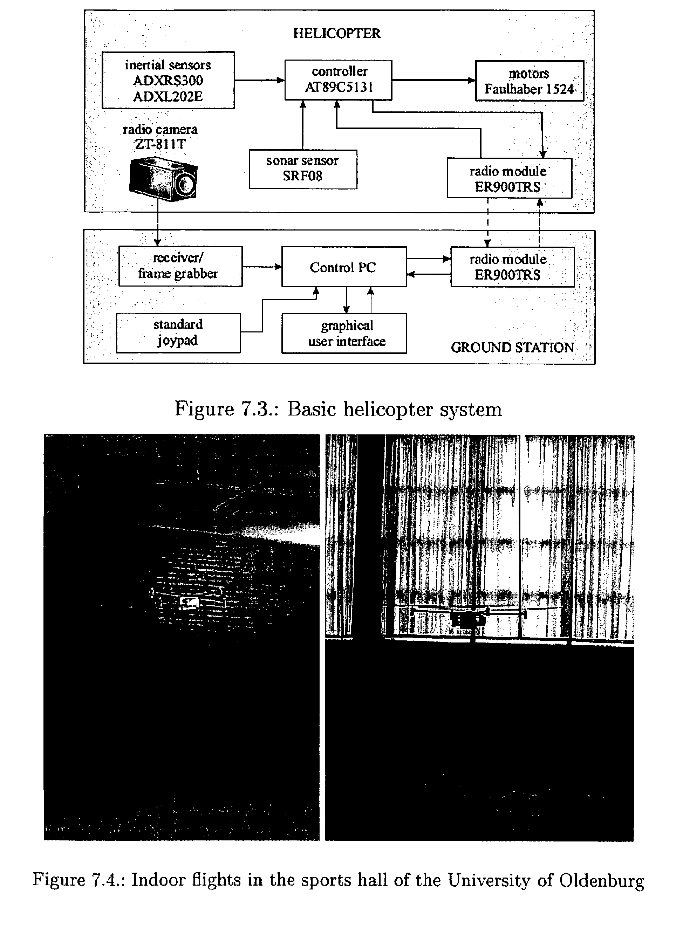

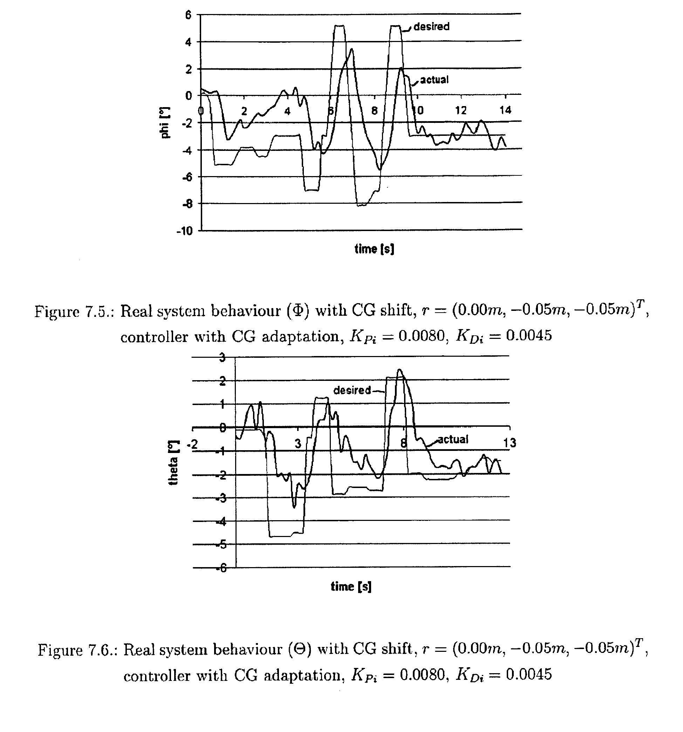

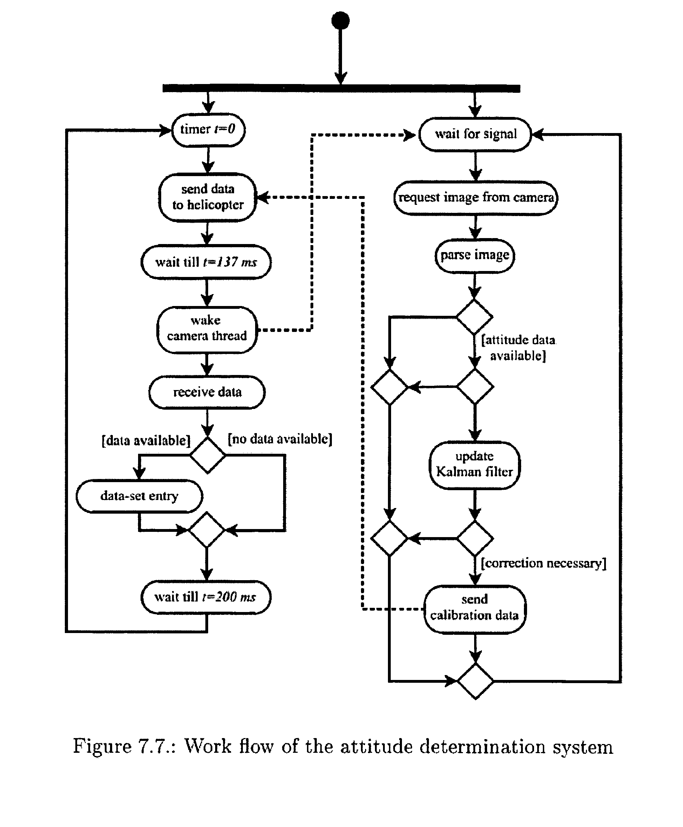

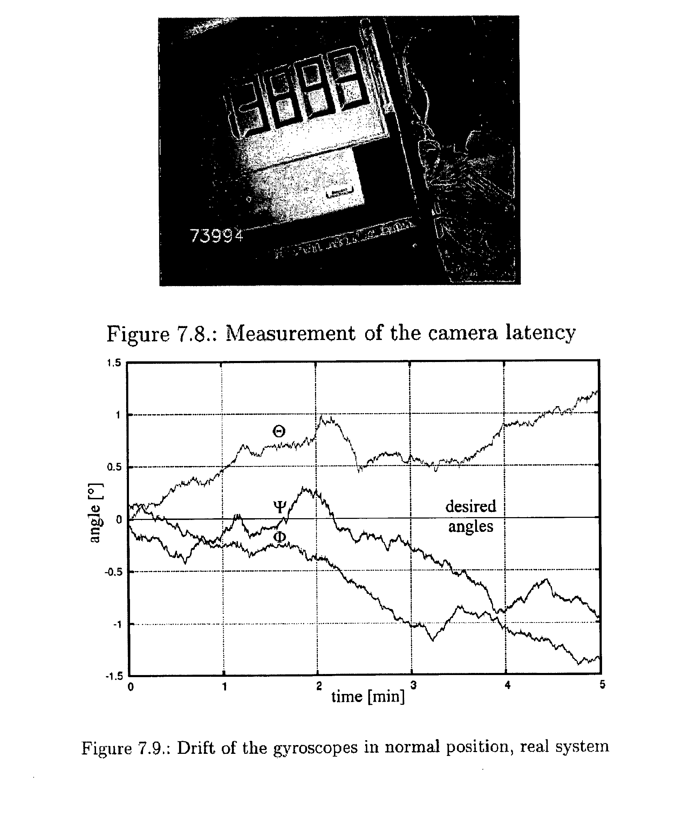

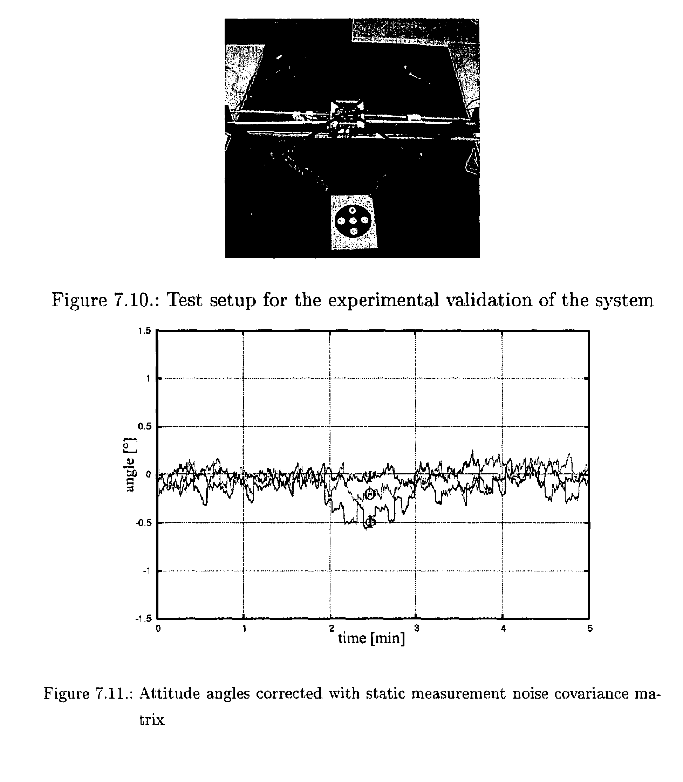

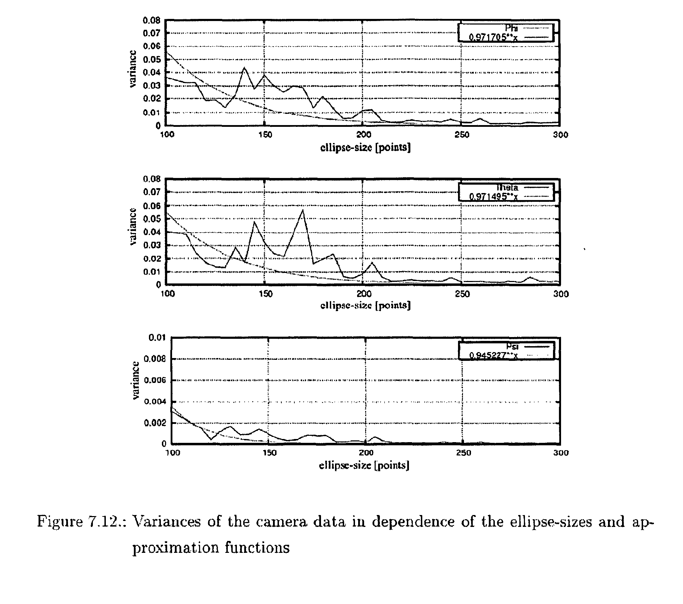

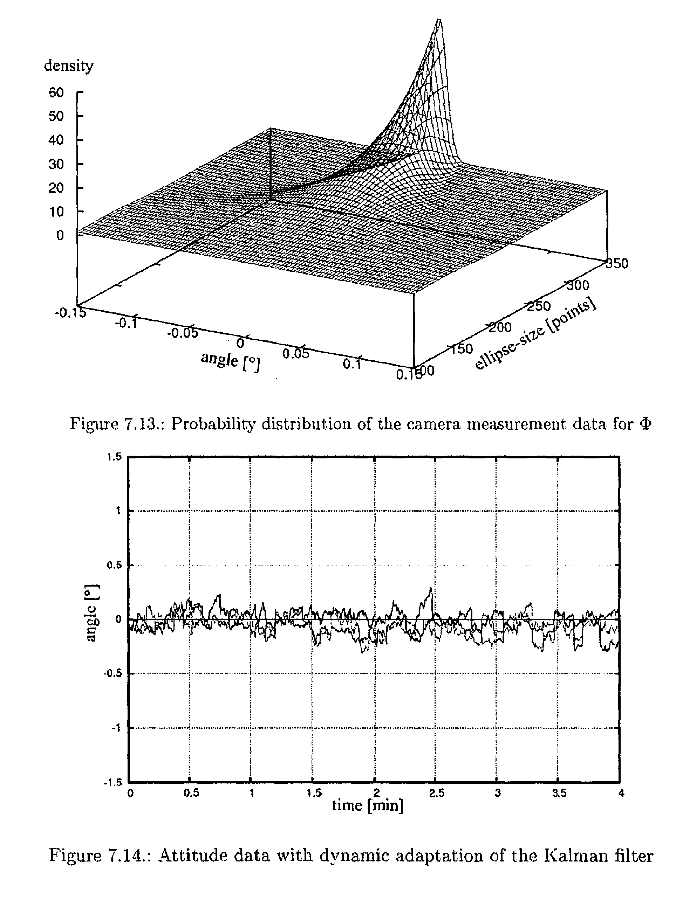

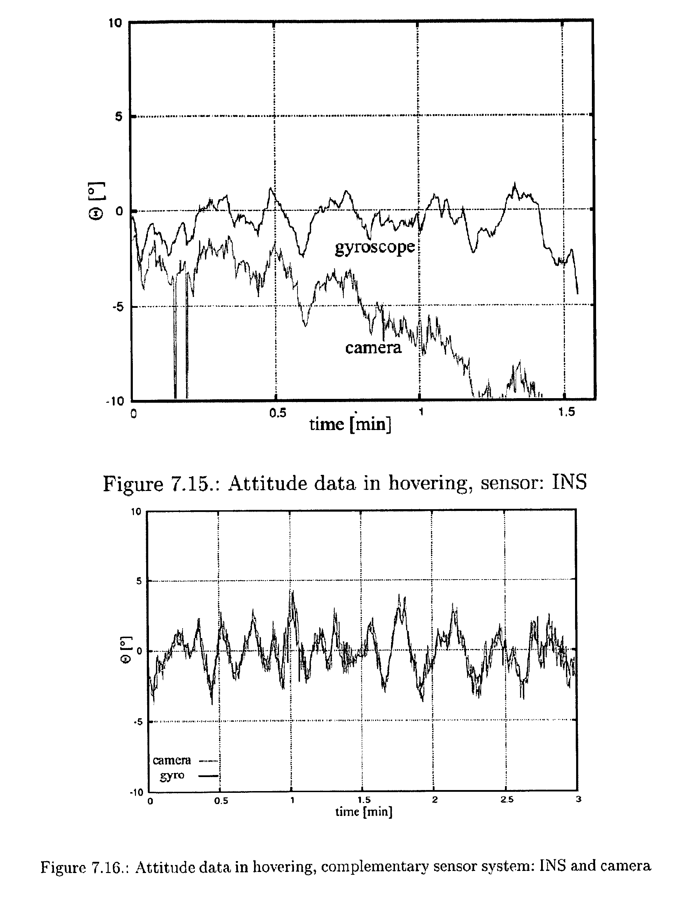

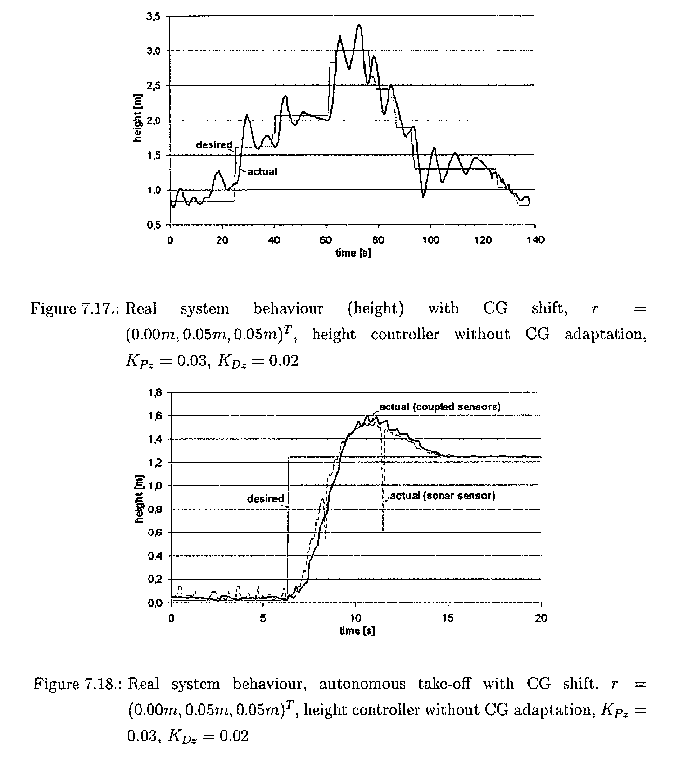

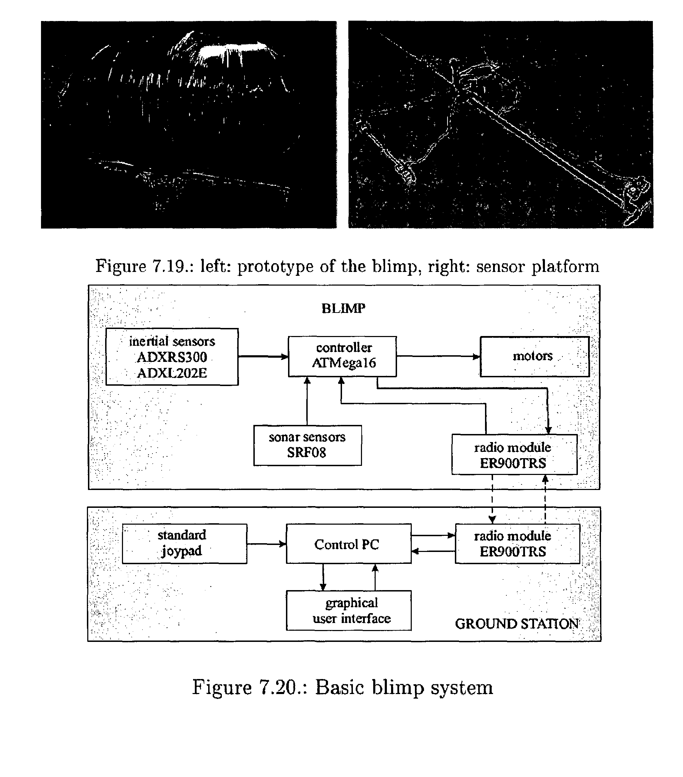

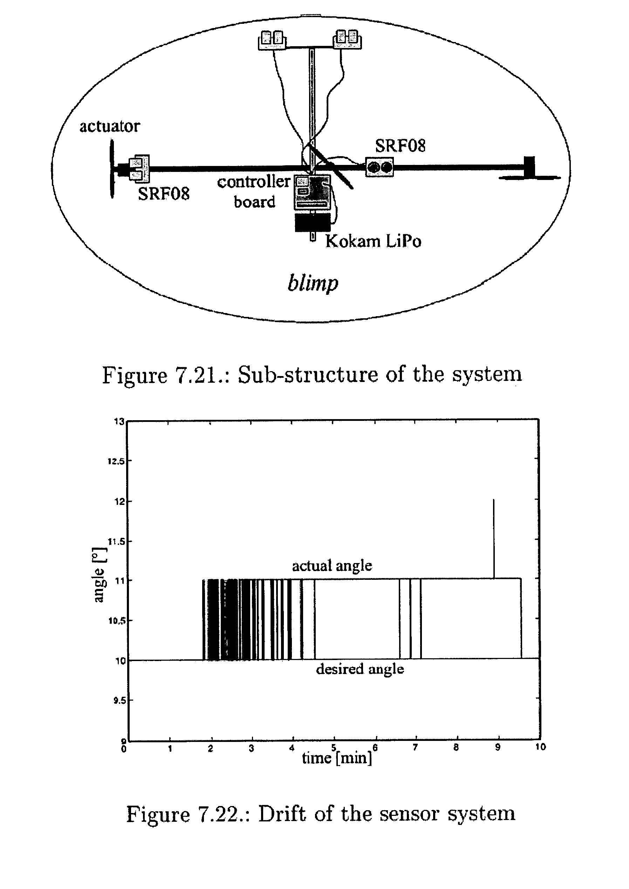

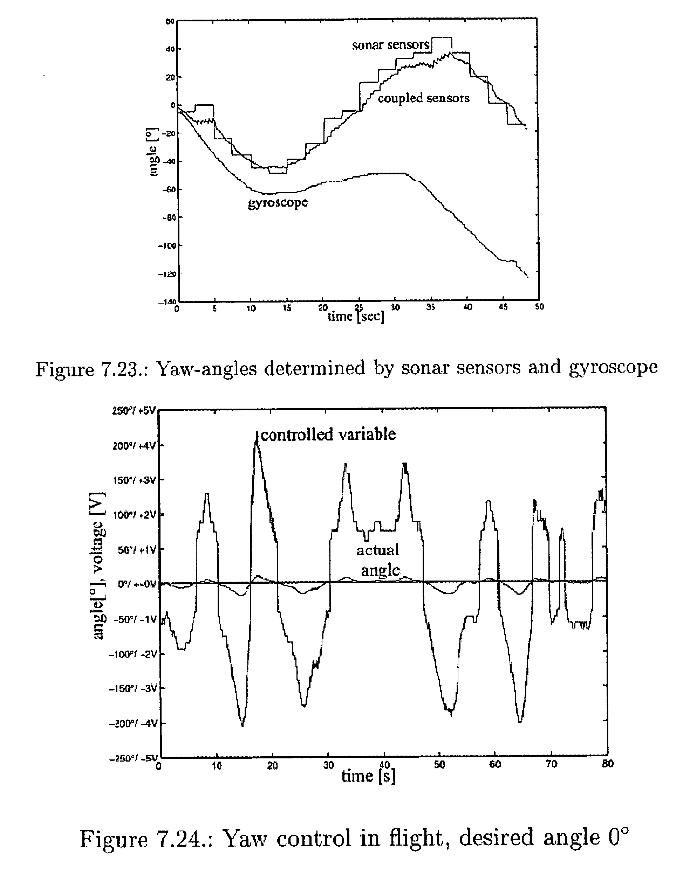

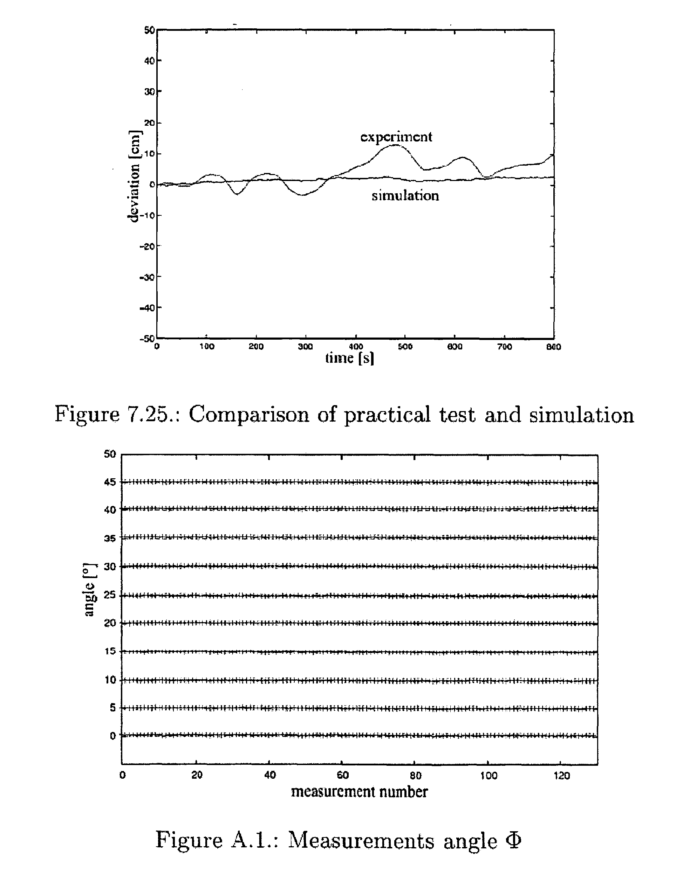

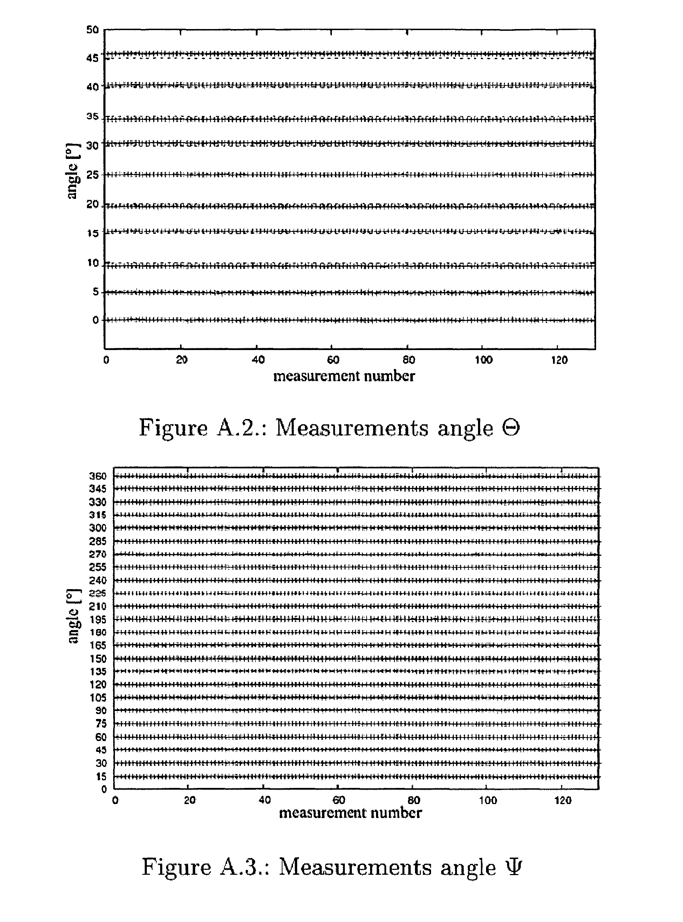

There were several options available in motor selection. For the approximately 450 g weighting and 90 cm in diameter demonstrator shown in figure 7.1, coreless 7,2 V-motors *Faulhaber* 1524 with gear head have been chosen due to the commercial-off the-shelf availability and low acquisition costs. The main advantage of this motor is the good power-to-weight ratio and the controllability in both rotation directions.

Figure 7.1.: 4-rotors-micro-helicopter demonstrator

The search for rotors for the helicopter was also confined to propellers commercial available in both pusher and tractor configuration. Two of each rotors were necessary to be able to realise the system depicted in figure 3.5. Due to good weight-to-lift ratio, propellers from *Braun Modelltechnik GmbH,* shown in figure 6.2, right, have been chosen.

In battery selection, the consideration of various available battery technologies was the first step. Finally, Lithium-Polymer batteries were used due to their weight-to-power ratios. The motors were supplied with 7,4 V Lithium-Polymer cell (1500 mAh) from *Kokam.* The battery was mounted below the housing, see figure 7.2. Besides this, four power transistors *(IPS031 )* for the control of the motors were soldered to the sub-structure plate. Further, the plate served as carrier for the sonar sensor *SRF08* [122] for height control.

The housing and the sub-structure were developed in [106]. The housing weighted 30

Figure 7.2.: left: topview of the housing, right: sub-structure

g. The dimensions were 100 mm $\times$ 100 mm $\times$ 40 *mm*. Some operational amplifiers were supplied with 12 V provided by two standard lithium photo-batteries, that were mounted at the right side of the housing. The avionics-hardware contained in the housing was supplied with a 7,4 V Lithium Polymer cell (300 mAh) which was mounted at the left side of the housing. Further voltages (5 V and 3,3 V) were generated from the 7,4 V voltage by means of voltage regulators *(TS2937* and *TS1986).* The two implemented 2-axes MEMS accelerometers *Analog Devices ADXL202E* [5] were supplied with 5 V. The output of the sensors can be described by:

$$u_{acc} = (0,312\ V \cdot g) + 2,5\ V. \qquad (7.1)$$

Besides, the three the single-axis gyroscopes *Analog Devices ADXRS300* were also supplied with 5 V. The gyroscope operates on the principle of a resonator gyroscope. Two sensing structures each contain a dither frame, which is electrostatically driven to resonance. The oscillation forces the necessary velocity element to produce a CORIOLIS force during the angular rate. At two of the outer extremes of each frame, orthogonal to the dither motion, are movable fingers that are placed between fixed pickoff fingers to form a capacitive pickoff structure that senses CORIOLIS motion, see [6]. The accelerometers and the gyroscope form the strap-down IMU, cp. figure 7.3.

Figure 7.3.: Basic helicopter system

The signal processing and the control were performed by the microcontroller *Atmel-AT89C5131.* The AT89C5131 featured USB module which integrated the USB transceivers with 3,3 V regulator and the serial interface engine with digital phase locked loop and 48 MHz clock recovery. The 8 bit processor retained 32 Kbytes flash capacity and 256 bytes of internal RAM, a 4-level interrupt system, two 16-bit timers/counters and an on-chip oscillator, cp. [7].

Before processing the data with the AT89C5131, the sensor signals had to be converted via A/D-converter *(MAX196)* into binary data, cp. [106]. The data transfer from the controller to the external ground station was provided by a serial Telemetry Module *Easy Radio RF04/900.* The data transfer protocol enabled transmissions with 19200 bauds [105]. The detailed description of the sensor system can be found in [106].

For the visually aided attitude determination, a radio camera *ZT-811 T* from *ZTV-Electronics* [137] was implemented, cp. section 4.3.4. The maximum resolution of the CMOS sensor was 640x480 pixels. The system contained a 2,4 GHz radio communication module that enables the data transmission up to a range of 100 m. The camera was 2,3 cm in any dimension and weighted 20 g.

## 7.2. Attitude control system

For simulation purposes Matlab/Simulink was connected to a *C*-environment, where the program performed coordinate transformations, filtering, control etc., cp. chapter 6. The *C*-code was directly extracted and flashed to the helicopter's hardware controller board. In order to validate the theoretical results of previous chapters the controllers were implemented and several experiments were performed. Due to a couple of parasitic effects, test-setups were not used in this work, cf. section 2.5. One can basically investigate the dynamic behaviour of helicopters by use of such setups, but the disadvantages are immense. For instance, a test setup is always forcing a centre of rotation and because of this forcing a virtual shift of the CG and of the body-fixed-frame. Further, spring constants or friction falsify the results due to different dynamics and damping. Therefore, the experimental results would be questionable or impossible to be transferred to a real flight system which should always be the final goal. Hence, unlike different published approaches in validating, all results have been tested in real flight under indoor flight conditions.

Figure 7.4.: Indoor flights in the sports hall of the University of Oldenburg

In figure 7.4 one can see a photograph of the demonstrator in real flight. Initially, the CG had to be determined. This was performed by estimating the shifts and during a few vertical departure attempts near the ground. If the telepilot noticed a "pull away" in any direction the CG was shifted online via software until the helicopter took off without any positional drift. A side-effect of this procedure is that the influence of different thrusts provided by the engines is compensated. Thus, the determination of the CG may be partly incorrect. For further flight tests a CG shift of $x_G = 0cm, y_G = -5cm$ and $z_G = -5$cm was calculated and the controller parameters were each with $K_{Pi} = 0, 0080$ and $K_{Di} = 0, 0045$.

From the equations derived in section 3.2 it can be obtained that dynamic responses of the closed loop system are more interesting than any "fixed" behaviour. Thus, alternating desired angles were considered and not e.g. horizontal attitude keeping. Figure 7.5 and 7.6 show the system responses of the helicopter with CG shift, the control loop was processed with 50 Hz. From these figures it can be concluded that

Figure 7.5.: Real system behaviour ($\Phi$) with CG shift, r = (0-00m, -0.05m, -0.05m)$^T$, controller with CG adaptation, $K_{Pi}$ = 0.0080, $K_{Di}$ = 0.0045

Figure 7.6.: Real system behaviour ($\Theta$) with CG shift, r = (0-00m, -0.05m, -0.05m)$^T$, controller with CG adaptation, $K_{Pi}$ = 0.0080, $K_{Di}$ = 0.0045

the controller is able to solve the problem with the CG shift because of the follow-up of the system of the desired and actual values. Therefore, the dynamic modelling and the controller development are validated. Possible deviations were primarily caused by the time delay of the closed-loop system and erroneous sensor data of the IMU. During the simulations and flight tests, the yaw-angle $\Psi$ was controlled via standard PID controller. This controller has not been considered in depth, because the attitude-angles $\Phi$ and $\Theta$ are the most flight critical variables, cp. chapter 6.

## 7.3. Complementary, landmark-based attitude determination

The transfer of the simulated results to the real system causes problems due different conditions that can not be modelled accurately. For instance, the latency of a camera has to be considered. Further, if landmark-based attitude data can not be generated due to non-detectability of the landmark due to disadvantageous illuminations or disturbances, cut-outs are caused. Finally, measurements in [108] have shown, that the accuracy of the image-based attitude data depends on the size of landmark within the camera image and therefore on the distance between landmark and camera.

### 7.3.1. Data structure and communication protocol

Figure 7.7 provides an overview of the implemented software. The application consists of three threads, whereof two are illustrated in this figure. The third thread includes the graphical user interface. On the left side of the work flow, the communication thread (via radio module) is shown. The right side shows the thread for the communication with the camera or frame grabber card respectively. Both threads communicate via signals and exchange data by dint of a shared data container.

Figure 7.7.: Work flow of the attitude determination system

The most important data structures are summarized in table 7.1. Angle describes attitude information as three angles. The communication between helicopter and ground station is realized by SendDataMav and ReceiveDataMav. These data structures form the communication protocol. The array theta, phi and psi contain the calibration data for the corresponding angle. Those are continuatively analyzed by the helicopter and the actual attitude is corrected. In case, no calibration is necessary, the calibration data can be set to 0. The other array is necessary for the external control of the helicopter. A data package from the helicopter to the ground station (ReceiveDataMav) only contains attitude information. Those are the actual attitude data that were acquired by the INS.

### 7.3.2. Latencies of the components

The knowledge of the latencies is of utmost importance to be able to synchronize the camera and INS data. In the following section single components are investigated regarding their latencies.

### Camera latency

The latency of the camera is defined as the time from the acquisition of an image to the availability in the computer. This time was determined as follows: A program displayed continuatively its running time in milliseconds on a monitor. The camera was adjusted to the monitor and connected to the computer. In certain time periods, the program requested images from the camera and marked the image with a time

```
typedef struct          Angle {
            float       phi, theta, psi;
}
typedef struct          SendDataMav {
            long        startSeq;
            float       phi;
            float       theta;
            float       thrust;
            float       psi;
            float       height;
            char        command;
            float       commandValue;
            unsigned char endSeq;
}
typedef struct          ReceiveDataMav {
            long        startSeq;
            Angle       angle;
}
```

Table 7.1.: Data structure for the communication with the helicopter

stamp, see figure 7.8. The difference between both values is the latency of the camera. Multiple measurements led to a latency of *297* ms in average. This time also contains the processing time within the cameras, the transmission time to the computer and the AD-conversion in the frame grabber card.

Figure 7.8.: Measurement of the camera latency

**Latency of the radio link**

The radio modules *ER900TRS* operates with 19200 bauds. A module waits for the transmission or the reception till the buffer (180 bytes) is filled or a break (two bytes) is produced. After that, the data are sent via serial bus. In [105] the latency for the data transmission is specified as 0, 8 ms per byte plus a constant overhead of 13, 3 ms. A start- and a stop-bit are added to every sign. Hence, one sign consists of 10 bits. At a 19200 bauds the transmission time for one sign from the radio module to the computer is $\frac{10}{19,2}ms = 0,52 ms$. . The length of a data package from the ground station to the computer is constantly 30 bytes, cf. section 7.3.1. Thus, the collective latency of a data package from the helicopter to the ground station is:

$$2 \cdot \frac{0,52\ ms}{byte} \cdot (30\ bytes + 2\ bytes) + 13,2\ ms + (30\ bytes \cdot \frac{0,8\ ms}{byte}) \approx 40,5\ ms$$

The data package from the helicopter to the ground station is constantly 16 bytes. Thus, it can be written that:

$$2 \cdot \frac{0,52 \ ms}{byte} \cdot (16 \ bytes + 2 \ bytes) + 13, 2 \ ms + (16 \ bytes \cdot \frac{0,8 \ ms}{byte}) \approx 28 \ ms$$

The maximum operation range of the radio module is 150 m. By considering the speed of radio waves (speed of light: $\approx$ 300.000.000 m/s) the maximum latency of the distance is 0, 5 ms which is neglectable.

**Latency of the helicopter**

Experiments in [108] have shown, that the latency time between receiving a data package and availability of a response package on the computer is approximately 125ms. By subtracting the transmission time of the data packages, the processing time on the controller of the helicopter is approximately 56,5 ms. Hence the actual attitude data are read within this time period. In fact, the data are read directly after their arrival, i.e. 40,5 ms after the transmission from the helicopter. Further, the processing of control algorithms, signals and AD-conversion etc. cause additional delays.

### 7.3.3. Operation of the system

In section 7.3.2 the latencies of the different components are discussed. These values act a basis for the time delay of the system: The helicopter does not autonomously transmit attitude data of the INS to the ground station within pre-defined periods. This is performed as response on a previously received command packages from the control PC. To ensure that the accurate control system is not affected, the communication frequency is chosen to be 5 Hz, i.e. the command package is sent every 200 ms to the helicopter, see figure 7.7. At the beginning of the transmission of a command package to the helicopter is executed. As introduced in section 7.3.2 the helicopter responses with a data package, that contains measurement data. These data were acquired 40,5 ms before transmitting the command package from the control PC. Hence, the request for a camera image has to be synchronized. Conferring to section 7.3.2 the latency of the camera constitutes approximately 297 ms. The request time for a camera image can be derived as:

$$40 \ ms + 297 \ ms = 337 \ ms \hat{=} 200 \ ms + 137 \ ms$$

The communication thread transmits a signal to the camera thread at this time. Through this, the camera thread is awakened and a camera image is requested. After transmitting of the signal, the communication thread calls the response package of the helicopter via serial bus and saves the received data into a data list. The arrival of the response package takes approximately 125 ms, cf. section 7.3.2. Hence, the chosen time for the request of the serial bus is sufficient, cp. [108].

The INS data are provided with a time stamp and saved within the above described data list. The list can be read by the camera and communication threads. Having awaked the camera thread the requested image is transferred to the image processing algorithm, cp. section 4. After the extraction of attitude data out of the image, the time corresponding INS attitude data are searched within the described data list and old data are deleted. The difference of the attitude data of camera and INS is sent as measurement update to the KALMAN filter, if the search was successful. The KALMAN filter is not updated, if there were no corresponding data or no attitude data were extracted from the image. In this case, the process noise covariance matrix is adapted by increasing the process noise. The state vector is read and calibration data are determined, if the KALMAN filter is updated during 5 cycles. After the determination of the calibration data, the state vector it set to zero. The calibration data are sent to the communication thread. The thread combines the data into the next data package to be transmitted, while the latency of the correction of the attitude data is neglected. This means that the errors of the attitude data may be changed within the time from the image capturing till the processing of the calibration data.

### 7.3.4. Determination of the normal position drift

Analogous to figure 6.11 the drift in normal position without visual compensation was determined, see figure 7.9. In a next step the INS was continuatively calibrated by

Figure 7.9.: Drift of the gyroscopes in normal position, real system

the algorithm described in section 7.3.3. For this, a landmark was positioned below the helicopter, cp. figure 7.10. The result of the measurement is shown in figure 7.11.

Figure 7.10.: Test setup for the experimental validation of the system

By comparing this graph with figure 7.9, it can be imagined that the drift can be removed. Further, the correction times of the camera can be recognised by steps within the curves. Ideally, the steps force the curve back to the 0˚ line. But, corrections of the angle $\Phi$ are performed temporarily into the wrong direction. The camera data are superposed with higher noise than determined in section 4.3.3. In [108] it was shown,

Figure 7.11.: Attitude angles corrected with static measurement noise covariance matrix

that the noise behaviour was improved, if the landmark appeared bigger within the camera image, i.e. the distance between camera and landmark was smaller.

### 7.3.5. Dynamic adaptation of the Kalman filter

To improve the noise behaviour of the system, the KALMAN filter is dynamically adapted. In fact, the measurement noise covariance matrix is variably changed in dependence of the distance between camera and landmark and thus, in dependence of the size of the landmark. For different ellipse-sizes, measurements were performed, conferring to section section 4.3.4. By means of the measured attitude data, the variance was determined, see figure 7.12. It can be obtained from this graph that the noise

Figure 7.12.: Variances of the camera data in dependence of the ellipse-sizes and approximation functions

decreases with increasing ellipse-size. The data are approximated by exponential functions: $f(\varsigma) = a^{\varsigma}$ with $\varsigma$ as size of the ellipses and $f(\varsigma)$ as variance of the attitude data. To enable the adaptability of the measurement covariance noise matrix, a corresponding value for the parameter a has to be found, cf. [86]:

| angle | $a[^{\circ 2}]$ |
|:-----:|:-----:|
| $\Phi$ | 0,971705 |
| $\Theta$ | 0,971495 |
| $\Psi$ | 0,945227 |

The probability distribution in dependence of the size of the ellipse is exemplarily shown in figure 7.13. The measurement noise covariance matrix was adapted according to the size of the recognized landmark to enable the processing of the KALMAN filter. The afore-mentioned measurement was repeated under consideration of the dynamical adapting KALMAN filter. The result is shown in figure 7.14 and an improvement of the drift is recognizable.

Figure 7.13.: Probability distribution of the camera measurement data for $\Phi$

Figure 7.14.: Attitude data with dynamic adaptation of the Kalman filter

### 7.3.6. Application in flight

The experimental validation of the sensors system in flight has been performed by use of the test setup shown in figure 7.10. The helicopter is held, so that only one DoF can be investigated. For the experiments, the desired angle $\Theta = 0˚$ was chosen, i.e. stationary hovering. Figure 7.15 shows the acquired data of the INS and the image processing. The drift of the gyroscopes caused the pitching of the helicopter. This can be obtained from the camera data. The attitude drift is increased compared to the normal position drift in figure 7.9. This is due to the non-ideal test setup, because energy-supply cables or friction forces within the bearing cause additional torques.

Figure 7.15.: Attitude data in hovering, sensor: INS

In a next experiment, the INS was aided continuatively with the camera data. Figure 7.16 shows the improvement. The attitude angle is "bounded" to the normal position. The intervention of the calibration procedure can clearly be recognized. The outliers shown in this figure are due to disturbed camera images or erroneous matching of the ellipse centres. But, the outliers are filtered by the examination of the domain and do not affect the calculation of the calibration data. The standard deviation of the differences of gyroscope and camera data constituted approximately 0,94˚. The standard deviation of the static system, determined in section 4.3.4 was 0,023˚. During the experimental validation, some weak spots of the system were identified. In fact the lens distortion could not be eliminated completely, cf. section 4.1.3, so that a shift of the landmark in the camera image can lead to different attitude data. Further, this effect is enforced in case of small landmarks in the images. The lower limit for the determination of attitude data was the ellipse size of 100 points, i.e. for the used camera, this corresponds to an distance of only 1,50 m to the landmark. This is due to the huge flare angle of the camera, smaller flare angles would decrease this problem. Additionally, a higher resolution would improve the measurement data.

Figure 7.16.: Attitude data in hovering, complementary sensor system: INS and camera

### 7.4. Height control system

In a further experiment, a height controller of the form of equation 6.4 was implemented, the attitude is autonomously controlled via the afore mentioned controllers. Figure 7.17 shows the system response on different desired heights. From this figure it can be obtained that the height controller in conjunction with the attitude controllers with CG-shift compensation is able to keep the height sufficiently accurate. The deviations between the desired and actual values can be explained by inaccurate sensor data of the coupled sensor system - sonar sensors and accelerometer - and by turbulences primarily caused by the helicopter.

Figure 7.17.: Real system behaviour (height) with CG shift, r = $(0.00m, 0.05m, 0.05m)^T$, height controller without CG adaptation, $K_{pz}$ = 0.03, $K_{Dz}$ = 0.02

Further, an autonomous takeoff has been performed. Figure 7.18 shows the sensor signals of the coupled sensor system (accelerometer and sonar) and the readings of the sonar systems. From this figure it can be obtained that the controller with hyperbolic tangent term is able to solve the ground-effect problematic. The deviations are primarily caused by the coupling of two non-perfect sensors, which can be explained by the outliers of the sonar reading and the noise and drift behaviour of the accelerometers.

Figure 7.18.: Real system behaviour, autonomous take-off with CG shift, $r$ = $(0.00m, 0.05m, 0.05m)^T$, height controller without CG adaptation, $K_{Pz}$ = 0.03, $K_{Dz}$ = 0.02

### 7.5. System description of the blimp

The behaviour-based navigation system has been applied to an autonomous indoor blimp shown in figure 7.19, left. The Helium-filled blimp is able to lift a weight of 300 g and measures 100cm $\times$ 80cm $\times$ 60cm in size. Due to the lack of buoyancy the blimp

Figure 7.19.: left: prototype of the blimp, right: sensor platform

was not able to carry the sensor-system with six sonar sensors which were used in the simulations. Nevertheless, the demonstrator was equipped with four sonar sensors, see figure 7.19, right: two ultrasonic range finders on one side, one sensor below the blimp to measure the altitude and one sensor pointing to the front of the blimp in order to avoid collisions. By reason that only one side of the robot was fitted with sensors, the robot was solely able to perform rotations in a single direction. Additionally it is equipped with a 2-axes accelerometer (the acceleration is integrated to obtain the velocity, Analog Devices ADXL202E) and a gyroscope (Analog Devices ADXRS300) to sense the systems yaw-rate, cp. figure 7.20. The communication with the ground station was provided via ER900TRS radio modules, cf. section 7.1. The signal processing and control was performed by a processor *Atmel ATMega* 16 [8]. The 16 MHz micro controller featured 16 Kbytes flash memory, 512 Kbytes of internal RAM, three timers/counters and an 8-channel 10-bit AD-converter. Additionally, the controller supported serial and I$^2$C. The system was supplied with a 7,4 V Lithium-Polymer cell (1500 mAh) from *Kokam.* A detailed description of the system can be found in [83].

Figure 7.20.: Basic blimp system

### 7.5.1. Sensor system

Figure 7.21 shows an illustration of the substructure of the blimp. For the autonomous operation, several sensors are necessary to perceive the surrounding. The most important parameters are the distances between the blimp and obstacles. In this work, this information is acquired by sonar sensors. Besides the distance-information, a control system needs velocity information. To avoid velocity-errors caused by the differentiation of distances, the actual translational velocity was determined by an accelerometer. Further, a gyroscope was used to acquire the actual rotational velocity, see figure 7.20. In the practical experiments the distance between the two sonar sensors on the blimp's side was 10 cm, allowing a resolution of approx. 6˚, cf. [84]. The integrated value of the gyroscope has been periodically updated to the value of the calculated angle, so that the resulting integrational-error and the sensor drift were no longer such problematic. The operating range of the blimp was limited because an accurate sensor for the mea-

Figure 7.21.: Sub-structure of the system

surement of the translational velocity was not available. The sonar sensor in the front of the system was used for the motion speed override. The information derivate by that sensor was not proper enough to ensure freedom from error. Therefore the system was not able to stop correctly alongside doors and to enter other rooms, although the system was able to carry rotations into execution.

### 7.5.2. Drift of the sensor system

To investigate the drift of the sensor system, consisting of sonar sensors and gyroscope, the blimp were bounded to a normal position of 10˚ relating to a wall. Figure 7.22 shows the measured angles. It can be obtained from this figure that the maximum error constitutes 2˚, so that it can be assumed, that the angular data are long-term stable. In an additional test the coupled sensor system was investigated by yawing

Figure 7.22.: Drift of the sensor system

the blimp. The sensor data are depicted in figure 7.23. The integrational error of the gyroscope-angle is eliminated by the sonar sensor system.

Figure 7.23.: Yaw-angles determined by sonar sensors and gyroscope

### 7.5.3. Determination of the translational velocity

The translational velocity of the blimp is of importance due to its influence on the control system. For instance, a fly through a door shall be initiated by rotating the blimp without forward motion. The necessity for integrating the accelerometer data causes erroneous velocity information that can not be blended, due to missing reference velocities. A further problem with these sensors is the detection of coupled pitch-accelerations of the blimp. Hence, it is difficult, to extract the real translational velocities.

Finally, the sonar sensor at the front of the blimp was used to approximately determine the translational velocity. Although the differentiation of the last two distances provides drift-free velocity information, the resolution and the response time is restricted. In [83] it has been determined, that the best velocity resolution is $0.2\frac{m}{s}$. The problem of determining the translational velocities can be solved by applying an impeller. In this work, this additional sensor were not applied due to weight reasons.

### 7.5.4. Yaw control in flight

The main presupposition for controlled flight of a blimp is the successful control of the yaw angle. Hence, the yaw angle was controlled via a standard PI-controller. Figure 7.24 shows the results of yaw-angle control. The maximum control-error constituted 18˚ but, the average control-error was 2˚.

Figure 7.24.: Yaw control in flight, desired angle 0˚

### 7.5.5. Comparison between simulation and experiment

The unsatisfying determination of the translational flight velocities (cp. section 7.5.3) prevents the tracing of complex trajectories of the simulations. Nevertheless, the following of corridors was possible in simulations and in experiments. But, the results diverge from each other due to the effects already mentioned in section 7.5.4. Figure 7.25 shows the simulated and the experimental trajectories. The blimp had to follow a wall in a period of 800 s. The maximum deviation in experiment was 17 cm. This huge deviation was primarily caused by climate control-induced turbulences. In table 7.2 the

Figure 7.25.: Comparison of practical test and simulation

most important results of the simulations and experiments are summarized. Further experiments have shown, that the blimp was able to recognize doors and to perform rotations to fly through doors, [83]. The problem of accurately controlling the flight velocity restricts the mobility of the system, cf. section 7.5.3.

Table 7.2.: Quantitative comparison between simulation and experiment

| quantity | simulation | experiment |
|---|---|---|
| max. control-error | 2cm | 17cm |
| max. angle-error | 4˚ | 18˚ |
| angle-error, average | 0.28˚ | 2˚ |

### 8. Summary and Evaluation

This thesis creates a bride between nonlinear modelling and control of 4-rotors-helicopters, the visual aiding of erroneous sensor signals of MEMS gyroscopes and indoor navigation of miniaturized airborne systems. In this chapter, the results of the thesis are summarized and concluding remarks are made.

In this work some aspects of the development of an autonomous, miniaturized, electrically powered 4-rotors-helicopter for indoor applications were introduced. The motivation for the investigation of these small flying vehicles is their use as aerial surveillance tools in confined spaces (inside buildings, tunnels, stadiums, airports, train stations, urban search and rescue, etc.). The construction and manufacturing procedure of miniaturized helicopter obviously causes problems as for instance sensors can not be mounted perfectly in the CG and the CG is often shifted out of the origin of the initial body fixed coordinate system. The consequences are additional accelerations and velocities perceived by the sensors so that these effects have to be covered by the control system. Hence, a novel dynamic modelling approach of 4-rotor-helicopters considering this impact has been described and its influence on the dynamic behaviour has been investigated. On basis of these realisations a global asymptotically stabilizing attitude and height control system was developed. For this purpose LYAPUNOV's stability theory was summarized and applied.

The modelling was implemented into a Matlab/Simulimk simulation. Further, the ground-effect, sensor characteristics and coordinates transformations were considered and added to the simulation, so that the controllers were validated. The controllers, filtering and transformations were realized in a C-code and directly implemented into the simulation. Finally, the flight demonstrator was described and the controllers were validated experimentally, after flashing the C-algorithms into the micro controller of the helicopter.

A further miniaturization of the helicopter will lead to the need for the consideration of all terms of the dynamic model of the 4-rotors-helicopter in the control system. The terms, neglected in this work, will gain importance due to faster dynamic and smaller dimensions. Nevertheless, in the simulations, satisfying results with the simplified controllers were demonstrated which were also validated in the experimental tests in real flight. Different from worldwide approaches, the novel nonlinear controllers were successfully tested in free flight, so that the results obtained in this work were not falsified through test setups. Additionally, the nonlinear lift increase near the ground has been solved by nonlinearly varying a parameter within the height controller by means of the hyperbolic tangent function. The controllers improved the dynamic behaviour of the helicopter while asymptotically stabilizing the system and providing a reachability of the desired values fast and accurate.

A real-time computer vision system for autonomous attitude control of a miniaturized - 4-rotors-helicopter was also described. Due to increased measurement noise of micromachined inertial sensors, the acquired sensor data had to be blended. Hence, a computer vision system recognized a landmark on the floor under the helicopter and estimated the attitude of the used camera with respect to it. The attitude information, which was required for the control of the helicopter, was determined by a complementary coupled sensor system consisting of the camera and inertial sensors. The drawbacks of vision systems are obviously the bad reliability in different illuminating conditions and a high processing effort. Hence, the long-term accuracy of a visual system and the short-term accuracy of an INS can overcome the limitations of the individual sensors. Within the work, coupling techniques via KALMAN filters were discussed. Thus, a computer vision system was described, which provided attitude information on basis of inertial sensors. The sensors were coupled by an error-state KALMAN filter. The characteristics of the camera were identified and applied to the KALMAN filter as well as added to the Matlab/Simulink model. The system was validated by means of the simulation and it has been shown, that the visual sensor system improves the drift behaviour of the INS. The experimental validation was performed in a one DoF test setup to ensure the hovering above the landmark. The INS data were continuatively aided with the camera data and the standard deviations of the gyroscope and the camera constituted 0,94˚. The major weak point of the visual system were the incomplete elimination of the lens distortion so that a shifted landmark in the image may cause different attitude data.

A navigation system for autonomous indoor aerial vehicles was also described. Path planning algorithms were introduced and a behaviour-based navigation system on basis of the potential field method was developed. The results have been validated in the simulation Webots and in experiment by controlling an indoor blimp with a finite-state machine. An indoor blimp has been chosen for the validation tasks due to the auto lift capabilities, low control effort and the resulting need for low energy and processing power. Nevertheless, it has been shown that the behaviour-based navigation system can be applied to any kind indoor aerial vehicles. Metric information is nonessential and the system can be used to explore unknown surroundings as well as to navigate in reconnoitred areas. Limitations applied on the systems ability to operate in non-cooperative environments with moving obstacles and the presence of furniture are unconsidered. Nevertheless behaviour-based navigation turned out to be an applicable solution to navigation problems and is not affected by the problem of explicit self-localization.

However, for indoor air vehicles the situation is different as for outdoor vehicles and the requirements are much more difficult than for outdoor flying vehicles. On the one hand, indoor UAVs must be small enough to be applied indoors, which poses very strict limits on the payload. On the other hand for security, surveillance or rescue tasks the MAVs have to manoeuvre autonomously under often extremely cramped conditions. A helicopter-based flying micro robot, has to be able to fly through doors and to detect obstacles. Technologies for position and attitude keeping and autonomously obstacle detection have to be precise and mature. Today such technologies are - under the restriction of size, weight, and power consumption - not available.

On basis of the positive results obtained in this research towards autonomous miniaturized 4-rotors-helicopters the autonomy of such systems can be pushed. In future, the controllers can be adapted for smaller systems by considering further higher order terms. The miniaturization of the whole system will affect new phenomena. For instance, due to faster dynamics, the afore neglected terms will gain importance, the flight at low REYNOLDS numbers will cause non-stationary, nonlinear lift-curves or the angular momentums will be increased due to faster rotating motor-rotor-systems.

These effects have to be covered by the control system.

Complementary sensor systems enabling reliable indoor navigation are another step. Most challenging for such a miniature air vehicle is the estimation of its position relative to the environment and a precise obstacle detection to manoeuvre even under cramped conditions. Inertial navigation, blended with other navigation aids (e.g. GPS) is applied outdoors but inapplicable indoors and in urban environment. Any alternative sensors used must be extremely small, light-weight and power saving due to the forced limited payload. Compared to laser, infrared, or visual sensors the use of radar features high update rates, interference liability, low/long range accuracy, long term stability as well as reliable operation. Future work can concentrate on automatically extracting natural, characteristic features from camera images, which can then be used instead of a artificial landmark, providing accuracy position and velocity information. For such image recognition and feature tracking procedures, high processing power, high image resolution and on almost eliminated lens distortion are necessary. Further, the processing of complete system can be implemented on the flying platform can be performed onboard at availability of suitable micro controllers.

In indoor or urban environments, an aerial robot must fly safely to avoid damaging itself, the area or maybe to avoid hurting people in case of collisions. The basic requirement for such autonomy is the ability to determine its own position and orientation according to a internal map. Besides this, the accurate knowledge of accurate rotational and translational velocities is of utmost importance. A key idea is to acquire such data from panoramic 360˚ images from several positions in the robot's environment by optical flow. The sensor can be coupled with INS and range finder data and implemented into stochastic self-localisation concepts such that the behaviour-based navigation can be extended.

**Bibliography**

[1] Abidi, M.A., Chandra, T.: A New Efficient and Direct Solution for Pose Estimation Using Quadrangular Targets: Algorithm and Evaluation. IEEE-Transactions on Pattern Analysis and Machine Intelligence 17, Nr. 5, S. 534-538, Mai 2005**.**

[2] Altenburg, U.: Ein Beitrag zur Entwicklung von Strategien zur koordinierten Steuerung autonomer mobiler Multirobotersysteme, Dissertation-Technical University Ilmenau, 2003**.**

[3] Altug, E., Ostrowski, J.-P., Camilla, J. T.: Quadrotor Control Using Dual Camera Visual Feedback, IEEE-Interrtational Conference on Robotics and Automation, 2003, Taipei, Taiwan.

[4] Altug, E.: Vision based control of unmanned aerial vehicles with applications to an autonomous four rotor helicopter, quadrotor, Dissertation-University of Pennsylvania, USA, 2003**.**

[5] Analog Devices: Low-Cost $\pm 2$ g Dual-Axis Accelerometer with Duty Cycle Output *data sheet, http://www.analog.com/UploadedFiles/ Data_Sheets/53728567227477ADXL202E_$\alpha$.pdf*

[6] Analog Devices: ADXRS300 $\pm 300$˚/s Single Chip Yaw Rate Gyro with Signal Conditioning *data sheet, http:// www. analog. com/UploadedFiles/ Data_Sheets/732884779ADXRS300_b. pdf*

[7] Atmel Corporation AT89C5131 8-Bit Flash Microcontroller with Full-Speed USB device *data sheet, http://www.atmel.com/dyn/resources/prod_documents/doc4136.pdf*

[8] Atmel Corporation 8-bit AVR Microcontroller with 16K Bytes In-System Programmable Flash, ATmega16 ATmega16L *data sheet, http://www.atmel.com/dyn/resources/prod_documents/doc2466.pdf.*

[9] Arning, R.K., Sassen, S.: Flight Control of Micro Aerial Vehicles, AIAA-Guidance, Navigation and Control Conference and Exhibit, 16 - 19 August 2004, Rhodes Island, USA.

[10] Balan, R.: An Extension of Barbashin-Krasovski-LaSalle Theorem to a Class of Nonautonomous Systems, Princeton University, USA, 1995

[11] Bartolini, G., Pydynowski, P.: An improved, chattering free, VSC: scheme for uncertain dynamics systems, IEEE-Transactions on Automatic Control, 41(8), 1996.

[12] Beissner, S.: Volumenmikromechanische Inertialsensoren, Dissertation-Technical University of Braunschweig, Institut for Micro System Technology, 2004.

[13] Billep, D.: Modellierung und Simulation eines mikromechanischen Drehratensensors Dissertation Technical University of Chemnitz, 2000.

[14] Böge, A.: Mechanik und Festigkeitslehre, Vieweg-Uerlag Braunschweig, 1985, 20. Auflage, ISBN 3-528-74010-8.

[15] Borenstein, J., Everett, H.R., Feng, L.: Where am I? Sensors and Methods for Mobile Robot Positioning University of Michigan, 1996.

[16] Borenstein, J., Koren, Y.: Real-time Obstacle Avoidance for Fast Mobile Robots. IEEE-Transactions on System, Man and Cybernetics, Vol. 19, S. 1179-1187, 1989.

[17] De Bothezat G.: The general theory of blade screws including propellers, fans, helicopter screws, helicoial pumps, turbo-motors, and different kinds of helicoidal blades, NACA-Report 29, 1920, USA.

[18] Bouabdallah, S., Murrieri, P., Siegwart, R.: Design and Control of an Indoor Micro Quadrotor IEEE-International Conference on Robotics and Automation, 2004, New Orleans, USA, pp. 4393 - 4398.

[19] Bouabdallah, S., Noth, A., Siegwart, R.: PID vs LQ Techniques Applied to an Indoor Micro Quadrotor IEEE/RSj-Internationad Conference in Intelligent Robots and Systems, September 28 - October 2 2004, Sendai,Japan.

[20] Bouabdallah, S., Siegwart, R.: Towards Autonomous Indoor VTOL Springer Science and Business Media-Volume 18, No 2, March 2005.

[21] Bouabdallah, S., Siegwart, R.: Backstepping and Sliding-mode Techniques Applied to an Indoor Micro Quadrotor IEEE-International Conference on Robotics and Automation, April 2005, Barcelona, Spain.

[22] Bouget, J.-Y.: Camera Calibration Toolbox for Matlab http://www. vision. caltech. edu/bouguetj/calib_doc/, Online-Ressource, Abruf: 6.Okt. 2005.

[23] Brandt, S.: Mechanik: Eine Einführung in Experiment und Theorie Springer-Verlag Berlin, Heidelberg, 1996, 3. Auflage.

[24] Brockhaus R: Flugregelung, Springer-Verlag, 2001, ISBN 3-540-41890-3.

[25] Bronstein, I. N.: Taschenbuch der Mathematik Teubner-verlag Stuttgart, 1991, 25. Auflage.

[26] Brookner, E.: Tracking and Kalman Filtering Made Easy. Wiley-Interscience, 1998, ISBN 0-471-18470.

[27] Bruhns, O.T.: Elemente der Mechanik III Shaker-Verlag Aachen, 2004, ISBN 3-8322-3206-0.

[28] Canny, J.: A computational approach to edge detection. IEEE-Transactions on Pattern Analysis and Machine Intelligence 8, Nr. 6, S. 679-698, 1986, ISSN 0162-8828.

[29] Castillo, P., Dzul, A., Lozano, R. Real-Time Stabilization and Tracking of o Four-Rotor Mini Rotorcraft IEEE-Transactions on Control Systems Technology 12, No. 4, pp. 510-516, 2004.

[30] Cheriyan, J., Ravi, R.: Approximation algorithms for network problems. citeseer.ist.psu.edu/cheriyan98approzimation.html, Online-Ressource, 1998.

[31] Cherkassky, B.V., Goldberg, A.V., Radzik, T.: Shortest Paths Algorithms: Theory and Experimental Evaluation. SODA-ACMSIAM (A Conference on Theoretical and Experimental Analysis of Discrete Algorithms) Symposium on Discrete Algorithms.

[32] Collinson, R.P.G.: Introduction to Avionics Systems, Kluwer Academic Publishers Boston, 2nd edition, 2003, ISBN 1-4020-7278-3.

[33] Dellaert, F., Fox, D., Burgard, W., Thrun, S.: Monte Carlo Localisation for Mobile Robots. IEEE-International Conference on Robotics and Automation, 1998**.**

[34] Dorf R.C., Bishop R.H.: Modern Control Systems, Pearson Education, Inc., 2005, 10. Auflage, ISBN 0-13-127765-0.

[35] Eich, M., Kemper, M.,Fatikow, S.: A Navigation System Concept for an Indoor Micro Air Vehicle EMAV 2004-First European Micro Air Vehicle Conference and Flight Competition, Juni 2004, Braunschweig, Germany.

[36] Fatikow,S., et al.: Mirkorobotik II University of Oldenburg-Lecture Notes, 2005, 3. Auflage.

[37] Fisher, R.B.: CVonline - On-Line Compendium of Computer Vision. http://homepages.inf.ed.ac.uk/rbf/CVonline/, Online-Ressource, Abruf: 6. Okt. 2005.

[38] Fischler, M.A., Bolles, R.C., Random sample consensus: a paradigm for model fitting with applications to image analysis and automated cartography. Commun. ACM 24 Nr. 6, S. 381-395, 1981, ISSN 0001-0782

[39] Fitzgibbon, M., Fisher, R.B.: Direct least-squares fitting of ellipses. IEEE-Transactions on Pattern Analysis and Machine Intelligence 21, Nr. 5, S. 476-480, 1999.

[40] Fox, D.: Markov localization: A probabalistic framework for mobile robot localization Dissertation-University of Bonn, 1998**.**

[41] Fox, D., Burgard, W.,Thrun, S.: Markov localization for mobile robots in dynamic environments Journal of Artificial Intelligence Research, 11:391-324 1999

[42] Franklin, G.F., Powell, J.D., Emami-Naemi, A.: Feedback Control of Dynamic Systems Prentice Hall New Jersey, 5th edition 2006, ISBN 0-13-149930-0.

[43] Fremont, V., Chellali, R.: Direct Camera Calibration using two Concentric Circles from a single View. Ecole des Mines de Nantes 2001.

[44] Fryer, J.G., Brown, D.C.: Lens distortion for close-range photogrammetrie. Photogrammetric Engineering and Remote Sensing, 52 1986, S. 51-58.

[45] The Intel-Cooperation: Open Source Computer Vision Library (OpenCV). http://intel.com/research/mrl/research/opencv/., Online-Ressource, Abruf: 06. Okt. 2005.

[46] The Intel-Cooperation: OpenCV Reference Manual, Version 2001. http://intel.com/research/mrl/research/opencv/., Online-Ressource, Abruf: 06. Okt. 2005.

[47] Glines, C.V.: The Flying Octopus Air Force Magazine, Vol. 73 No. 10, Oktober 1990**.**

[48] Göhring, D.: Digitalkameratechnologien - Eine vergleichende Betrachtung CCD kontra CMOS, Diploma Thesis, Humboldt University of Berlin, 2002**.**

[49] Grewal, M.S., Weill, L.R., Andrews, A.P.: Global Positioning Systems, Inertial Navigation, and Integration. Wiley-Interscience, 2000, ISBN 0-471-350-32X.

[50] Grewal, M.S., Andrews, A.P.: Kalman Filtering : Theory and Practice Using MATLAB. Wiley-Interscience, 2001, ISBN 0-471-392-545.

[51] Guellali, M.: Fehlermodellierung von mikromechanischen Inertialsensoren für Navigationsaufgaben, Internal Report, Institut for Flight Guidance and Control Flugführung, TU Braunschweig, 1998**.**

[52] Hamel T., Mahony R., Lozano R., Ostrowski J.: Dynamic Modelling and Configuration Stabilization for an X4-Flyer IFAS-15th Triennial World Congress, 2002: Barcelona, Spain.

[53] Hangos K.M., Bokor, J., Szederényi, G.: Analysis and Control of Nonlinear Process Systems, Springer-Verlag, 2004, ISBN 1-85233-600-5.

[54] Hauck, A.: Vision-Based Reach-To-Grasp Movements: From the Human Example to an Autonomous Robotic System Shaker- Verlag, 2000, ISBN 3-8265-7288-2.

[55] Härkegård, O. Backstepping and Control Allocation with Application to Flight Control Dissertation, University of Lonköping, Department of Electrical Engineering, 2003.

[56] Henrich, D., Graf, R.: Flächendeckende Bahnplanung in vollständig, teilweise oder nicht bekannten Umgebungen. Springer-Verlag, Reihe: Informatik Aktuell, 14. Fachgespräch Autonome Mobile Systeme (AMS'98), Karlsruhe, 30. Nov. - 01. Dezember,S.188-198, 1998

[57] Hoffmann, G., Rajnarayan, D.G., Waslander, S.L., Dostal, D., Jang, J.S., Tomlin, C.J.: The Stanford testbed of autonomous rotorcraft for multi agent control (STARMAC) DASC 04-The 23rd Digital Avionics Systems Conference, Volume 2, 24-28 Oct. 2004, pp:12.E.4 - 121-10

[58] Holzapfel, F.: Nichtlineare adaptive Regelung eines unbemannten Fluggerätes Dissertation-Technical Univertity of München, 2004.

[59] Isidori A.: Nonlinear Control Systems, Springer- Verlag, 1995, ISBN 3-540-19916-0.

[60] Jähne, B.: Digitale Bildverarbeitung, Springer-Verlag, 2005, ISBN 3-540-41260-3.

[61] Johnson W.: Helicopter Theory, Dover Publications Inc.-New York, 1980, ISBN 0-468-68230-7.

[62] Kalman, E.: A New Approach to Linear Filtering and Prediction Problems. ASME-Transactions of the ASME-Journal of Basic Engineering, 1960.

[63] Kanatani, K., Liu, W.: 3D interpretation of conics and orthogonality, Academic Press Inc.-Orlando, USA, 1993, ISSN 1049-9660.

[64] Kemper M., Fatikow S.: Regelungstechnik, University of Oldenburg-Lecture Notes, 2003, 2. Auflage.

[65] Kemper M., Merkel M., Fatikow S.: Attitude Control System for a Rotorcraft Micro Air Vehicle for Indoor Applications UAVS-18th International Conference on Unmanned Air Vehicle Systems Conference, 31. March - 2 April 2003: 29-1-29-8, Bristol, UK.

[66] Kemper M., Merkel M., Fatikow S.: A Rotorcraft Micro Air Vehicle for Indoor Applications IEEE-11th International Conference on Advanced Robotics June 30 - July 3 2003: Coimbra, Portugal, pp. 1215-1220.

[67] Kemper M.: Entwicklung eines mikromechanischen Drehratensensors auf Basis einer schwingenden Ringstruktur Diploma Thesis, 2001: Technical University of Braunschweig.

[68] Kemper, M., Fatikow, S.: Impact of Center of Gravity in Quadrotor Helicopter Controller Design Mechatronics 2006-4th IFAC-Symposium on Mechatronic Systems, Heidelberg, Germany, September 12th-14th, 2006.

[69] Khalil, H.K.: Nonlinear Systems, Prentice-Hall-New Jersey, 2002.

[70] Khatib, O.: Real-Time Obstacle Avoidance for Manipulators and Mobile Robots. International Journal of Robotic Research, 5 Nr. 1, S. 90-98, 1986.

[71] Kim, J.-S., Gurdjos, P., Kweon, I.: Geometric and algebraic constraints of projected concentric circles and their applications to camera calibration, IEEE-Transactions on Pattern Analysis and Machine Intelligence 27, April 2005.

[72] Kim, J.-S., Kim, H.-W., Kweon, I.: A camera calibration method using concentric circles for vision applications, ACCV-The 5th Asian Conference on Computer Vision Bd. 5 2005, Melbourne, Australien.

[73] König, A.: Automatischer Kartenaufbau für visuelle Monte-Carlo-Selbslokalisation mobiler Serviceroboter in Baumarktumgebungen. Diploma Thesis-Technical University of Ilmenau, Mai 2002**.**

[74] Kristié, M., Fontaine, P., Kokotovié, V., Paduano, J.D.: Useful nonlinearities and global stabilization of bifurcations in a model jet engine surge and stall, IEEE-Transactions on Automatic Control, 43(12): pp. 1739-1745, Dec. 1998**.**

[75] Laue, T., Röfer, T.: A Behavior Architecture for Autonomous Mobile Robots Based on Potential Fields. http: //www.informatik.uni-bremen. de/kogrob/papers/rc05-potentialfields. eps, Online-Ressource, 2005

[76] Lazanas, A., Latombe, J.C.: Landmark-based robot navigation. AAAI-Tenth National Conference on Artificial Intelligence, AAAI Press, pp. 816-822 1992**.**

[77] Leavers, V.F.: Shape Detection in Computer Vision Using the Hough Transformation Springer-verlag, New York, 1992, ISBN 0-3871-9723-0.

[78] Leishman, J.G.: Principles of Helicopter Aerodynamics. University Press, Cambridge, 2002, ISBN 0-5215239-6-6.

[79] Lowson, M.V.: Aerodynamics of Aerofoils at Low Reynolds Numbers UAVS-14th International Conference on Unmanned Air Vehicle Systems Conference, 12 - 14 April 1999, Bristol, UK.

[80] Lozano, R., Brogliato, B., Egeland, O., Maschke, B.: Dissipative systems, Springer-Verlag, New York, Communication and Control Engineerign Series, 2000.

[81] Lozano, R., Castillo, P., Garcia, P., Dzul, A.: Robust orediction-based control of unstable delay systems, IEEE-Conference on Decision and Control Dezember 2003, Maui, Hawaii, USA.

[82] Lutz H., Wendt W.: Taschenbuch der Regelungstechnik, Harri Deutsch-Verlag, 2002, 4. Auflage, ISBN 3-8171-1668-3.

[83] Mahn, M.: Entwurf eines verhaltensbasierten Navigationssystems für einen autonomen Indoor Blimp *Diploma Thesis- University of Oldenburg,* Mai **2005.**

[84] Mahn, M., Kemper, M.: A Behaviour-based Navigation System for an Autonomous Indoor Blimp Mechatronics 2006-4th IFAC-Symposium on Mechatronic Systems, Heidelberg, Germany, September 12th-14th, 2006.

[85] Mareczek, J.: Invarianzregelung einer Klasse unteraktuierter Systeme, Dissertation-Technical University of München, 2002**.**

[86] Marquardt, D.W.: An algorithm for least sqares estimation of nonlinear parameters, SIAM-Journal Soc. Indust., Appl. Math. Bd. 11, S. 431-441, 1963**.**

[87] Maybeck, P.S.: Mathematics in Science and Engineering. Bd. 1 Stochastic Models, Estimation and Control Academic Press Inc-London, 1960, ISBN 0-12-480701-1.

[88] McKerrow, P.: Modelling the Draganflyer four-rotor helicopter, IEEE-International Conference on Robotics and Automation, 2004, New Orleans, USA, pp. 3596 - 3601.

[89] Meyers, R.: Encyclopedia of Physical Science and Technology Academic Press Inc. London, 1992, Bd. 10, 2. Auflage.

[90] Mecke, R.: Grauwertbasierte Bewegungsschätzung in monokularen Bildsequenzen unter besonderer Berücksichtigung bildspezifischer Störungen, Dissertation-Ottovon-Guericke University of Mgdeburg, 1999**.**

[91] Michel, O.: Webots: Professional Mobile Robot Simulation. ARS-Journal of Advanced Robotics Systems 1, Nr. 1, 39-42,2004**.**

[92] Mistler, V., Benallegue, A., M'Sirdi, N.K.: Exact linearization and noninteracting control of a 4 rotors helicopter via dynamic feedback, IEEE-International Workshop on Robot and Human Interactive Communication, Paris, France, 2001.

[93] Mueller, T.J., Laurier, J.D.: An overview of Micro Air Vehicle Aerodynamics, Fixed and Flapping Wing Aerodynamics for Micro Air Vehicle Applications, AIAA Progress in Astronautics and Aeronautics, Vol 195, 2001, ISBN 1-56347-517-0

[94] Mudigondo, P.K., Javahar, C.V., Narayanan, P.J.: Geometric Structure ICVIP Computation from Conics, 2004

[95] Nicoud, J.D., Zufferey, J.D.: Toward Indoor Flying, IEEE/RSJ Proc. of International Conference on Intelligent Robotis and Systems, EPFL, Lausanne, Switzerland, October 2002.

[96] Pounds, P., Mahony, R., Hynes, P., Roberts, J.: Design of a Four-Rotor Aerial Robot, ARAA Proc. of the Australasian Conference on Robotics and Automation, Auckland, Australia, 27-29 November 2002.

[97] Olfati-Saber, R.: Nonlinear Control of Underactuated Mechanical Systems with Apllication to Robotics and Aerospace Vehicles, Dissertation-Massachusettes Institute of Technology, USA, 2001, Department of Electrical Engineering and Computer Science.

[98] van der Schaft, A.J.: The Mathematics on Systems and Control, From Intelligent Control to Behavioral Systems eds. Polderman, J. W., Trentelman, H.L. Groningen, NL, 1999.

[99] Schubert, R.: Skript zur Vorlesung Angewandte Medizinische Bildverarbeitung. http://imwv. umit. at/Lehrveranstaltungen/AMBbsc/WS2003/Skripten/Einheit05. eps, Online-Ressource, Abruf: 14. Aug. 2005.

[100] Howells, M: Unmanned Vehicles Handbook 2006, The Shephard Press Berkshire, UK, 2006, ISSN 1365-6546.

[101] Ortega, R., Loria, A., Nicklasson, P.J., Sira-Ramirez, H.: Passivity-based Control of Euler-Lagrange Systems, Springer- Verlag, London, 1998.

[102] Ottl D.: Mathematische Methoden des Ingenieurwesens, Technical University of Braunschweig-Lecture Notes, 1998.

[103] Patel, A.J.: Shortest Paths. www-cs-students.stanford.edu/amitp/gameprog.html, Online-Ressource, 2004.

[104] Pettie, S., Ramachandran, V., Sridhar, S.: Experimental evaluation of a new shortest path algorithm. ALENEX'02, 2002.

[105] Power-Radio-Solution:: Easy Radio ER-900TRS Funkmodul. http://www.lprs.co.uk, Online-Ressource, Abruf: 06. Okt. 2005.

[106] Puls, T.: Validierung komplementärer Sensorsysteme für die autonome In-nenraumnavigation von Kleinstflugzeugen mit Anwendung auf einen 4-Rotor-Helikopter. Diploma Thesis- University of Oldenburg, Mai 2005.

[107] Roumeliotis, S.; Sukhatme, G., Bekey, G.: Circumventing dynamic modeling: Evaluation of the error-state kalman filter applied to mobile robot localisation. http://citeseer.ist.psu.edu/roumeliotis99circumventing.html, Online-Ressource, 1999.

[108] Sandhaus, P.: Entwicklung eines komplementären, kameraunterstützten Sensorsystems für Lageregelungsaufgaben von Kleinstflugzeugen. Diploma Thesis-University of Oldenburg, Oktober 2005.

[109] Schänzer G.: Flugführung I, T U Braunschweig-Lecture Notes, 1993, 6. Auflage.

[110] Schänzer G.: Flugführung II, T U Braunschweig-Lecture Notes, 1994, 4. Auflage.

[111] Schöning, U.: Logik für Informatiker, Springer-Verlag, 5. Auflage, 2000, ISBN 3-8274-1005-3.

[112] Siemiatkowska, B., Chojecki, R.: Mobile Robot Localization Based On Omnicamera. IAV2004-5th IFAC/EURON Symposium on Intelligent Autonomous Vehicles, 2004

[113] Schulz W., Ludwig. R.: Flugmechanik. LN 9300, Normstelle Luftfahrt, 1970.

[114] Schulz W., Ludwig. R.: Terms and Symbols for Flight Dynamics, Part I-VI. ISO 1151, 1976.

[115] Schwarz H.: Systems Theory of Nonlinear Control, Shaker-Verlag, 2000, ISBN 3-8265-7525-3.

[116] Slomka, F.: Echtzeitbetriebssysteme, University of Oldenburg-Lecture Notes, 2004.

[117] Slotline, J.J, Li, W.: Applied Nonlinear Control, Prentice-Hall, Englewood Cliffs, 1991.

[118] Sonneborn, W.: Vision 2025 for Rotorcraft. AIAA/ICAS International Air and Space Symposium and Exposition, Bell Helicopter Textron, Dayton, USA, 14-17 July, 2003.

[119] Sontag E.D.: On the Input-to-State Stability Property, European J. of Control 1: pp. 24-36, 1995.

[120] Sontag E.D., Wang, Y.: On Characterizations of the input-to-state stability property, Systems and Control Letters, vol.24: pp. 351-359, Systems and Control Letters: vol.24.pp.351-359, 1995.

[121] Sommer S.: Regelung linearer parameterveränderlicher (LPV-) Systeme mit Hilfe klassischer Regelungsstrukturen und Anwendung auf nichtlineare Regelstrecken, Shaker- Verlag, 2003, ISBN 3-8322-1914-5.

[122] Devantech Inc., Robot Electronics: SRF08 Ultra sonic range finder, http://www. robot-electronics.co.uk/htm/srf08tech.shtml, Technical Spcification, Online-Ressource, 2005.

[123] Steil, J.: Skript zur Vorlesung : Robotik I University of Bielefeld-Lecture Notes, 2003.

[124] Suzuki, S., Abe, K.: Topological Structural Analysis of Digitized Binary Images by Border Following. CVGIP 30: Nr. 1 S. 32-46, 1985.

[125] Tayebi, A.,McGilvray, S.; Attitude stabilization of a four-rotor aerial robot IEEE-43rd International Conference on Decision and Control, December 14-17 2001, Atlantis, Paradise Islands, Bahamas, USA.

[126] Unbehauen H.: Regelungstechnik II, Vieweg-Verlag, 2000, 8. Auflage, ISBN 3-528-73348-9.

[127] Verein Deutscher Ingenieure VDI-Richtlinie 3633: Simulation von Logistik, Materialflu"s und Produktionssystemen - Begriffsdefinitionen VDI-Verein Deutscher Ingenieure, 1996.

[128] Vratislavsky, A.: Reaktive Verhaltenssteuerung. http://page.mi.fu-berlin.de/vratisla/Robotik/ReaktivesVerhalten.htm, Online-Ressource, 2000.

[129] Welch, G., Bishop, G.: An Introduction to the Kalman Filter, SIGGRAPG-2001.

[130] Wendel, C., Schlaile, J.,Trommer, G. F.: Stabilizing a Four-Rotor-Helicopter using Computer Vision, EMAV 2004-First European Micro Air Vehicle Conference and Flight Competition, Juni 2004, Braunschweig, Deutschland.

[131] Wüsting, S.: Hochintegriertes triaxiales Beschleunigungssensorssystem, Dissertation-University of Karlsruhe, 1997.

[132] Wyeth, G.: An Autonomous Blimp. citeseer. ist. psu. edu/138360. html, Online-Ressource, 1998.

[133] Yuen, H.K., Illingworth, J., Kittler, J.: Detecting partially occluded ellipses using the Hough transformation. Image Vision Comput. 7, Nr. 1, S. 31-37, 1989.

[134] Yun, W.: A Surface Micromachined Accelerometer with Integrated CMOS Detection Circuitry, Dissertation-University of California at Berkeley, 1992.

[135] Zhang, H., Ostrowski, J.: Visual servoing with dynamics: Control of an unmanned blimp. citeseer.ist.psu.edu/zhang98visual.html, Online-Ressource, 1998.

[136] Zhang, Z.; A Flexible new Technique for Camera Calibration. IEEE-Transactions on Pattern Analysis and Machine Intelligence 22, Nr. 11 2000.

[137] ZTV-Electronics: Funkkamera ZT-811T. http://www.ztvelectronics.com. Online-Ressource, Abruf: 06. Okt. 2005.

# A. Appendix

Figure A.1.: Measurements angle $\Phi$

Figure A.2.: Measurements angle $\Theta$

Figure A.3.: Measurements angle $\Psi$

**Nomenclature**

$c_a$ Auftriebsbeiwert am Blattelement
$c_w$ Widerstandsbeiwert am Blattelement
$c_W$ Widerstandsbeiwert des Helikopters
$c_F$ Schubbeiwert
$F$ Kraftvektor
$M$ Momentenvektor
$I_x$ Roll(massen)trägheitsmoment $I_x = \int (y^2 + z^2)dm$
$I_y$ Nick(massen)trägheitsmoment $I_y = \int (x^2 + z^2)dm$
$I_z$ Gier(massen)trägheitsmoment $I_z = \int (x^2 + y^2)dm$
$I_{xy}, I_{xz}, I_{yz}$ Deviationsmomente
$\underline{H}$ Drehimpuls
$\underline{B}$ Impuls
u Eingangs- oder Steuervektor
$u^*$ Vektor der kommandierten Stellgrö"sen sowie der Störgrö"sen
v Geschwindigkeit
$x$ Zustandsvektor
$y$ Ausgangsvektor
$A$ Systemmatrix
$B$ Eingangs- oder Steuermatrix
C Ausgangs- oder Beobachtungsmatrix
$C_a$ Matrix aerodynamischer Konstanten
$K$ Reglermatrix
$I$ (Massen)Trägheitstensor
Griechische Buchstaben
$\alpha$ effektiver aerodynamischer Anstellwinkel
$\lambda_h$ Durchflu"sgrad

Φ Rollwinkel oder Hangewinkel (roll)
φ relativer Anströmwinkel
θ Längslagewinkel (pitch)
θ Blatteinstellwinkel
Ψ Gierwinkel (yaw)
ξ Verschiebung

**Indizes**

*f* körperfeste (flugzeugfeste) Koordinaten
*K* Art der Geschwindigkeit (kinematisch, Bahngrö"se)
*g* erdlotfeste (geodätische) Koordinaten

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measured cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

**Claims**

1. A method for controlling an unmanned aerial vehicle, in particular an unmanned multi-rotor-helicopter, more particular an unmanned 4-rotor-helicopter, comprising the steps of:

   applying a real-time adjustment when evaluating controlling flight parameters of the vehicle.

2. The method of claim 1, further comprising the steps of:

   evaluating the controlling flight parameters of the vehicle by taking into account real-flight dynamics of the vehicle.

3. A method for controlling an unmanned aerial vehicle, in particular an unmanned multi-rotor-helicopter, more particular an unmanned 4-rotor-helicopter,
   in particular a method according to any one of the above claims, comprising the steps of:

   evaluating the controlling flight parameters of the vehicle by taking into account the impact of a displacement of the CG out of the origin of the initial body fixed coordinate system of the vehicle.

4. The method of any one of the above claims, further comprising the steps of:

   evaluating the controlling flight parameters of the vehicle by taking into account additional accelerations and/or velocities caused by a shift of the CG.

5. The method of any one of the above claims, further comprising the steps of:

   evaluating the controlling flight parameters of the vehicle by non-linear variation of a parameter within the height control by means of an hyperbolic tangent function.

6. The method of any one of the above claims, further comprising the steps of:

evaluating the controlling flight parameters of the vehicle by assuming that the earth is a non-rotating reference system.

7. The method of any one of the above claims, further comprising the steps of:

evaluating the controlling flight parameters of the vehicle by assuming that the vehicle is a rigid body without elastic degrees of freedom.

8. A control system for an unmanned aerial vehicle, in particular an unmanned multi-rotor-helicopter, more particular an unmanned 4-rotor-helicopter, comprising an evaluation unit for evaluating controlling flight parameters of the vehicle, the evaluation unit comprising means being adapted for performing at least one of the steps of the method of at least one of claims 1-7.

9. An unmanned aerial vehicle, in particular an unmanned multi-rotor-helicopter, more particular an unmanned 4-rotor-helicopter, comprising the system of claim 8.

10. Computer program comprising program code means for causing a computer to carry out the steps of the method as claimed in one of the claim 1-7 when said computer program is carried out on a computer.

11. Data carrier storing a computer program as claimed in claim 10.

Figure 1.1.: Control loop of 4-rotors-helicopters

Figure 2.1.: Test bench principles: from left to right: single spring/wire system, double
spring system, bearing system

Figure 3.1.: Illustration of the inertial, earth-fixed coordinate frame $g$, and the body-
fixed frame $f$

Figure 3.2.: Illustration of the helicopter attitude angles $\Phi, \Theta, \Psi$ and the angular rates $p, q, r$

Figure 3.3.: Accelerated coordinate frame (non-inertial system)

Figure 3.4.: Inertial sensors not exactly mounted in CG

76

Figure 3.5.: System with Force and Torque Control and shifted CG

Figure 3.6.: Blade element

Figure 4.1.: Highly integrated camera with CCD-sensor [60]

Figure 4.2.: Pin hole camera model

Figure 4.3.: Lens distortion (left) and correction (right) [36]

Figure 4.4.: Indirect feedforward KALMAN filter [87]

Figure 4.5.: Indirect feedback KALMAN filter [87]

Figure 4.6.: Image sequence for camera calibration

Figure 4.7.: Radial and tangential lens distortion

Figure 4.8.: Employed landmark

Figure 4.9.: Image processing tasks

Figure 4.10.: Hierarchic representation of the landmark

Figure 4.11.: Numbering of inner circles

(a) RGB image      (b) grey scale image      (c) smoothed image

(d) application of
Canny filter      (e) extracted landmark      (f) identification of
centre coordinates

Figure 4.12.: Sequence of the image processing

Figure 4.13.: Applied camera test setup

Figure 4.14.: System structure, helicopter and ground station

Figure 5.1.: The finite-state machine used for the exploration of unknown environments

Figure 5.2.: Raster-potential field

Figure 5.3.: Minimum time path in the raster-potential field

Figure 5.4.: Potential field

Figure 5.5.: Another path for the same path-planning problem

Figure 5.6.: The distribution of the attractant

Figure 6.1.: Main layer of the Matlab/Simulink model

$$\frac{F_{IGE}}{F_{OGE}} = \frac{F}{F_\infty} = \frac{1}{1-\left(\frac{R}{4z}\right)^2}$$

Figure 6.2.: left: ground-effect model conferring to [61] and experimental data; right: used rotor

Figure 6.3.: System behaviour ($\Phi$) with CG shift, $r = (0.04m, 0.04m, -0.03m)^T$, controller without CG adaptation

Figure 6.4.: System behaviour ($\Phi$) with CG shift, $r = (0.04m, 0.04m, -0.03m)^T$, controller with CG adaptation

Figure 6.5.: System behaviour ($\Phi$ and $\Theta$) with CG shift, $r = (0.00m, 0.05m, 0.05m)^T$, controller with CG adaptation, $K_{Pi} = 0.0080$, $K_{Di} = 0.0045$

Figure 6.6.: System behaviour ($\Phi$ and $\Theta$) with CG shift, $r = (0.00m, 0.05m, 0.05m)^T$, controller with CG adaptation, $K_{Pi} = 0.0080$, $K_{Di} = 0.0045$

Figure 6.7.: System behaviour with ground effect: with and without controller modification with hyperbolic tangent function, $K_{P_z} = 0,03$, $K_{D_z} = 0,02$

Figure 6.8.: Structure of the sensor system, helicopter and ground station

Figure 6.9.: Mode of operation of the KALMAN filters within the simulation

Figure 6.10.: Probability mass functions

Figure 6.11.: Simulation of the attitude angles in rest position, without camera support

Figure 6.12.: Simulation of the attitude angles in rest position, with camera support

Figure 6.13.: Measuring the yaw-angle with two sonar sensors

Figure 6.14.: Model of the robot for simulation purposes of the behaviour-based navigation

Figure 6.15.: The three independent controlling elements

Figure 6.16.: Virtual sensor beams analyzing the environment

Figure 6.17.: The Blimp executes the set of behaviours

Figure 6.18.: The trajectory of the blimp exploring the unknown area

Figure 6.19.: Simulation with a blimp and its environment in the virtual reality

Figure 7.1.: 4-rotors-micro-helicopter demonstrator

Figure 7.2.: left: topview of the housing, right: sub-structure

Figure 7.3.: Basic helicopter system

Figure 7.4.: Indoor flights in the sports hall of the University of Oldenburg

Figure 7.5.: Real system behaviour ($\Phi$) with CG shift, $r = (0.00m, -0.05m, -0.05m)^T$, controller with CG adaptation, $K_{Pi} = 0.0080$, $K_{Di} = 0.0045$

Figure 7.6.: Real system behaviour ($\Theta$) with CG shift, $r = (0.00m, -0.05m, -0.05m)^T$, controller with CG adaptation, $K_{Pi} = 0.0080$, $K_{Di} = 0.0045$

Figure 7.7.: Work flow of the attitude determination system

Figure 7.8.: Measurement of the camera latency

Figure 7.9.: Drift of the gyroscopes in normal position, real system

Figure 7.10.: Test setup for the experimental validation of the system

Figure 7.11.: Attitude angles corrected with static measurement noise covariance matrix

Figure 7.12.: Variances of the camera data in dependence of the ellipse-sizes and approximation functions

Figure 7.13.: Probability distribution of the camera measurement data for $\Phi$

Figure 7.14.: Attitude data with dynamic adaptation of the Kalman filter

Figure 7.15.: Attitude data in hovering, sensor: INS

Figure 7.16.: Attitude data in hovering, complementary sensor system: INS and camera

Figure 7.17.: Real system behaviour (height) with CG shift, $r =$ $(0.00m, 0.05m, 0.05m)^T$, height controller without CG adaptation, $K_{P_z} = 0.03$, $K_{D_z} = 0.02$

Figure 7.18.: Real system behaviour, autonomous take-off with CG shift, $r =$ $(0.00m, 0.05m, 0.05m)^T$, height controller without CG adaptation, $K_{P_z} =$ 0.03, $K_{D_z} = 0.02$

Figure 7.19.: left: prototype of the blimp, right: sensor platform

Figure 7.20.: Basic blimp system

Figure 7.21.: Sub-structure of the system

Figure 7.22.: Drift of the sensor system

Figure 7.23.: Yaw-angles determined by sonar sensors and gyroscope

Figure 7.24.: Yaw control in flight, desired angle 0°

Figure 7.25.: Comparison of practical test and simulation

Figure A.1.: Measurements angle Φ

Figure A.2.: Measurements angle $\Theta$

Figure A.3.: Measurements angle $\Psi$

**European Patent Office**

# EUROPEAN SEARCH REPORT

Application Number

EP 06 01 9060

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 571 953 A (WU TZONG-HSIU B [US]) 5 November 1996 (1996-11-05) * the whole document * | 1-11 | INV. G05D1/08 B64C27/08 |
| X | US 6 260 796 B1 (KLINGENSMITH WALLACE NEIL [US]) 17 July 2001 (2001-07-17) | 1,2,6-11 | |
| A | * the whole document * | 3-5 | |
| A | XIAOFEI WU ET AL: "Dedicated to the late Gerhard Muenst" SYSTEM THEORY, 2002. PROCEEDINGS OF THE THIRTY-FOURTH SOUTHEASTERN SYMPOSIUM ON MARCH 18-19, 2002, PISCATAWAY, NJ, USA,IEEE, 18 March 2002 (2002-03-18), pages 97-102, XP010599066 ISBN: 0-7803-7339-1 * the whole document * | 1-11 | |
| D,A | MCKERROW P: "Modelling the Draganflyer four-rotor helicopter" ROBOTICS AND AUTOMATION, 2004. PROCEEDINGS. ICRA '04. 2004 IEEE INTERNATIONAL CONFERENCE ON NEW ORLEANS, LA, USA APRIL 26-MAY 1, 2004, PISCATAWAY, NJ, USA,IEEE, US, 26 April 2004 (2004-04-26), pages 3596-3601Vol4, XP010769097 ISBN: 0-7803-8232-3 * the whole document * | 1-11 | TECHNICAL FIELDS SEARCHED (IPC) G05D B64C G01M |

The present search report has been drawn up for all claims

| Place of search | Date of completion of the search | Examiner |
|---|---|---|
| Munich | 6 March 2007 | Vañó Gea, Joaquín |

ANNEX TO THE EUROPEAN SEARCH REPORT
ON EUROPEAN PATENT APPLICATION NO.                    EP 06 01 9060

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2007

| Patent document<br>cited in search report | | Publication<br>date | Patent family<br>member(s) | | Publication<br>date |
|---|---|---|---|---|---|
| US 5571953 | A | 05-11-1996 | DE<br>DE<br>EP | 69613175 D1<br>69613175 T2<br>0743582 A2 | 12-07-2001<br>27-09-2001<br>20-11-1996 |
| US 6260796 | B1 | 17-07-2001 | NONE | | |

For more details about this annex : see Official Journal of the European Patent Office, No. 12/82

## REFERENCES CITED IN THE DESCRIPTION

**Non-patent literature cited in the description**

- Vision based control of unmanned aerial vehicles with applications to an autonomous four rotor helicopter, Quadrotor. **ALTUG, E.** PhD Thesis. 2003
- **BALAN, R.** An Extension of Barbashin-Krasovski-LaSalle Theorem to a Class of Nonautonomous Systems. Princeton, 1995
- **BOUABDALLAH, S.** Towards Autonomous Indoor VTOL. *Autonomous Robots, Springer Science + Business Media,* March 2005, vol. 18 (2
- **CASTILLO, P ; LOZANO, R.** Realtime Stabilization and Tracking of a four rotor mini Rotorcraft. *IEEE Transactions on Control Systems Technology,* July 2004, vol. 12 (4), 510-516
- A Navigation Concept for an Indoor Micro Air Vehicle. **EICH, M ; KEMPER, M ; FATIKOW, S.** Proc. of the First European Conference on Micro Air Vehicle. Braunschweig, 2004
- Dynamic Modeling and Configuration Stabilization for an X4-Flyer. **HAMEL, T ; MAHONY, R ; LOZANO, R ; OSTROWSKY, J.** IFAC 15th Triennial World Congress. 2002
- **JOHNSON, W.** Helicopter Theory. Dover Publications Inc, 1994
- **KEMPER, M ; MERKEL, M ; FATIKOW, S.** A Rotorcraft Micro Air Vehicle for Indoor Applications. *Proc. of 11th Int. IEEE Conf. on Advanced Robotics,* 30 June 2003, 1215-1220
- **MCKERROW, P.** Modelling the Dragan-Flyer four-rotor helicopter. *Proceedings of the 2004 IEEE Conference on Robotics & Automation,* 2004
- **MISTLER, V ; BENALLEGUE, A ; M'SIRDI, N.K.** Exact linearization and noninteracting control of 4 rotors helicopter via dynamic feedback. *IEEE International Workshop on Robot and Human Interactive Communication,* 2001
- Nonlinear Control of Underactuated Mechanical Systems with Applications to Robotics and Aerospace Vehicles. **OLIFATI-SABER, R.** PhD-Thesis. Massachusetts Institute of Technology, 2001
- **SCHWARZ, H.** Systems Theory of Nonlinear Control - An Introduction. Shaker Verlag Aachen, 2000
- **TAYEBRI, A ; MCGILVRAY, S.** Attitude Stabilization of a fourrotor aerial robot. *43rd IEEE Conference on Decision and Control,* 14 December 2004

- **ABIDI, M.A ; CHANDRA, T.** A New Efficient and Direct Solution for Pose Estimation Using Quadrangular Targets: Algorithm and Evaluation. *IEEE-Transactions on Pattern Analysis and Machine Intelligence,* May 2005, vol. 17 (5), 534-538
- **ALTENBURG, U.** Ein Beitrag zur Entwicklung von Strategien zur koordinierten Steuerung autonomer mobiler Multirobotersysteme. *Dissertation-Technical University Ilmenau,* 2003
- **ALTUG, E ; OSTROWSKI, J.-P ; CAMILLA, J. T.** Quadrotor Control Using Dual Camera Visual Feedback. *IEEE-Interrtational Conference on Robotics and Automation*
- **ALTUG, E.** Vision based control of unmanned aerial vehicles with applications to an autonomous four rotor helicopter, quadrotor. *Dissertation-University of Pennsylvania,* 2003
- **ARNING, R.K ; SASSEN, S.** Flight Control of Micro Aerial Vehicles. *AIAA-Guidance, Navigation and Control Conference and Exhibit,* 16 August 2004
- **BALAN, R.** An Extension of Barbashin-Krasovski-LaSalle Theorem to a Class of Nonautonomous Systems. Princeton University, 1995
- **BARTOLINI, G ; PYDYNOWSKI, P.** An improved, chattering free, VSC: scheme for uncertain dynamics systems. *IEEE-Transactions on Automatic Control,* 1996, vol. 41 (8
- Volumenmikromechanische Inertialsensoren. **BEISSNER, S.** Dissertation-Technical University of Braunschweig. Institut for Micro System Technology, 2004
- Modellierung und Simulation eines mikromechanischen Drehratensensors. **BILLEP, D.** Dissertation Technical University of Chemnitz. 2000
- **BÖGE, A.** Mechanik und Festigkeitslehre. Vieweg-Uerlag Braunschweig, 1985
- **BORENSTEIN, J ; EVERETT, H.R ; FENG, L.** Sensors and Methods for Mobile Robot Positioning University of Michigan. 1996
- **BORENSTEIN, J ; KOREN, Y.** Real-time Obstacle Avoidance for Fast Mobile Robots. *IEEE-Transactions on System, Man and Cybernetics,* 1989, vol. 19, 1179-1187
- **DE BOTHEZAT G.** The general theory of blade screws including propellers, fans, helicopter screws, helicoial pumps, turbo-motors, and different kinds of helicoidal blades. *NACA-Report 29,* 1920

- **BOUABDALLAH, S ; MURRIERI, P ; SIEGWART, R.** Design and Control of an Indoor Micro Quadrotor. *IEEE-International Conference on Robotics and Automation,* 2004, 4393-4398
- **BOUABDALLAH, S ; NOTH, A ; SIEGWART, R.** PID vs LQ Techniques Applied to an Indoor Micro Quadrotor. *IEEE/RSj-Internationad Conference in Intelligent Robots and Systems,* 28 September 2004
- **BOUABDALLAH, S ; SIEGWART, R.** Towards Autonomous Indoor VTOL. *Springer Science and Business Media,* March 2005, vol. 18 (2
- **BOUABDALLAH, S ; SIEGWART, R.** Backstepping and Sliding-mode Techniques Applied to an Indoor Micro Quadrotor. *IEEE-International Conference on Robotics and Automation,* April 2005
- **BOUGET, J.-Y.** *Camera Calibration Toolbox for Matlab,* 06 October 2005, http://www. vision. caltech. edu/bouguetj/calib_doc
- **BRANDT, S.** Mechanik: Eine Einführung in Experiment und Theorie. Springer-Verlag, 1996
- **BROCKHAUS R.** Flugregelung. Springer-Verlag, 2001
- **BRONSTEIN, I. N.** Taschenbuch der Mathematik. Teubner-verlag, 1991
- **BROOKNER, E.** Tracking and Kalman Filtering Made Easy. Wiley-Interscience, 1998
- **BRUHNS, O.T.** Elemente der Mechanik III. Shaker-Verlag Aachen, 2004
- **CANNY, J.** A computational approach to edge detection. *IEEE-Transactions on Pattern Analysis and Machine Intelligence,* 1986, vol. 8 (6), 679-698
- **CASTILLO, P. ; DZUL, A. ; LOZANO, R.** Real-Time Stabilization and Tracking of o Four-Rotor Mini Rotorcraft. *IEEE-Transactions on Control Systems Technology,* 2004, vol. 12 (4), 510-516
- **CHERIYAN, J ; RAVI, R.** *Approximation algorithms for network problems,* 1998, citeseer.ist.psu.edu/ cheriyan98approzimation.html
- **CHERKASSKY, B.V ; GOLDBERG, A.V ; RADZIK, T.** *Shortest Paths Algorithms: Theory and Experimental Evaluation. SODA-ACMSIAM (A Conference on Theoretical and Experimental Analysis of Discrete Algorithms)*
- **COLLINSON, R.P.G.** Introduction to Avionics Systems. Kluwer Academic Publishers, 2003
- **DELLAERT, F ; FOX, D ; BURGARD, W ; THRUN, S.** Monte Carlo Localisation for Mobile Robots. *IEEE-International Conference on Robotics and Automation,* 1998
- **DORF R.C ; BISHOP R.H.** Modern Control Systems. Pearson Education, Inc, 2005
- **EICH, M ; KEMPER, M ; FATIKOW, S.** A Navigation System Concept for an Indoor Micro Air Vehicle. *EMAV 2004-First European Micro Air Vehicle Conference and Flight Competition,* June 2004
- **FATIKOW,S et al.** Mirkorobotik II. University of Oldenburg-Lecture Notes, 2005
- **FISHER, R.B.** *CVonline - On-Line Compendium of Computer Vision,* 06 October 2005, http://homepages.inf.ed.ac.uk/rbf/CVonline
- **FISCHLER, M.A ; BOLLES, R.C.** Random sample consensus: a paradigm for model fitting with applications to image analysis and automated cartography. *Commun. ACM,* 1981, vol. 24 (6), 381-395
- **FITZGIBBON, M ; FISHER, R.B.** Direct least-squares fitting of ellipses. *IEEE-Transactions on Pattern Analysis and Machine Intelligence,* 1999, vol. 21 (5), 476-480
- **FOX, D.** Markov localization: A probabalistic framework for mobile robot localization. *Dissertation-University of Bonn,* 1998
- **FOX, D ; BURGARD, W ; THRUN, S.** Markov localization for mobile robots in dynamic environments. *Journal of Artificial Intelligence Research,* 1999, vol. 11, 391-324
- **FRANKLIN, G.F ; POWELL, J.D ; EMAMI-NAEMI, A.** Feedback Control of Dynamic Systems. Prentice Hall, 2006
- **FREMONT, V ; CHELLALI, R.** Direct Camera Calibration using two Concentric Circles from a single View. Ecole des Mines de Nantes, 2001
- **FRYER, J.G ; BROWN, D.C.** Lens distortion for close-range photogrammetrie. *Photogrammetric Engineering and Remote Sensing,* 1986, vol. 52, 51-58
- *The Intel-Cooperation: Open Source Computer Vision Library (OpenCV,* 06 October 2005, http://intel.com/research/mrl/research/opencv
- *The Intel-Cooperation: OpenCV Reference Manual,* 06 October 2005, http://intel.com/research/mrl/research/opencv
- **GLINES, C.V.** *The Flying Octopus Air Force Magazine,* 10 October 1990, vol. 73
- Digitalkameratechnologien - Eine vergleichende Betrachtung CCD kontra CMOS. **GÖHRING, D.** Diploma Thesis. Humboldt University, 2002
- **GREWAL, M.S ; WEILL, L.R ; ANDREWS, A.P.** Global Positioning Systems, Inertial Navigation, and Integration. Wiley-Interscience, 2000
- **GREWAL, M.S ; ANDREWS, A.P.** Kalman Filtering : Theory and Practice Using MATLAB. Wiley-Interscience, 2001
- **GUELLALI, M.** Fehlermodellierung von mikromechanischen Inertialsensoren für Navigationsaufgaben. *Internal Report,* 1998
- **HAMEL T. ; MAHONY R. ; LOZANO R. ; OSTROWSKI J.** Dynamic Modelling and Configuration Stabilization for an X4-Flyer. *IFAS-15th Triennial World Congress,* 2002
- **HANGOS K.M ; BOKOR, J ; SZEDERÉNYI, G.** Analysis and Control of Nonlinear Process Systems. Springer-Verlag, 2004

- **HAUCK, A.** Vision-Based Reach-To-Grasp Movements: From the Human Example to an Autonomous Robotic System. Shaker- Verlag, 2000
- **HÄRKEGÅRD, O.** Backstepping and Control Allocation with Application to Flight Control Dissertation. University of Lonköping, 2003
- **HENRICH, D ; GRAF, R.** Flächendeckende Bahnplanung in vollständig, teilweise oder nicht bekannten Umgebungen. *Reihe: Informatik Aktuell, 14. Fachgespräch Autonome Mobile Systeme (AMS'98,* 1998, 188-198
- **HOFFMANN, G ; RAJNARAYAN, D.G ; WASLANDER, S.L ; DOSTAL, D ; JANG, J.S ; TOMLIN, C.J.** The Stanford testbed of autonomous rotorcraft for multi agent control (STARMAC. *DASC 04-The 23rd Digital Avionics Systems Conference,* 24 October 2004, vol. 2
- **HOLZAPFEL, F.** Dissertation-Technical Univertity of München. 2004
- **ISIDORI A.** Nonlinear Control Systems. Springer-Verlag, 1995
- **JÄHNE, B.** Digitale Bildverarbeitung. Springer-Verlag, 2005
- **JOHNSON W.** Helicopter Theory. Dover Publications Inc, 1980
- **KALMAN, E.** A New Approach to Linear Filtering and Prediction Problems. *ASME-Transactions of the ASME-Journal of Basic Engineering,* 1960
- **KANATANI, K ; LIU, W.** 3D interpretation of conics and orthogonality. Academic Press Inc, 1993
- **KEMPER M ; FATIKOW S.** Regelungstechnik. University of Oldenburg-Lecture Notes, 2003
- **KEMPER M ; MERKEL M ; FATIKOW S.** Attitude Control System for a Rotorcraft Micro Air Vehicle for Indoor Applications. *UAVS-18th International Conference on Unmanned Air Vehicle Systems Conference,* 31 March 2003
- **KEMPER M ; MERKEL M ; FATIKOW S.** A Rotorcraft Micro Air Vehicle for Indoor Applications. *IEEE-11th International Conference on Advanced Robotics,* 03 July 2003, 1215-1220
- Entwicklung eines mikromechanischen Drehratensensors auf Basis einer schwingenden Ringstruktur. **KEMPER M.** Diploma Thesis. Technical University of Braunschweig, 2001
- Impact of Center of Gravity in Quadrotor Helicopter Controller Design. **KEMPER, M ; FATIKOW, S.** Mechatronics 2006-4th IFAC-Symposium on Mechatronic Systems. Heidelberg, 12 September 2006
- **KHALIL, H.K.** Nonlinear Systems. Prentice-Hall, 2002
- **KHATIB, O.** Real-Time Obstacle Avoidance for Manipulators and Mobile Robots. *International Journal of Robotic Research,* 1986, vol. 5 (1), 90-98

- **KIM, J.-S ; GURDJOS, P ; KWEON, I.** Geometric and algebraic constraints of projected concentric circles and their applications to camera calibration. *IEEE-Transactions on Pattern Analysis and Machine Intelligence,* 27 April 2005
- **KIM, J.-S ; KIM, H.-W ; KWEON, I.** A camera calibration method using concentric circles for vision applications. *ACCV-The 5th Asian Conference on Computer Vision,* 2005, vol. 5
- **KÖNIG, A.** Automatischer Kartenaufbau für visuelle Monte-Carlo-Selbslokalisation mobiler Serviceroboter in Baumarktumgebungen. *Diploma Thesis-Technical University of Ilmenau,* May 2002
- **KRISTIÉ, M ; FONTAINE, P ; KOKOTOVIÉ, V ; PADUANO, J.D.** Useful nonlinearities and global stabilization of bifurcations in a model jet engine surge and stall. *IEEE-Transactions on Automatic Control,* December 1998, vol. 43 (12), 1739-1745
- **LAUE, T ; RÖFER, T.** *A Behavior Architecture for Autonomous Mobile Robots Based on Potential Fields,* 2005, http://www.informatik.uni-bremen. de/kogrob/papers/rc05-potentialfields. eps
- **LAZANAS, A ; LATOMBE, J.C.** Landmark-based robot navigation. *AAAI-Tenth National Conference on Artificial Intelligence,* 1992, 816-822
- **LEAVERS, V.F.** Shape Detection in Computer Vision Using the Hough Transformation. Springer-verlag, 1992
- **LEISHMAN, J.G.** Principles of Helicopter Aerodynamics. University Press, 2002
- **LOWSON, M.V.** Aerodynamics of Aerofoils at Low Reynolds Numbers. *UAVS-14th International Conference on Unmanned Air Vehicle Systems Conference,* 12 April 1999
- Communication and Control Engineerign Series. **LOZANO, R ; BROGLIATO, B ; EGELAND, O ; MASCHKE, B.** Dissipative systems. Springer-Verlag, 2000
- Robust oerediction-based control of unstable delay systems. **LOZANO, R ; CASTILLO, P ; GARCIA, P ; DZUL, A.** IEEE-Conference on Decision and Control. Maui, December 2003
- **LUTZ H ; WENDT W.** Taschenbuch der Regelungstechnik. 2002
- **MAHN, M ; KEMPER, M.** A Behaviour-based Navigation System for an Autonomous Indoor Blimp. *Mechatronics 2006-4th IFAC-Symposium on Mechatronic Systems,* 12 September 2006
- Invarianzregelung einer Klasse unteraktuierter Systeme. **MARECZEK, J.** Dissertation-Technical University of München. 2002
- **MARQUARDT, D.W.** An algorithm for least sqares estimation of nonlinear parameters. *SIAM-Journal Soc. Indust., Appl. Math.,* 1963, vol. 11, 431-441
- Stochastic Models, Estimation and Control. **MAYBECK, P.S.** Mathematics in Science and Engineering. Academic Press Inc, 1960, vol. 1

- **MCKERROW, P.** Modelling the Draganflyer four-rotor helicopter. *IEEE-International Conference on Robotics and Automation,* 2004, 3596-3601
- **MEYERS, R.** Encyclopedia of Physical Science and Technology. Academic Press Inc, 1992, vol. 10
- Grauwertbasierte Bewegungsschätzung in monokularen Bildsequenzen unter besonderer Berücksichtigung bildspezifischer Störungen. **MECKE, R.** Dissertation-Ottovon-Guericke University of Mgdeburg. 1999
- **MICHEL, O.** Webots: Professional Mobile Robot Simulation. *ARS-Journal of Advanced Robotics Systems,* 2004, vol. 1 (1), 39-42
- **MISTLER, V ; BENALLEGUE, A ; M'SIRDI, N.K.** Exact linearization and noninteracting control of a 4 rotors helicopter via dynamic feedback. *IEEE-International Workshop on Robot and Human Interactive Communication,* 2001
- **MUELLER, T.J ; LAURIER, J.D.** An overview of Micro Air Vehicle Aerodynamics, Fixed and Flapping Wing Aerodynamics for Micro Air Vehicle Applications. *AIAA Progress in Astronautics and Aeronautics,* 2001, vol. 195
- **MUDIGONDO, P.K ; JAVAHAR, C.V ; NARAYANAN, P.J.** Geometric Structure. *ICVIP Computation from Conics,* 2004
- **NICOUD, J.D ; ZUFFEREY, J.D.** Toward Indoor Flying. *IEEE/RSJ Proc. of International Conference on Intelligent Robotis and Systems,* October 2002
- **POUNDS, P ; MAHONY, R ; HYNES, P ; ROBERTS, J.** Design of a Four-Rotor Aerial Robot. *ARAA Proc. of the Australasian Conference on Robotics and Automation,* 27 November 2002
- Nonlinear Control of Underactuated Mechanical Systems with Apllication to Robotics and Aerospace Vehicles. **OLFATI-SABER, R.** Dissertation-Massachusettes Institute of Technology. Department of Electrical Engineering and Computer Science, 2001
- **VAN DER SCHAFT, A.J.** The Mathematics on Systems and Control, From Intelligent Control to Behavioral Systems. 1999
- **SCHUBERT, R.** *Skript zur Vorlesung Angewandte Medizinische Bildverarbeitung,* 14 August 2005, http://imwv. umit. at/Lehrveranstaltungen/AMBbsc/WS2003/Skripten/Einheit05. eps
- **HOWELLS, M.** Unmanned Vehicles Handbook 2006. The Shephard Press Berkshire, 2006
- **ORTEGA, R ; LORIA, A ; NICKLASSON, P.J ; SIRA-RAMIREZ, H.** Passivity-based Control of Euler-Lagrange Systems. Springer- Verlag, 1998
- **OTTL D.** Mathematische Methoden des Ingenieurwesens. Technical University of Braunschweig-Lecture Notes, 1998
- **PATEL, A.J.** *Shortest Paths,* 2004, www-cs-students.stanford.edu/amitp/gameprog.html
- **PETTIE, S ; RAMACHANDRAN, V ; SRIDHAR, S.** Experimental evaluation of a new shortest path algorithm. *ALENEX'02,* 2002
- *Power-Radio-Solution:: Easy Radio ER-900TRS Funkmodul,* 06 October 2006, http://www.lprs.co.uk
- **PULS, T.** Validierung komplementärer Sensorsysteme für die autonome In-nenraumnavigation von Kleinstflugzeugen mit Anwendung auf einen 4-Rotor-Helikopter. Diploma Thesis- University of Oldenburg, May 2005
- **ROUMELIOTIS, S ; SUKHATME, G ; BEKEY, G.** *Circumventing dynamic modeling: Evaluation of the error-state kalman filter applied to mobile robot localisation,* 1999, http://citeseer.ist.psu.edu/roumeliotis99circumventing.html
- **SANDHAUS, P.** *Entwicklung eines komplementären, kameraunterstützten Sensorsystems für Lageregelungsaufgaben von Kleinstflugzeugen,* October 2005
- **SCHÄNZER G.** Flugführung I. T U Braunschweig-Lecture Notes, 1993
- **SCHÄNZER G.** Flugführung II. T U Braunschweig-Lecture Notes, 1994
- **SCHÖNING, U.** Logik für Informatiker. Springer-Verlag, 2000
- Mobile Robot Localization Based On Omnicamera. **SIEMIATKOWSKA, B ; CHOJECKI, R.** IAV2004-5th IFAC/EURON Symposium on Intelligent Autonomous Vehicles. 2004
- **SCHULZ W ; LUDWIG. R.** Flugmechanik. LN 9300. Normstelle Luftfahrt, 1970
- Terms and Symbols for Flight Dynamics, Part I-VI. **SCHULZ W ; LUDWIG. R.** ISO 1151. 1976
- **SCHWARZ H.** Systems Theory of Nonlinear Control. Shaker-Verlag, 2000
- **SLOMKA, F.** Echtzeitbetriebssysteme. University of Oldenburg-Lecture Notes, 2004
- **SLOTLINE, J.J ; LI, W.** Applied Nonlinear Control. Prentice-Hall, 1991
- **SONNEBORN, W.** Vision 2025 for Rotorcraft. *AIAA/ICAS International Air and Space Symposium and Exposition,* 14 July 2003
- **SONTAG E.D.** On the Input-to-State Stability Property. *European J. of Control,* 1995, vol. 1, 24-36
- **SONTAG E.D ; WANG, Y.** On Characterizations of the input-to-state stability property, Systems and Control Letters, vol.24: pp. 351-359. *Systems and Control Letters,* 1995, vol. 24, 351-359
- **SOMMER S.** Regelung linearer parameterveränderlicher (LPV-) Systeme mit Hilfe klassischer Regelungsstrukturen und Anwendung auf nichtlineare Regelstrecken. Shaker- Verlag, 2003
- *Robot Electronics: SRF08 Ultra sonic range finder,* 2005, http://www. robot-electronics.co.uk/htm/ srf08tech.shtml

- **STEIL, J.** Skript zur Vorlesung : Robotik I. University of Bielefeld-Lecture Notes, 2003
- **SUZUKI, S ; ABE, K.** Topological Structural Analysis of Digitized Binary Images by Border Following. *CV-GIP,* 1985, vol. 30 (1), 32-46
- **TAYEBI, A ; MCGILVRAY, S.** Attitude stabilization of a four-rotor aerial robot. *IEEE-43rd International Conference on Decision and Control,* 14 December 2001
- **UNBEHAUEN H.** Regelungstechnik II. Vieweg-Verlag, 2000
- Verein Deutscher Ingenieure VDI-Richtlinie 3633: Simulation von Logistik, Materialflu''s und Produktionssystemen - Begriffsdefinitionen. VDI-Verein Deutscher Ingenieure, 1996
- **VRATISLAVSKY, A.** *Reaktive Verhaltenssteuerung,* 2000, http://page.mi.fu-berlin.de/vratisla/Robotik/ReaktivesVerhalten.htm
- **WELCH, G ; BISHOP, G.** An Introduction to the Kalman Filter. *SIGGRAPG,* 2001
- Stabilizing a Four-Rotor-Helicopter using Computer Vision. **WENDEL, C ; SCHLAILE, J ; TROMMER, G. F.** EMAV 2004-First European Micro Air Vehicle Conference and Flight Competition. Braunschweig, June 2004
- **WÜSTING, S.** Hochintegriertes triaxiales Beschleunigungssensorssystem. Dissertation-University of Karlsruhe, 1997
- **WYETH, G.** *An Autonomous Blimp,* 1998
- **YUEN, H.K. ; ILLINGWORTH, J ; KITTLER, J.** Detecting partially occluded ellipses using the Hough transformation. *Image Vision Comput.,* 1989, vol. 7 (1), 31-37
- **YUN, W.** A Surface Micromachined Accelerometer with Integrated CMOS Detection Circuitry. Dissertation-University of California at Berkeley, 1992
- **ZHANG, H ; OSTROWSKI, J.** *Visual servoing with dynamics: Control of an unmanned blimp,* 1998
- **ZHANG, Z.** A Flexible new Technique for Camera Calibration. *IEEE-Transactions on Pattern Analysis and Machine Intelligence,* 2000, vol. 22 (11
- *ZTV-Electronics: Funkkamera ZT-811T,* 06 October 2002, http://www.ztvelectronics.com